(19) Europäisches Patentamt / European Patent Office / Office européen des brevets

(11) **EP 4 505 305 B1**

(12) **EUROPEAN PATENT SPECIFICATION**

(45) Date of publication and mention
of the grant of the patent:
**18.02.2026 Bulletin 2026/08**

(21) Application number: **23716288.8**

(22) Date of filing: **30.03.2023**

(51) International Patent Classification (IPC):
**G06F 11/3668** (2025.01)    **G06F 30/15** (2020.01)
**G06F 30/27** (2020.01)    **G06F 111/08** (2020.01)
**G06N 3/006** (2023.01)    **G06N 7/01** (2023.01)
**G06N 20/10** (2019.01)    **B25J 9/16** (2006.01)

(52) Cooperative Patent Classification (CPC):
**G06F 11/3684; B25J 9/1671; G06F 11/3688;**
**G06F 11/3696; G06F 30/15; G06F 30/27;**
**G06N 3/006; G06N 7/01; G06N 20/10;**
G05B 2219/40322; G06F 11/3692; G06F 2111/08

(86) International application number:
**PCT/EP2023/058403**

(87) International publication number:
**WO 2023/187117 (05.10.2023 Gazette 2023/40)**

(54) **SIMULATION-BASED TESTING FOR ROBOTIC SYSTEMS**

SIMULATIONSBASIERTE PRÜFUNG FÜR ROBOTERSYSTEME

TEST BASÉ SUR UNE SIMULATION POUR SYSTÈMES ROBOTIQUES

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **01.04.2022 GB 202204786**
**21.09.2022 GB 202213781**

(43) Date of publication of application:
**12.02.2025 Bulletin 2025/07**

(73) Proprietor: **Five AI Limited**
**Cambridge CB1 2JH (GB)**

(72) Inventor: **SADEGHI, Jonathan**
**Bristol BS1 6QS (GB)**

(74) Representative: **Page White Farrer**
**Bedford House**
**21a John Street**
**London WC1N 2BF (GB)**

(56) References cited:
**WO-A1-2021/245201    US-A1- 2019 179 738**

• **GANGOPADHYAY BRITI ET AL: "Identification of**
**Test Cases for Automated Driving Systems**
**Using Bayesian Optimization", 2019 IEEE**
**INTELLIGENT TRANSPORTATION SYSTEMS**
**CONFERENCE (ITSC), IEEE, 27 October 2019**
**(2019-10-27), pages 1961 - 1967, XP033668428,**
**DOI: 10.1109/ITSC.2019.8917103**

**Description**

TECHNICAL FIELD

The present disclosure pertains to methods for evaluating the performance of trajectory planners and other robotic systems in simulated scenarios, and computer programs and systems for implementing the same. Trajectory planners are capable of autonomously planning ego trajectories for fully/semi-autonomous vehicles or other mobile robots. Example applications include ADS (Autonomous Driving System) and ADAS (Advanced Driver Assist System) performance testing.

BACKGROUND

There have been major and rapid developments in the field of autonomous vehicles. An autonomous vehicle (AV) is a vehicle which is equipped with sensors and control systems which enable it to operate without a human controlling its behavior. An autonomous vehicle is equipped with sensors which enable it to perceive its physical environment, such sensors including for example cameras, radar and lidar. Autonomous vehicles are equipped with suitably programmed computers which are capable of processing data received from the sensors and making safe and predictable decisions based on the context which has been perceived by the sensors. An autonomous vehicle may be fully autonomous (in that it is designed to operate with no human supervision or intervention, at least in certain circumstances) or semi-autonomous. Semi-autonomous systems require varying levels of human oversight and intervention, such systems including Advanced Driver Assist Systems and level three Autonomous Driving Systems. There are different facets to testing the behavior of the sensors and control systems aboard a particular autonomous vehicle, or a type of autonomous vehicle. Other mobile robots are being developed, for example for carrying freight supplies in internal and external industrial zones. Such mobile robots would have no people on board and belong to a class of mobile robot termed UAV (unmanned autonomous vehicle). Autonomous air mobile robots (drones) are also being developed.

In autonomous driving, the importance of guaranteed safety has been recognized. Guaranteed safety does not necessarily imply zero accidents, but rather means guaranteeing that some minimum level of safety is met in defined circumstances. It is generally assumed this minimum level of safety must significantly exceed that of human drivers for autonomous driving to be viable. Thus, the testing requirements for autonomous vehicles are especially challenging.

Sensor processing may be evaluated in real-world physical facilities. Similarly, the control systems for autonomous vehicles may be tested in the physical world, for example by repeatedly driving known test routes, or by driving routes with a human on-board to manage unpredictable or unknown context. Physical world testing will remain an important factor in the testing of autonomous vehicles capability to make safe and predictable decisions. However, physical world testing is expensive and time-consuming. Increasingly, there is more reliance placed on testing using simulated environments.

Simulation-based testing comes with its own challenges. A high-fidelity simulation requires significant computational resources. As the safety of autonomous systems increases, the number of required simulation instances also increases. For example, human driving is estimated to cause of the order $10^{-6}$ severe accidents per hour. It has been suggested that autonomous driving systems will need to reduce this by at least three orders of magnitude to be accepted in society, implying a minimum safety level of the order of $10^{-9}$ severe accidents per hour needs to be guaranteed. For an autonomous driving system operating at this level, a 'naïve' simulation strategy would therefore require of the order of $10^{9}$ simulated driving hours on average to encounter a single severe accident. There is therefore a need to greatly increase the efficiency of simulation-based testing.

For mobile robot testing, a test scenario includes a simulated mobile robot (the ego agent) and some physical context that the ego agent is required to navigate. The physical context of a driving scenario generally includes a road layout and may include one or more 'challenger' objects (static objects and/or dynamic agents, such as vehicles, pedestrians, cyclists, animals etc.). An instance of the rest scenario is realized in a simulation environment, with the robotic system under testing in control of the ego agent. The performance of the robot system may be assessed in terms of the behavior of the ego agent in the scenario instance and/or in terms of decisions taken internally within the robotic system over the course of the simulation. The robotic system has knowledge of its location at any instant of time, understands its context, and is required to make safe and predictable decisions about how to navigate its environment to reach a pre-programmed destination.

Simulation-based testing may utilize parameterized scenarios, where different instances (or 'runs') of the scenario may be realized in a simulation environment with different parameter combinations. It is useful to conceptualize a set of parameter values as a point in a parameter space of the scenario. A scenario is 'run' (instantiated) at a given point in the parameter space when an instance of the scenario is realized in a simulation environment with the corresponding set of parameter values.

One approach is based on random sampling of points in the scenario's parameter space, for example using a Monte Carlos search strategy. However, this suffers from the drawbacks noted above. 'Directed testing' or 'directed exploration' approaches are more targeted, and use the outcomes of previous simulation to guide a subsequent search of the parameter space, with the aim of finding more salient parameter combinations with fewer simulation instances. The search may commence with an initial set of points in the parameter space (e.g. uniformly spaced, or selected via Monte Carlo sampling) and the scenario is instantiated at each of those points. The performance of the robotic system is assessed in each scenario, and the results are used to guide the selection of subsequent points in the parameter space.

Directed testing approaches use some defined concept of failure, with the extent of 'failure' quantified via an appropriate numerical metric. For example, in a driving context, a simple failure metric might be forward distance (longitudinal distance between the ego agent and a forward vehicle ahead of the ego agent). A failure event occurs when the forward distance falls below some safety threshold, with the severity of the failure increasing as the forward distance decreases. Most directed exploration approaches target the search of the parameter space on the 'worst' (most severe) failure instances. A directed testing method uses the performance analysis from previous scenario instances to predict the system's performance at other points in the parameter space, and uses those predictions to guide the selection of subsequent points. In the preceding example, the directed search would attempt to guide the search to region(s) of the parameter space where the forward distance is predicted to be minimized (such that failure on the forward distance metric is maximized).

Reference is made to WO2021/245201 which discloses a method of evaluating the performance of a full or partial autonomous vehicle (AV) stack in simulation.

Reference is made to Gangopadhyay Briti et al., 'Identification of Test Cases for Automated Driving Systems Using Bayesian Optimization' which proposes a test case identification technique using Bayesian Optimization. For a given test scenario, the proposed method learns parameter values by observing the system's output. The identified values create test cases that drive the system to violate its safe boundaries.

Reference is made to US2019/179738 which discloses a method for simulation testing an autonomy software. The method may include receiving, at processing circuitry, mission parameters indicative of a test mission, environmental parameters, and vehicle parameters. The method may further include performing, by the processing circuitry, an adaptive search using a surrogate model of the autonomy software under test to selectively generate test scenarios for simulation, and clustering the plurality of test scenarios based on performance score metric values to determine performance boundaries for the autonomy software under test.

SUMMARY

A core aim herein is one of providing improved directed testing of robotic systems, in the sense of maximizing the saliency of the results for a given number of simulated runs (or, equivalently, minimizing the number of runs that are required to achieve a given level of saliency).

The invention is defined by the features laid down in the independent claims 1, 11, 12 and 13. Further enhancements are provided by the dependent claims.

A directed search method is applied to a parameter space of a scenario for testing the performance of a robotic system in simulation. The directed search method is applied based on at least one performance evaluation rule that returns a performance score that can be numerical or non-numerical. A hierarchical score prediction model is constructed as follows. A score classification model is trained to probabilistically predict whether a point in the parameter space will result in a numerical or non-numerical outcome. A score regression model is trained to probabilistically predict a performance score for a given point, given that the score is numerical. The score classification and regression models are used to guide a directed search of the parameter space towards the most salient instances of the scenario.

A first aspect herein is a computer-implemented method of testing, in simulation, performance of a robotic system in control of an ego agent of a test scenario, the method comprising: determining a first set of points in a parameter space of the test scenario, each point being a set of one or more parameter values for the test scenario; based the first set of points, generating in a simulation environment multiple first instances of the test scenario with the robotic system in control of the ego agent; assigning to each point of the first set at least one performance score based on at least one predetermined performance evaluation rule, thereby generating a training set of points and their assigned performance scores, wherein each performance score is numerical or non-numerical, wherein a numerical performance score quantifies the performance of the robotic system with respect to the predetermined performance evaluation rule, and a non-numerical performance score denotes inapplicability of the predetermined performance evaluation rule; using the training set to train a score classification model for computing a probability, $p(\overline{N}|x)$, that the given point $x$ would be assigned a performance score that is numerical; using a subset of the training set to train a score regression model for determining a probability distribution, $p(y|x, y \neq \mathrm{nan})$, over possible performance scores $y$ for a given point $x$ given that the performance score $y$ is numerical, the subset of the training set including only points that have been assigned numerical performance scores; selecting one or more second points in the parameter space based on a misclassification probability acquisition function defined as:

$$\min(p(F|x,\overline{N})p(\overline{N}|x), 1 - p(F|x,\overline{N})p(\overline{N}|x))_,$$

wherein $p(F|x, \overline{N})$ is a probability, computed from $p(y|x, y \neq$ nan), that a given point $x$ would be assigned a performance score that satisfies a failure condition given that the performance score is numerical; based the one or more second points in the parameter space, generating in a simulation environment one or more second instances of the test scenario with the robotic system in control of the ego agent; and providing one or more outputs for evaluating performance of the robotic system in the one or more second instances based on the at least one predetermined performance evaluation rule.

According to a second aspect herein, a computer-implemented method of testing, in simulation, performance of a robotic system in control of an ego agent of a test scenario comprises: determining a first set of points in a parameter space of the test scenario, each point being a set of one or more parameter values for the test scenario; based the first set of points, generating in a simulation environment multiple first instances of the test scenario with the robotic system in control of the ego agent; assigning to each point of the first set at least one performance score based on at least one predetermined performance evaluation rule, thereby generating a training set of points and their assigned performance scores, wherein each performance score is numerical nor non-numerical, wherein a numerical performance score quantifies the performance of the robotic system with respect to the predetermined performance evaluation rule, and a non-numerical performance score denotes inapplicability of the predetermined performance evaluation rule; using the training set to train a score classification model for computing a probability that the given point would be assigned a performance score that is numerical; using a subset of the training set to train a score regression model for determining a probability distribution over possible performance scores for a given point given that the performance score is numerical, the subset of the training set including only points that have been assigned numerical performance scores; selecting one or more second points in the parameter space based on misclassification probability acquisition function denoting a probability of misclassification, wherein for a point such that (i) the score classification model predicts a numerical performance score and (ii) the score regression model predicts a performance score that satisfied a failure condition, a misclassification occurs for any other outcome, and for any other predicted outcome, a misclassification only occurs for an outcome with a performance score that is (i) numerical and (ii) satisfies the failure condition; based the one or more second points in the parameter space, generating in a simulation environment one or more second instances of the test scenario with the robotic system in control of the ego agent; and providing one or more outputs for evaluating performance of the robotic system in the one or more second instances based on the at least one predetermined performance evaluation rule.

In embodiments of the first or second aspect, the one or more outputs may be rendered in a graphical user interface.

The one or more outputs may comprise one or more performance scores assigned to each second point for the at least one performance evaluation rule.

The method may comprise updating the score classicisation model based on the one or more second points and the one or more performance scores assigned thereto, wherein the score regression model is updated based on any numerical performance scores of the one or more performance scores.

The method may comprise selecting one or more third points in the parameter space based on an updated misclassification probability acquisition function defined by the updated score classification model and score regression model; based the one or more third points in the parameter space, generating in a simulation environment one or more third instances of the test scenario with the robotic system in control of the ego agent; and providing one or more second outputs for evaluating performance of the robotic system in the one or more third instances based on the at least one predetermined performance evaluation rule.

The one or more second outputs may comprise one or more performance scores assigned to the one or more third points, and the method may be repeated iteratively until the score classification and score regression models satisfy a termination condition, or a predetermined number of iterations is reached.

The score classification and/or score regression models may be Gaussian (e.g. Gaussian process models).

The score regression model may be Gaussian with mean $g_\mu(x)$ and standard deviation $g_\sigma(x)$ at a given point $x$ in the parameter space, and with

$$p(F|x, \bar{N}) = \Phi\left(\frac{-g_\mu(x)}{g_\sigma(x)}\right)_,$$

where $\Phi$ is the standard normal distribution.

The robotic system may comprise a trajectory planner for a mobile robot.

The method may comprise using the score classification model and the score regression model to identify and mitigate an issue with the robotic system.

**EP 4 505 305 B1**

Further aspects herein provide a computer system configured to implement the method of any of the above aspects or embodiments, and computer program code configured to program the computer system implement the same.

BRIEF DESCRIPTION OF FIGURES

Particular embodiments will now be described, by way of example only, with reference to the following schematic figures, in which:

Figure 1A shows a schematic function block diagram of an autonomous vehicle stack;

Figure 1B shows a schematic overview of an autonomous vehicle testing paradigm;

Figure 1C shows a schematic block diagram of a scenario extraction pipeline;

Figure 2 shows a schematic block diagram of a testing pipeline;

Figure 2A shows further details of a possible implementation of the testing pipeline;

Figure 3A schematically illustrates certain geometric principals of a "safe distance" rule that applies to a lane follow context in autonomous vehicle testing;

Figure 3B shows a computational graph for a safe distance robustness score;

Figure 4A shows a schematic block diagram of a system in which a scoring function is used to generate a training set for a score predictor;

Figure 4B shows a flowchart for a first directed testing method;

Figure 4C shows a probabilistic score predictor;

Figure 4D shows a flowchart for a second directed testing method with multiple performance evaluation rules;

Figure 4E schematically illustrates the selection of a point in a scenario parameter space based on an acquisition function;

Figures 5A-5C illustrate how overall robustness scores may be assigned to different instances of a scenario with different overall outcomes;

Figure 6 shows a two-dimensional parameter space divided into pass and fail regions;

Figure 7 shows an alternative robustness scoring methodology that extends to non-numerical robustness scores;

Figure 8 shows a two-dimensional parameter space divided into pass, fail regions and "Not a Number" (NaN) regions;

Figure 9A shows a hierarchical score predictor comprising a probabilistic classification model and a probabilistic regression model; and

Figure 9B shows a flow chart for a third directed testing method applied with NaN-based robustness scoring.

Figure 10 shows experimental results demonstrating convergence of average precision and maximum predicted misclassification probability for fitted GPs for an illustrative 'toy' function as in addition to an actual autonomous (AD) scenario.

Figure 11 shows plotted models for the toy function and AD scenario.

Figure 12 shows an AD scenario, in which an ego vehicle merges into a road in a lefthand traffic system in the presence of another ('adversarial') agent.

Figure 13 shows a plot of system performance for a T-junction merging experiment.

Figure 14 shows a plot of system performance for a toy function experiment.

Figure 15 shows experimental results demonstrating convergence of failure probability, average precision, maximum predicted misclassification probability and $F_1$ score for fitted Gaussian processes for the toy function

Figure 16 shows convergence of failure probability, average precision, maximum predicted misclassification probability and $F_1$ score for fitted Gaussian processes for the autonomous driving scenario.

Figure 17 shows convergence of failure probability, average precision, maximum predicted misclassification probability and $F_1$ score for fitted masked Gaussian processes for different hyperparameter ($\alpha$) values for the simple toy function.

Figure 18 shows convergence of failure probability, average precision, maximum predicted misclassification probability and $F_1$ score for fitted masked Gaussian processes for different $\alpha$ for the autonomous driving experiment.

## DETAILED DESCRIPTION

In engineering design, it is desirable to estimate the probability that the performance of a system is satisfactory under uncertain or variable operating circumstances. This is especially important in safety critical application such as autonomous driving, where finding rare but catastrophic failures has been identified as an important challenge [9]. Powerful active learning approaches based on Gaussian processes (GP) have been proposed as a solution to this problem [4, 22, 6, 7, 14, 3] and achieve state of the art performance. However, such approaches cannot be applied to problems where the performance of the system may be *undefined* ('not a number' or 'NaN') under certain specific operating circumstances, a situation which often occurs in the autonomous vehicle domain (for a motivating example see Annex A). Moreover, naively masking away regions where the performance of the system is undefined introduces discontinuities and leads to poor performance since Gaussian processes with stationary kernels are not well suited to the regression of discontinuous targets [15]. In the described embodiments, GP methods are extended from first principles to the case where the performance function can be undefined by using a hierarchical model (termed hGP herein) for the system performance, where undefined performance is classified before the performance is regressed.

A system is described whose performance is described by a function, $g : \mathcal{X} \mapsto \mathbb{R} \cup \{\mathrm{NaN}\}$ (the performance function or rule function), where $x \in \mathcal{X} \subseteq \mathbb{R}^k$ are random environmental variables affecting the system, $g(x) < 0$ denotes an undesirable event (a failure), and $g(x)$ = NaN is an event of unspecified performance. An undefined value does not indicate that an undesirable event has occurred for a particular $x$, and therefore it is desirable to classify these $x$ differently to the failure events. The rate of failures is quantified using a probabilistic threshold robustness (PTR) of the system, which is defined as

$$p_f = \int_{\mathcal{X}} \mathbb{1}\left[g(\boldsymbol{x}) < 0 \cap g(\boldsymbol{x}) \neq \mathrm{NaN}\right] p(\boldsymbol{x})d\boldsymbol{x,} \tag{1}$$

where $\mathbb{1}$ is an indicator function and $p(x)$ is a probability density (mass) function of $x$ [2]. Eq. (1) represents the probability that the system is in the failure state, while disregarding 'uninteresting' cases where the performance is undefined. Estimating $p_f$ in Eqn. 1 using a vanilla Monte Carlo simulation can be computationally expensive since identifying a failure rate lower than $\varepsilon$ will typically require at least $1/\varepsilon$ tests [20]. In order to reduce the required number of samples, an AK-MCS algorithm is used, a simple active learning technique based on Gaussian processes which was shown to provide an extremely efficient evaluation of the PTR measure for previously studied problems [4]. An extension of the AK-MCS algorithm to partially undefined performance functions is described below.

The applicant has performed experiments comparing the described methodology to several naive baselines on problems for which the results are known analytically. The results demonstrate that the present approach produces a more accurate estimation of $p_f$ and also that the surrogate model is a more accurate representation of the true performance function.

The AK-MCS active learning algorithm tis modified o estimate the PTR for partially defined performance functions by using a different Gaussian Process and acquisition function to Echard et al. [4]. In contrast to [4], a hierarchical Gaussian process model of the performance function is used, comprising separate regression and classification Gaussian processes. A modified acquisition function minimises catastrophic event classification error to yield an optimal model of the performance function. Otherwise, the described algorithm proceeds in the same way as the AK-MCS algorithm [14, 4], with an initial training set chosen to train a Gaussian process, and subsequent evaluations of the performance function, $g$, chosen iteratively by maximising a function of the Gaussian process known as the 'acquisition function', which in turn are used to retrain the Gaussian process. The algorithm terminates when a coefficient of variation (CoV) of the failure probability computed using the Gaussian process is below some threshold, and the predicted misclassification probability is also below some threshold. This algorithm is summarized in Algorithm 1.

---

**Algorithm 1:** Hierarchical Gaussian Process PTR quadrature

---

**Input:** GP prior $\mathcal{GP}(0, k)$, termination threshold $\eta$, model $g(x)$

Define proposal set $\mathcal{S}$: sample $n_{mc}$ points from $p(x_*)$.

Define initial design of experiments: sample $n_E$ points uniformly from $\mathcal{S}$ and evaluate with model $g(x)$ to define $\hat{\mathcal{S}} = \{(x_i, y_i)|i = 1, ..., n_E\}$

**while** $CoV > 0.1$ **do**

    **while** $\max_x p_{\text{misclassification}}(x) > \eta$ **do**

        Train GP on $\hat{\mathcal{S}}$

        Compute $\mu(x)$, $\sigma(x)$, $p_{\text{nan}}(x)$ from GP for all $x \in \mathcal{S}$.

        Choose most likely misclassified $x$: $x_* = \arg\max_{x \in \mathcal{S}} p_{\text{misclassification}}(x)$

        Observe $y_* = g(x_*)$ and Add $(x_*, y_*)$ to $\hat{\mathcal{S}}$

    **end while**

    Estimate $p_f$ using Monte Carlo simulation with Gaussian Process on $\mathcal{S}$ using Eqn. 2

    Calculate $CoV = \sqrt{\frac{(1-p_f)}{p_f|\mathcal{S}|}}$

    Sample $n_{mc}$ points from $p(x_*)$ and evaluate with model $g(x)$ to add to $\mathcal{S}$

**end while**

**Output:** Fitted GP and $p_f$ computed using Eqn. 2.

---

In summary, denoting by y a predicted performance for a test input $x^* \in X$ where $y \in \mathbb{R} \cup \text{NaN}$, and denoting a dataset of training examples as $\mathcal{D} = \{(x_i, y_i)|i = 1, ..., n\}$. A predictive distribution is modelled $p(y_*|x_*, \mathcal{D})$ using Gaussian processes. This predictive distribution can be rewritten as

$$p(y_*|x_*, \mathcal{D}) = \begin{cases} p(y_*|x_*, \mathcal{D}, y_* \neq \text{NaN})p(y_* \neq \text{NaN}|x_*, \mathcal{D}) & \text{if } y_* \neq \text{NaN}, \\ p(y_* = \text{NaN}|x_*, \mathcal{D}) & \text{if } y_* = \text{NaN}, \end{cases}$$

where $p(y_*|x_*, \mathcal{D}, y_* \neq \text{NaN})$ is a predicted regression distribution for $y$ at the test input $x$ given that $y$ is defined, and $p(y_* = \text{NaN}|x_*, \mathcal{D})$ is a predicted probability that y is undefined for $x$. These distributions are modelled with separate GPs; for $p(y_*|x_*, \mathcal{D}, y_* \neq \text{NaN})$ GP regression is used, and for $p(y_* = \text{NaN}|x_*, \mathcal{D})$ GP classification is used. A conditional prediction of the failure event can easily be calculated as $p(y_* < 0, y_* \neq \text{NaN}|x_*, \mathcal{D})$, which can be used to define an acquisition function, $p_{\text{misclassification}}(x)$, based on probability of misclassification of $y_* < 0 \cap y_* \neq \text{NaN}$, as in Echard et al. [4]. The description below, together with Annex C provides further details of how both of the predictive distributions are modelled. Once these are defined the failure probability can be computed using the GPs as

$$p_f \approx \int_X \mathbb{1}[p(y_* < 0, y_* \neq \text{NaN}|x_*, \mathcal{D}) > 0.5]p(x_*)dx_*. \tag{2}$$

Termination criteria for the AK-MCS algorithm determine an error in the failure probability computed using the Gaussian process in Eqn. 2, in addition to bounding an error of the hierarchical Gaussian process model. This ensures that the model is sufficiently accurate to be used by engineers to make predictions about the behaviour of the system.

The described embodiments consider performance testing of a robotic system in the form of an autonomous vehicle stack, or some component (or components) thereof, in parameterized driving scenarios. As will be appreciated, the described techniques are applicable to other forms of robotic systems when tested in simulation based on one or more parameterized test scenarios.

As outlined above, in the field of robotics, directed exploration methods have generally targeted 'worst-case' failures. Such methods can be highly effective in quickly locating failure cases (or, more precisely, in reducing the number of non-salient points in the scenario space that need to be considered before a failure case is found. A non-salient point in this context generally means a set of parameter values that do not result in a failure event for the robotic system under testing). However, there are significant drawbacks to this approach. In certain contexts, the worst-case failure is not necessarily the most interesting or salient. For example, in a driving context, there may be certain variations of a scenario in which a collision or other failure event is unavoidable (generally this implies, at the very least, a set of circumstances such that no human driver could reasonably be expected to avoid a collision). A directed exploration approach targeting worst-case failure can easily guide the search to 'uninteresting' failure cases. For example, in a cut-in scenario, such a method could, for example, guide the search to a set of parameter values at which another agent cuts in front of the ego agent with virtually no headway, and immediately decelerates. An expensive simulation to verify that the system under testing fails in those circumstances may be entirely redundant. On the other hand, if the system under testing 'just' fails in circumstances where it ought to have comfortably passed, that may be far more indicative of a genuine issue in the robotic system that needs to be identified and mitigated.

In the described embodiments, an alternative directed exploration approach is considered. Rather than identifying worst-case failures, the aim is to map out one or more "performance category boundaries" in a scenario's parameter space with sufficient confidence as efficiently as possible (in terms of the number of simulated instances of the scenario that need to be realized).

With binary {PASS, FAIL} performance categories, this equates to estimating the boundary (or boundaries) between pass/fail regions of the scenario's parameter space. Points either side of such a boundary correspond to parameter combinations (variations of the scenario) where the robotic system 'just' passes or 'just' fails on some predetermined numerical performance metric (or metrics), referred to herein as rules. One form of rule returns a floating point (or other numerical) value (robustness score) at every time step in a scenario, and a pass/fail category is assigned by applying a pass/fail threshold to the robustness score. The result is a time-sequence of pass/fail results over the course of the scenario. These results can be aggregated to provide an overall pass/fail result for a given scenario instance and a given rule (e.g. with an overall fail result if and only if the rule is failed at any point in the scenario). The following examples consider robustness scores that are normalized to a fixed range and failure threshold. The range is chosen as [-1, 1] with the failure threshold at zero. This is a convent design choice that makes the scores readily interpretable, but it will be appreciated that robustness scores can be represented in other ways.

Herein, a 'performance indicator' can be a performance class (e.g. PASS, FAIL or "NOT APPLICABLE" - see below), or a robustness score that indicates a performance class (e.g. a numerical score above a threshold might indicate PASS, and FAIL below the threshold).

However, the described embodiments go beyond binary categorization, and introduce a third "INACTIVE" performance category. As described in further detail below, this third performance category is introduced to accommodate rules that are not guaranteed to return a floating point robustness score at every time step, but which might return a 'Not a Number' (NaN) at a given time step. In formal terms, a NaN means a non-numerical output of a numerical function. NaNs have been used, for example, to handle values that are undefined in the mathematical sense (such as the logarithm of a negative number). In the present context, NaN's are introduced as a deliberate design choice, to better reflect situations where a rule is simply not applicable. For example, a 'safe distance' rule based on longitudinal distance between an ego agent and a forward vehicle does not apply in the case that the ego agent is waiting at a T-junction to turn left or right.

Constructing the rules with NaN outputs makes the scores more informative. However, the benefits go further than this. As described in detail below, NaN outputs are incorporated into the directed search process using separate prediction models for Nan/not-NaN classification and numerical score prediction. This formulation is not only accommodating of non-numerical robustness outputs, but also mitigates issues that could prevent the directed search from converging as intended (this is explained in detail below).

The described directed testing method are incorporated in a testing pipeline to facilitate rules-based testing of mobile robot stacks simulated scenarios. The testing pipeline can also be applied to real scenarios, in combination with simulation-based testing. Agent (actor) behaviour in real or simulated scenarios is evaluated by a test oracle based on defined performance evaluation rules. Such rules may evaluate different facets of safety. For example, a safety rule set may be defined to assess the performance of the stack against a particular safety standard, regulation or safety model (such as RSS), or bespoke rule sets may be defined for testing any aspect of performance. The testing pipeline is not limited in its application to safety, and can be used to test any aspects of performance, such as comfort or progress towards some defined goal. A rule editor allows performance evaluation rules to be defined or modified and passed to the test oracle.

A "full" stack typically involves everything from processing and interpretation of low-level sensor data (perception), feeding into primary higher-level functions such as prediction and planning, as well as control logic to generate suitable control signals to implement planning-level decisions (e.g. to control braking, steering, acceleration etc.). For autonomous vehicles, level 3 stacks include some logic to implement transition demands and level 4 stacks additionally include some logic for implementing minimum risk maneuvers. The stack may also implement secondary control functions e.g. of signalling, headlights, windscreen wipers etc.

The term "stack" can also refer to individual sub-systems (sub-stacks) of the full stack, such as perception, prediction, planning or control stacks, which may be tested individually or in any desired combination. A stack can refer purely to software, i.e. one or more computer programs that can be executed on one or more general-purpose computer processors.

Whether real or simulated, a scenario requires an ego agent to navigate a real or modelled physical context. The ego agent is a real or simulated mobile robot that moves under the control of the stack under testing. The physical context includes static and/or dynamic element(s) that the stack under testing is required to respond to effectively. For example, the mobile robot may be a fully or semi-autonomous vehicle under the control of the stack (the ego vehicle). The physical context may comprise a static road layout and a given set of environmental conditions (e.g. weather, time of day, lighting conditions, humidity, pollution/particulate level etc.) that could be maintained or varied as the scenario progresses. An interactive scenario additionally includes one or more other agents ("external" agent(s), e.g. other vehicles, pedestrians, cyclists, animals etc.).

The following examples consider applications to autonomous vehicle testing. However, the principles apply equally to other forms of mobile robot or robotic system.

Scenarios may be represented or defined at different levels of abstraction. More abstracted scenarios accommodate a greater degree of variation. For example, a "cut-in scenario" or a "lane change scenario" are examples of highly abstracted scenarios, characterized by a maneuver or behaviour of interest, that accommodate many variations (e.g. different agent starting locations and speeds, road layout, environmental conditions etc.). A "scenario run" refers to a concrete occurrence of an agent(s) navigating a physical context, optionally in the presence of one or more other agents. For example, multiple runs of a cut-in or lane change scenario could be performed (in the real-world and/or in a simulator) with different agent parameters (e.g. starting location, speed etc.), different road layouts, different environmental conditions, and/or different stack configurations etc. The terms "run" and "instance" are used interchangeably in this context. Herein, a scenario has a minimum of one adjustable parameter such that salient variations of the scenario may be explored using directed testing to iteratively select different values of the scenario parameter (or parameters). A set of (one or more) parameters is referred to, for conciseness, as a point in the parameter space of the scenario.

In the following examples, the performance of the stack is assessed, at least in part, by evaluating the behaviour of the ego agent in the test oracle against a given set of performance evaluation rules, over the course of one or more runs. The rules are applied to "ground truth" of the (or each) scenario run which, in general, simply means an appropriate representation of the scenario run (including the behaviour of the ego agent) that is taken as authoritative for the purpose of testing. Ground truth is inherent to simulation; a simulator computes a sequence of scenario states, which is, by definition, a perfect, authoritative representation of the simulated scenario run. In a real-world scenario run, a "perfect" representation of the scenario run does not exist in the same sense; nevertheless, suitably informative ground truth can be obtained in numerous ways, e.g. based on manual annotation of on-board sensor data, automated/semi-automated annotation of such data (e.g. using offline/non-real time processing), and/or using external information sources (such as external sensors, maps etc.) etc.

The scenario ground truth typically includes a "trace" of the ego agent and any other (salient) agent(s) as applicable. A trace is a history of an agent's location and motion over the course of a scenario. There are many ways a trace can be represented. Trace data will typically include spatial and motion data of an agent within the environment. The term is used in relation to both real scenarios (with real-world traces) and simulated scenarios (with simulated traces). The trace typically records an actual trajectory realized by the agent in the scenario. With regards to terminology, a "trace" and a "trajectory" may contain the same or similar types of information (such as a series of spatial and motion states over time). The term trajectory is generally favoured in the context of planning (and can refer to future/predicted trajectories), whereas the term trace is generally favoured in relation to past behaviour in the context of testing/evaluation.

In a simulation context, a "scenario description" is provided to a simulator as input. For example, a scenario description may be encoded using a scenario description language (SDL), or in any other form that can be consumed by a simulator. A scenario description is typically a more abstract representation of a scenario, that can give rise to multiple simulated runs. Depending on the implementation, a scenario description may have one or more configurable parameters that can be varied to increase the degree of possible variation. The degree of abstraction and parameterization is a design choice. For example, a scenario description may encode a fixed layout, with parameterized environmental conditions (such as weather, lighting etc.). Further abstraction is possible, however, e.g. with configurable road parameter(s) (such as road curvature, lane configuration etc.). The input to the simulator comprises the scenario description together with a chosen set of parameter value(s) (as applicable). The latter may be referred to as a parameterization of the scenario. The configurable parameter(s) define a parameter space (also referred to as the scenario space), and the parameterization corresponds to a point in the parameter space. In this context, a "scenario instance" may refer to an instantiation of a scenario in a simulator based on a scenario description and (if applicable) a chosen parameterization.

For conciseness, the term scenario may also be used to refer to a scenario run, as well a scenario in the more abstracted sense. The meaning of the term scenario will be clear from the context in which it is used.

Trajectory planning is an important function in the present context, and the terms "trajectory planner", "trajectory planning system" and "trajectory planning stack" may be used interchangeably herein to refer to a component or components that can plan trajectories for a mobile robot into the future. Trajectory planning decisions ultimately determine the actual trajectory realized by the ego agent (although, in some testing contexts, this may be influenced by other factors, such as the implementation of those decisions in the control stack, and the real or modelled dynamic response of the ego agent to the resulting control signals).

A trajectory planner may be tested in isolation, or in combination with one or more other systems (e.g. perception, prediction and/or control). Within a full stack, planning generally refers to higher-level autonomous decision-making capability (such as trajectory planning), whilst control generally refers to the lower-level generation of control signals for carrying out those autonomous decisions. However, in the context of performance testing, the term control is also used in the broader sense. For the avoidance of doubt, when a trajectory planner is said to control an ego agent in simulation, that does not necessarily imply that a control system (in the narrower sense) is tested in combination with the trajectory planner.

Example AV stack:

To provide relevant context to the described embodiments, further details of an example form of AV stack will now be described.

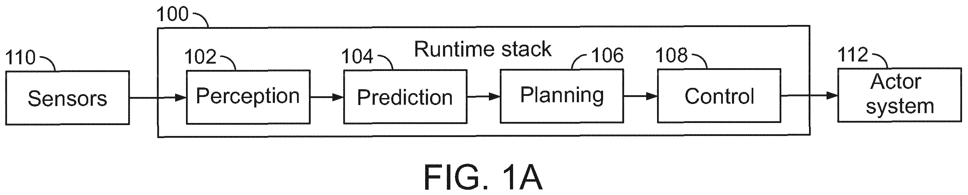

Figure 1A shows a highly schematic block diagram of an AV runtime stack 100. The run time stack 100 is shown to comprise a perception (sub-)system 102, a prediction (sub-)system 104, a planning (sub-)system (planner) 106 and a control (sub-)system (controller) 108. As noted, the term (sub-)stack may also be used to describe the aforementioned components 102-108.

In a real-world context, the perception system 102 receives sensor outputs from an on-board sensor system 110 of the AV, and uses those sensor outputs to detect external agents and measure their physical state, such as their position, velocity, acceleration etc. The on-board sensor system 110 can take different forms but generally comprises a variety of sensors such as image capture devices (cameras/optical sensors), lidar and/or radar unit(s), satellite-positioning sensor(s) (GPS etc.), motion/inertial sensor(s) (accelerometers, gyroscopes etc.) etc. The onboard sensor system 110 thus provides rich sensor data from which it is possible to extract detailed information about the surrounding environment, and the state of the AV and any external actors (vehicles, pedestrians, cyclists etc.) within that environment. The sensor outputs typically comprise sensor data of multiple sensor modalities such as stereo images from one or more stereo optical sensors, lidar, radar etc. Sensor data of multiple sensor modalities may be combined using filters, fusion components etc.

The perception system 102 typically comprises multiple perception components which co-operate to interpret the sensor outputs and thereby provide perception outputs to the prediction system 104.

In a simulation context, depending on the nature of the testing - and depending, in particular, on where the stack 100 is "sliced" for the purpose of testing (see below) - it may or may not be necessary to model the on-board sensor system 100. With higher-level slicing, simulated sensor data is not required therefore complex sensor modelling is not required.

The perception outputs from the perception system 102 are used by the prediction system 104 to predict future behaviour of external actors (agents), such as other vehicles in the vicinity of the AV.

Predictions computed by the prediction system 104 are provided to the planner 106, which uses the predictions to make autonomous driving decisions to be executed by the AV in a given driving scenario. The inputs received by the planner 106 would typically indicate a drivable area and would also capture predicted movements of any external agents (obstacles, from the AV's perspective) within the drivable area. The driveable area can be determined using perception outputs from the perception system 102 in combination with map information, such as an HD (high definition) map.

A core function of the planner 106 is the planning of trajectories for the AV (ego trajectories), taking into account predicted agent motion. This may be referred to as trajectory planning. A trajectory is planned in order to carry out a desired goal within a scenario. The goal could for example be to enter a roundabout and leave it at a desired exit; to overtake a vehicle in front; or to stay in a current lane at a target speed (lane following). The goal may, for example, be determined by an autonomous route planner (not shown).

The controller 108 executes the decisions taken by the planner 106 by providing suitable control signals to an on-board actor system 112 of the AV. In particular, the planner 106 plans trajectories for the AV and the controller 108 generates control signals to implement the planned trajectories. Typically, the planner 106 will plan into the future, such that a planned trajectory may only be partially implemented at the control level before a new trajectory is planned by the planner 106. The actor system 112 includes "primary" vehicle systems, such as braking, acceleration and steering systems, as well as secondary systems (e.g. signalling, wipers, headlights etc.).

Note, there may be a distinction between a planned trajectory at a given time instant, and the actual trajectory followed by the ego agent. Planning systems typically operate over a sequence of planning steps, updating the planned trajectory at each planning step to account for any changes in the scenario since the previous planning step (or, more precisely, any changes that deviate from the predicted changes). The planning system 106 may reason into the future, such that the planned trajectory at each planning step extends beyond the next planning step. Any individual planned trajectory may, therefore, not be fully realized (if the planning system 106 is tested in isolation, in simulation, the ego agent may simply follow the planned trajectory exactly up to the next planning step; however, as noted, in other real and simulation contexts, the planned trajectory may not be followed exactly up to the next planning step, as the behaviour of the ego agent could be influenced by other factors, such as the operation of the control system 108 and the real or modelled dynamics of the ego vehicle). In many testing contexts, the actual trajectory of the ego agent is what ultimately matters; in particular, whether the actual trajectory is safe, as well as other factors such as comfort and progress. However, the rules-based testing approach herein can also be applied to planned trajectories (even if those planned trajectories are not fully or exactly realized by the ego agent). For example, even if the actual trajectory of an agent is deemed safe according to a given set of safety rules, it might be that an instantaneous planned trajectory was unsafe; the fact that the planner 106 was considering an unsafe course of action may be revealing, even if it did not lead to unsafe agent behaviour in the scenario. Instantaneous planned trajectories constitute one form of internal state that can be usefully evaluated, in addition to actual agent behaviour in the simulation. Other forms of internal stack state can be similarly evaluated.

The example of Figure 1A considers a relatively "modular" architecture, with separable perception, prediction, planning and control systems 102-108. The sub-stack themselves may also be modular, e.g. with separable planning modules within the planning system 106. For example, the planning system 106 may comprise multiple trajectory planning modules that can be applied in different physical contexts (e.g. simple lane driving vs. complex junctions or roundabouts). This is relevant to simulation testing for the reasons noted above, as it allows components (such as the planning system 106 or individual planning modules thereof) to be tested individually or in different combinations. For the avoidance of doubt, with modular stack architectures, the term stack can refer not only to the full stack but to any individual sub-system or module thereof.

The extent to which the various stack functions are integrated or separable can vary significantly between different stack implementations - in some stacks, certain aspects may be so tightly coupled as to be indistinguishable. For example, in other stacks, planning and control may be integrated (e.g. such stacks could plan in terms of control signals directly), whereas other stacks (such as that depicted in Figure 1A) may be architected in a way that draws a clear distinction between the two (e.g. with planning in terms of trajectories, and with separate control optimizations to determine how best to execute a planned trajectory at the control signal level). Similarly, in some stacks, prediction and planning may be more tightly coupled. At the extreme, in so-called "end-to-end" driving, perception, prediction, planning and control may be essentially inseparable. Unless otherwise indicated, the perception, prediction planning and control terminology used herein does not imply any particular coupling or modularity of those aspects.

It will be appreciated that the term "stack" encompasses software, but can also encompass hardware. In simulation, software of the stack may be tested on a "generic" off-board computer system, before it is eventually uploaded to an on-board computer system of a physical vehicle. However, in "hardware-in-the-loop" testing, the testing may extend to underlying hardware of the vehicle itself. For example, the stack software may be run on the on-board computer system (or a replica thereof) that is coupled to the simulator for the purpose of testing. In this context, the stack under testing extends to the underlying computer hardware of the vehicle. As another example, certain functions of the stack 110 (e.g. perception functions) may be implemented in dedicated hardware. In a simulation context, hardware-in-the loop testing could involve feeding synthetic sensor data to dedicated hardware perception components.

Testing paradigm:

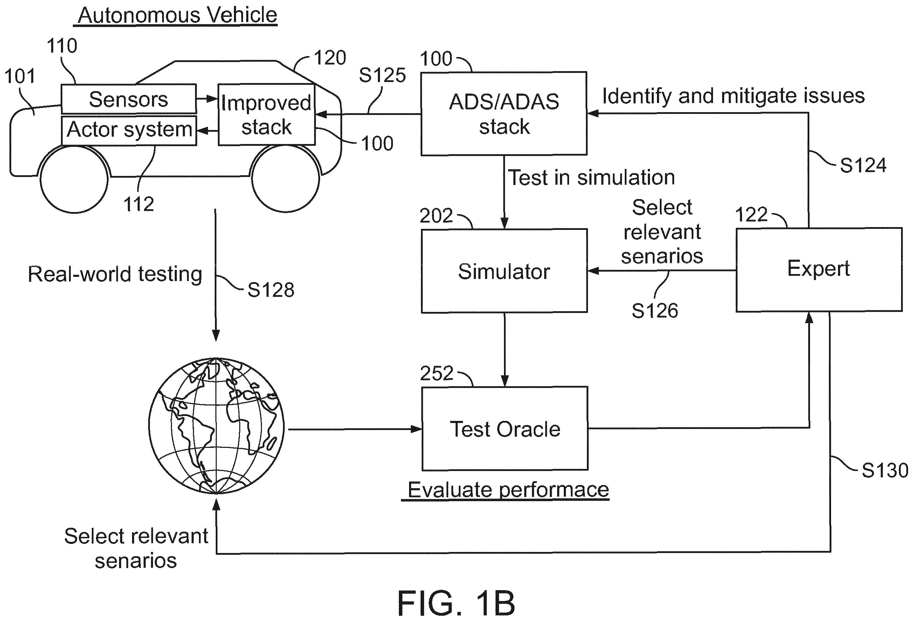

Figure 1B shows a highly schematic overview of a testing paradigm for autonomous vehicles. An ADS/ADAS stack 100, e.g. of the kind depicted in Figure 1A, is subject to repeated testing and evaluation in simulation, by running multiple scenario instances in a simulator 202, and evaluating the performance of the stack 100 (and/or individual subs-stacks thereof) in a test oracle 252. The output of the test oracle 252 is informative to an expert 122 (team or individual), allowing them to identify issues in the stack 100 and modify the stack 100 to mitigate those issues (S124). The results also assist the expert 122 in selecting further scenarios for testing (S126), and the process continues, repeatedly modifying, testing and evaluating the performance of the stack 100 in simulation. The improved stack 100 is eventually incorporated (S125) in a real-world AV 101, equipped with a sensor system 110 and an actor system 112. The improved stack 100 typically includes program instructions (software) executed in one or more computer processors of an on-board computer system of the vehicle 101 (not shown). The software of the improved stack is uploaded to the AV 101 at step S125. Step S125 may also involve modifications to the underlying vehicle hardware. On board the AV 101, the improved stack 100 receives sensor data from the sensor system 110 and outputs control signals to the actor system 112. Real-world testing (S128) can be used in combination with simulation-based testing. For example, having reached an acceptable level of performance though the process of simulation testing and stack refinement, appropriate real-world scenarios may be selected (S130), and the performance of the AV 101 in those real scenarios may be captured and similarly evaluated in the test oracle 252.

Scenarios can be obtained for the purpose of simulation in various ways, including manual encoding. The system is also capable of extracting scenarios for the purpose of simulation from real-world runs, allowing real-world situations and variations thereof to be re-created in the simulator 202.

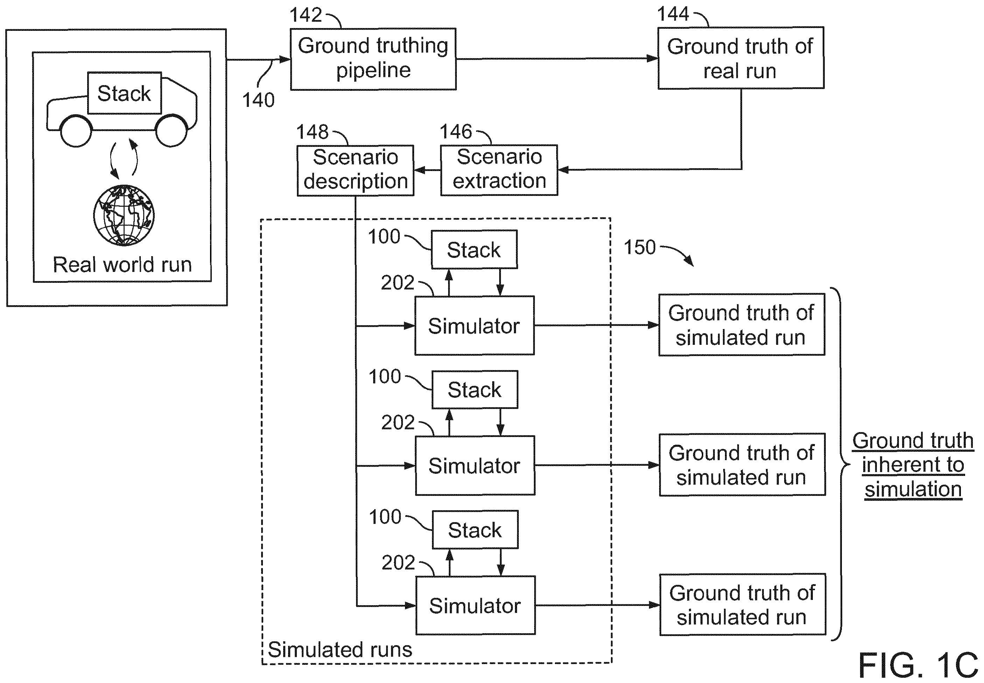

Figure 1C shows a highly schematic block diagram of a scenario extraction pipeline. Data 140 of a real-world run is passed to a 'ground-truthing' pipeline 142 for the purpose of generating scenario ground truth. The run data 140 could comprise, for example, sensor data and/or perception outputs captured/generated on board one or more vehicles (which could be autonomous, human-driven or a combination thereof), and/or data captured from other sources such external sensors (CCTV etc.). The run data is processed within the ground truthing pipeline 142, in order to generate appropriate ground truth 144 (trace(s) and contextual data) for the real-world run. As discussed, the ground-truthing process could be based on manual annotation of the 'raw' run data 140, or the process could be entirely automated (e.g. using offline perception method(s)), or a combination of manual and automated ground truthing could be used. For example, 3D bounding boxes may be placed around vehicles and/or other agents captured in the run data 140, in order to determine spatial and motion states of their traces. A scenario extraction component 146 receives the scenario ground truth 144, and processes the scenario ground truth 144 to extract a more abstracted scenario description 148 that can be used for the purpose of simulation. The scenario description 148 is consumed by the simulator 202, allowing multiple simulated runs to be performed. The simulated runs are variations of the original real-world run, with the degree of possible variation determined by the extent of abstraction. Ground truth 150 is provided for each simulated run.

In the present off-board content, there is no requirement for the traces to be extracted in real-time (or, more precisely, no need for them to be extracted in a manner that would support real-time planning); rather, the traces are extracted "offline". Examples of offline perception algorithms include non-real time and non-causal perception algorithms. Offline techniques contrast with "on-line" techniques that can feasibly be implemented within an AV stack 100 to facilitate real-time planning/decision making.

For example, it is possible to use non-real time processing, which cannot be performed on-line due to hardware or other practical constraints of an AV's onboard computer system. For example, one or more non-real time perception algorithms can be applied to the real-world run data 140 to extract the traces. A non-real time perception algorithm could be an algorithm that it would not be feasible to run in real time because of the computation or memory resources it requires.

It is also possible to use "non-causal" perception algorithms in this context. A non-causal algorithm may or may not be capable of running in real-time at the point of execution, but in any event could not be implemented in an online context, because it requires knowledge of the future. For example, a perception algorithm that detects an agent state (e.g. location, pose, speed etc.) at a particular time instant based on subsequent data could not support real-time planning within the stack 100 in an on-line context, because it requires knowledge of the future (unless it was constrained to operate with a short look ahead window). For example, filtering with a backwards pass is a non-causal algorithm that can sometimes be run in real-time, but requires knowledge of the future.

The term "perception" generally refers to techniques for perceiving structure in the real-world data 140, such as 2D or 3D bounding box detection, location detection, pose detection, motion detection etc. For example, a trace may be extracted as a time-series of bounding boxes or other spatial states in 3D space or 2D space (e.g. in a birds-eye-view frame of reference), with associated motion information (e.g. speed, acceleration, jerk etc.). In the context of image processing, such techniques are often classed as "computer vision", but the term perception encompasses a broader range of sensor modalities.

Testing pipeline:

Further details of the testing pipeline and the test oracle 252 will now be described. The examples that follow focus on simulation-based testing. However, as noted, the test oracle 252 can equally be applied to evaluate stack performance on real scenarios, and the relevant description below applies equally to real scenarios. The following description refers to the stack 100 of Figure 1A by way of example. However, as noted, the testing pipeline 200 is highly flexible and can be applied to any stack or sub-stack operating at any level of autonomy.

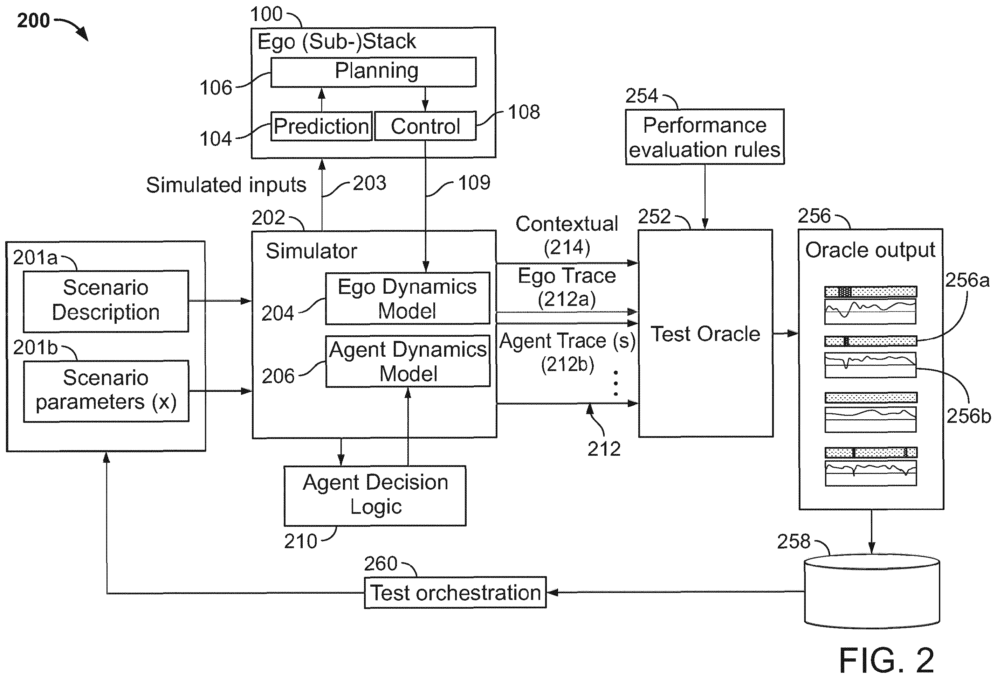

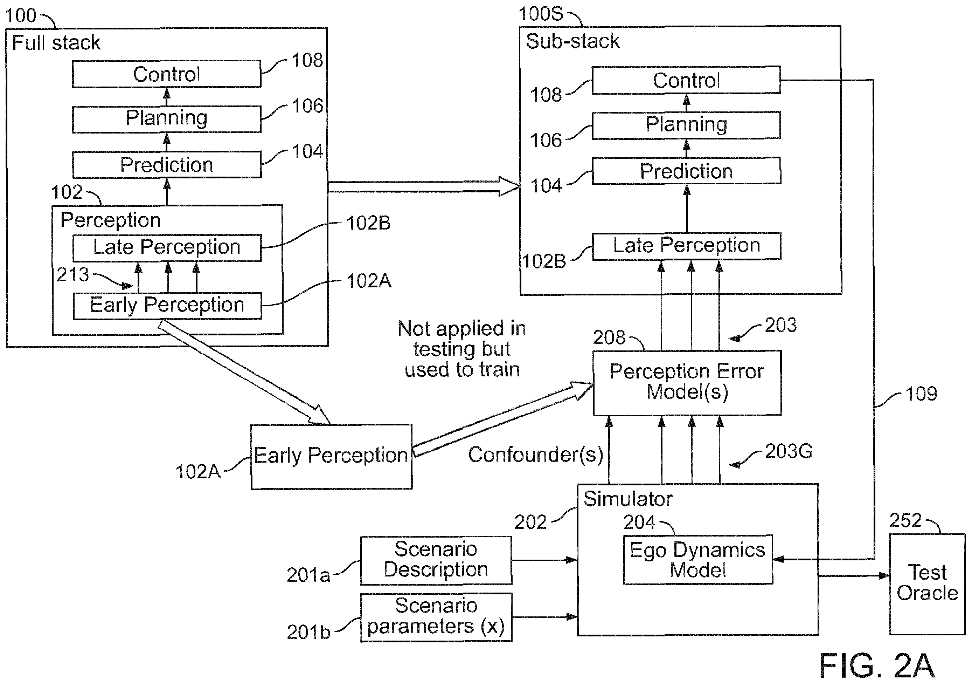

Figure 2 shows a schematic block diagram of the testing pipeline, denoted by reference numeral 200. The testing pipeline 200 is shown to comprise the simulator 202 and the test oracle 252. The simulator 202 runs simulated scenarios for the purpose of testing all or part of an AV run time stack 100, and the test oracle 252 evaluates the performance of the stack (or sub-stack) on the simulated scenarios. As discussed, it may be that only a sub-stack of the run-time stack (or some portion or portions thereof) is tested, but for simplicity, the following description refers to the (full) AV stack 100 throughout. However, the description applies equally to a sub-stack in place of the full stack 100. The term "slicing" is used herein to the selection of a set or subset of stack components for testing.

As described previously, the idea of simulation-based testing is to run a simulated driving scenario that an ego agent must navigate under the control of the stack 100 being tested. Typically, the scenario includes a static drivable area (e.g. a particular static road layout) that the ego agent is required to navigate, typically in the presence of one or more other dynamic agents (such as other vehicles, bicycles, pedestrians etc.). To this end, simulated inputs 203 are provided from the simulator 202 to the stack 100 under testing.

The slicing of the stack dictates the form of the simulated inputs 203. By way of example, Figure 2 shows the prediction, planning and control systems 104, 106 and 108 within the AV stack 100 being tested. To test the full AV stack of Figure 1A, the perception system 102 could also be applied during testing. In this case, the simulated inputs 203 would comprise synthetic sensor data that is generated using appropriate sensor model(s) and processed within the perception system 102 in the same way as real sensor data. This requires the generation of sufficiently realistic synthetic sensor inputs (such as photorealistic image data and/or equally realistic simulated lidar/radar data etc.). The resulting outputs of the perception system 102 would, in turn, feed into the higher-level prediction and planning systems 104, 106.

By contrast, so-called "planning-level" simulation would essentially bypass the perception system 102. The simulator 202 would instead provide simpler, higher-level inputs 203 directly to the prediction system 104. In some contexts, it may even be appropriate to bypass the prediction system 104 as well, in order to test the planner 106 on predictions obtained directly from the simulated scenario (i.e. "perfect" predictions).

Between these extremes, there is scope for many different levels of input slicing, e.g. testing only a subset of the perception system 102, such as "later" (higher-level) perception components, e.g. components such as filters or fusion components which operate on the outputs from lower-level perception components (such as object detectors, bounding box detectors, motion detectors etc.).

Whatever form they take, the simulated inputs 203 are used (directly or indirectly) as a basis for decision-making by the planner 108. The controller 108, in turn, implements the planner's decisions by outputting control signals 109. In a real-world context, these control signals would drive the physical actor system 112 of AV. In simulation, an ego vehicle dynamics model 204 is used to translate the resulting control signals 109 into realistic motion of the ego agent within the simulation, thereby simulating the physical response of an autonomous vehicle to the control signals 109.

Alternatively, a simpler form of simulation assumes that the ego agent follows each planned trajectory exactly between planning steps. This approach bypasses the control system 108 (to the extent it is separable from planning) and removes the need for the ego vehicle dynamic model 204. This may be sufficient for testing certain facets of planning.

To the extent that external agents exhibit autonomous behaviour/decision making within the simulator 202, some form of agent decision logic 210 is implemented to carry out those decisions and determine agent behaviour within the scenario. The agent decision logic 210 may be comparable in complexity to the ego stack 100 itself or it may have a more limited decision-making capability. The aim is to provide sufficiently realistic external agent behaviour within the simulator 202 to be able to usefully test the decision-making capabilities of the ego stack 100. In some contexts, this does not require any agent decision making logic 210 at all (open-loop simulation), and in other contexts useful testing can be provided using relatively limited agent logic 210 such as basic adaptive cruise control (ACC). One or more agent dynamics models 206 may be used to provide more realistic agent behaviour if appropriate.

A scenario is run in accordance with a scenario description 201a and (if applicable) a chosen parameterization 201b of the scenario (generally denoted by *x* herein). A scenario typically has both static and dynamic elements which may be "hard coded" in the scenario description 201a or configurable and thus determined by the scenario description 201a in combination with a chosen parameterization 201b. In a driving scenario, the static element(s) typically include a static road layout.

The dynamic element(s) typically include one or more external agents within the scenario, such as other vehicles, pedestrians, bicycles etc.

The extent of the dynamic information provided to the simulator 202 for each external agent can vary. For example, a scenario may be described by separable static and dynamic layers. A given static layer (e.g. defining a road layout) can be used in combination with different dynamic layers to provide different scenario instances. The dynamic layer may comprise, for each external agent, a spatial path to be followed by the agent together with one or both of motion data and behaviour data associated with the path. In simple open-loop simulation, an external actor simply follows the spatial path and motion data defined in the dynamic layer that is non-reactive i.e. does not react to the ego agent within the simulation. Such open-loop simulation can be implemented without any agent decision logic 210. However, in closed-loop simulation, the dynamic layer instead defines at least one behaviour to be followed along a static path (such as an ACC behaviour). In this case, the agent decision logic 210 implements that behaviour within the simulation in a reactive manner, i.e. reactive to the ego agent and/or other external agent(s). Motion data may still be associated with the static path but in this case is less prescriptive and may for example serve as a target along the path. For example, with an ACC behaviour, target speeds may be set along the path which the agent will seek to match, but the agent decision logic 210 might be permitted to reduce the speed of the external agent below the target at any point along the path in order to maintain a target headway from a forward vehicle.

As will be appreciated, scenarios can be described for the purpose of simulation in many ways, with any degree of configurability. For example, the number and type of agents, and their motion information may be configurable as part of the scenario parameterization 201b.

The output of the simulator 202 for a given simulation includes an ego trace 212a of the ego agent and one or more agent traces 212b of the one or more external agents (traces 212). Each trace 212a, 212b is a complete history of an agent's behaviour within a simulation having both spatial and motion components. For example, each trace 212a, 212b may take the form of a spatial path having motion data associated with points along the path such as speed, acceleration, jerk (rate of change of acceleration), snap (rate of change of jerk) etc.

Additional information is also provided to supplement and provide context to the traces 212. Such additional information is referred to as "contextual" data 214. The contextual data 214 pertains to the physical context of the scenario, and can have both static components (such as road layout) and dynamic components (such as weather conditions to the extent they vary over the course of the simulation). To an extent, the contextual data 214 may be "passthrough" in that it is directly defined by the scenario description 201a or the choice of parameterization 201b, and is thus unaffected by the outcome of the simulation. For example, the contextual data 214 may include a static road layout that comes from the scenario description 201a or the parameterization 201b directly. However, typically the contextual data 214 would include at least some elements derived within the simulator 202. This could, for example, include simulated environmental data, such as weather data, where the simulator 202 is free to change weather conditions as the simulation progresses. In that case, the weather data may be time-dependent, and that time dependency will be reflected in the contextual data 214.

The test oracle 252 receives the traces 212 and the contextual data 214, and scores those outputs in respect of a set of performance evaluation rules 254. The performance evaluation rules 254 are shown to be provided as an input to the test oracle 252.

The rules 254 are categorical in nature (e.g. pass/fail-type rules). Certain performance evaluation rules are also associated with numerical performance metrics used to "score" trajectories (e.g. indicating a degree of success or failure or some other quantity that helps explain or is otherwise relevant to the categorical results). The evaluation of the rules 254 is time-based - a given rule may have a different outcome at different points in the scenario. The scoring is also time-based: for each performance evaluation metric, the test oracle 252 tracks how the value of that metric (the score) changes over time as the simulation progresses. The test oracle 252 provides an output 256 comprising a time sequence 256a of categorical (e.g. pass/fail) results for each rule, and a score-time plot 256b for each performance metric, as described in further detail later. The results and scores 256a, 256b are informative to the expert 122 and can be used to identify and mitigate performance issues within the tested stack 100. The test oracle 252 also provides an overall (aggregate) result for the scenario (e.g. overall pass/fail). The output 256 of the test oracle 252 is stored in a test database 258, in association with information about the scenario to which the output 256 pertains. For example, the output 256 may be stored in association with the scenario description 210a (or an identifier thereof), and the chosen parameterization 201b. As well as the time-dependent results and scores, an overall score may also be assigned to the scenario and stored as part of the output 256. For example, an aggregate score for each rule (e.g. overall pass/fail) and/or an aggregate result (e.g. pass/fail) across all of the rules 254.

Figure 2A illustrates another choice of slicing and uses reference numerals 100 and 100S to denote a full stack and sub-stack respectively. It is the sub-stack 100S that would be subject to testing within the testing pipeline 200 of Figure 2.

A number of "later" perception components 102B form part of the sub-stack 100S to be tested and are applied, during testing, to simulated perception inputs 203. The later perception components 102B could, for example, include filtering or other fusion components that fuse perception inputs from multiple earlier perception components.

In the full stack 100, the later perception components 102B would receive actual perception inputs 213 from earlier perception components 102A. For example, the earlier perception components 102A might comprise one or more 2D or 3D bounding box detectors, in which case the simulated perception inputs provided to the late perception components could include simulated 2D or 3D bounding box detections, derived in the simulation via ray tracing. The earlier perception components 102A would generally include component(s) that operate directly on sensor data. With the slicing of Figure 2A, the simulated perception inputs 203 would correspond in form to the actual perception inputs 213 that would normally be provided by the earlier perception components 102A. However, the earlier perception components 102A are not applied as part of the testing, but are instead used to train one or more perception error models 208 that can be used to introduce realistic error, in a statistically rigorous manner, into the simulated perception inputs 203 that are fed to the later perception components 102B of the sub-stack 100 under testing.

Such perception error models may be referred to as Perception Statistical Performance Models (PSPMs) or, synonymously, "PRISMs". Further details of the principles of PSPMs, and suitable techniques for building and training them, may be bound in International Patent Publication Nos. WO2021037763 WO2021037760, WO2021037765, WO2021037761, and WO2021037766. The idea behind PSPMs is to efficiently introduce realistic errors into the simulated perception inputs provided to the sub-stack 100S (i.e. that reflect the kind of errors that would be expected were the earlier perception components 102A to be applied in the real-world). In a simulation context, "perfect" ground truth perception inputs 203G are provided by the simulator, but these are used to derive more realistic (ablated) perception inputs 203 with realistic error introduced by the perception error models(s) 208. The perception error model(s) 208 serve as a "surrogate model" (being a surrogate for the perception system 102, or part of the perception system 102A, but operating on lower-fidelity inputs). Non-trained perception error models may also be used.

As described in the aforementioned reference, a perception error (or performance) model can be dependent on one or more variables representing physical condition(s) ("confounders"), allowing different levels of error to be introduced that reflect different possible real-world conditions. Hence, the simulator 202 can simulate different physical conditions (e.g. different weather conditions) by simply changing the value of a weather confounder(s), which will, in turn, change how perception error is introduced.

The later perception components 102b within the sub-stack 100S process the simulated perception inputs 203 in exactly the same way as they would process the real-world perception inputs 213 within the full stack 100, and their outputs, in turn, drive prediction, planning and control.

Alternatively, such models can be used to model the entire perception system 102, including the late perception components 208, in which case a model(s) is used to generate realistic perception output that are passed as inputs to the prediction system 104 directly.

Depending on the implementation, there may or may not be deterministic relationship between a given scenario parameterization 201b and the outcome of the simulation for a given configuration of the stack 100 (i.e. the same parameterization may or may not always lead to the same outcome for the same stack 100). Non-determinism can arise in various ways. For example, when simulation is based on PRISMs, a PRISM might model a distribution over possible perception outputs at each given time step of the scenario, from which a realistic perception output is sampled probabilistically. This leads to non-deterministic behaviour within the simulator 202, whereby different outcomes may be obtained for the same stack 100 and scenario parameterization because different perception outputs are sampled. Alternatively, or additionally, the simulator 202 may be inherently non-deterministic, e.g. weather, lighting or other environmental conditions may be randomized/probabilistic within the simulator 202 to a degree. As will be appreciated, this is a design choice: in other implementations, varying environmental conditions could instead be fully specified in the parameterization 201b of the scenario. With non-deterministic simulation, multiple scenario instances could be run for each parameterization. An aggregate pass/fail result could be assigned to a particular choice of parameterization 201b, e.g. as a count or percentage of pass or failure outcomes.

A test orchestration component 260 is responsible for selecting scenarios for the purpose of simulation. For example, the test orchestration component 260 may select scenario descriptions 201a and suitable parameterizations 201b automatically, which may be based on the test oracle outputs 256 from previous scenarios and/or other criteria. IN the following examples, the test orchestration component 260 implements a directed testing method, so as s

Example performance evaluation rule:

One example rule considered herein is a "safe distance" rule that applies in a lane following context, and which is evaluated between an ego agent and another agent. The safe distance rule requires the ego agent to maintain a safe distance from the other threshold at all times. Lateral and longitudinal distance are both considered and, to pass the safe distance rule, it is sufficient for only one of those distances to satisfy some safety threshold (consider a lane driving scenario, with the ego agent and the other agent in adjacent lanes; when driving alongside each other, their longitudinal separation along the road may be zero or close to zero, which is safe provided a sufficient lateral separation between the agents is maintained; similarly, with the ego agent driving behind the other agent in the same lane, their latitudinal separation perpendicular to the direction of the road may be zero or close to zero assuming both agents are approximately following the midline of the lane, which is safe provided a sufficient longitudinal headway is maintained). A numerical score is computed for the safe distance rule at a given point in time based on whichever distance (latitudinal or longitudinal) is currently determinative of safety.

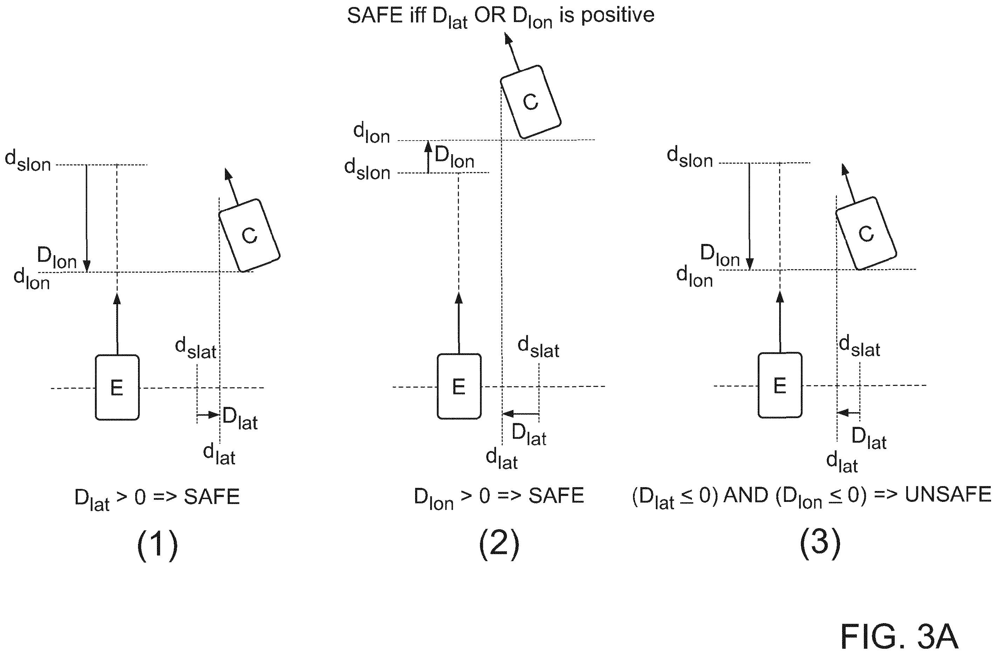

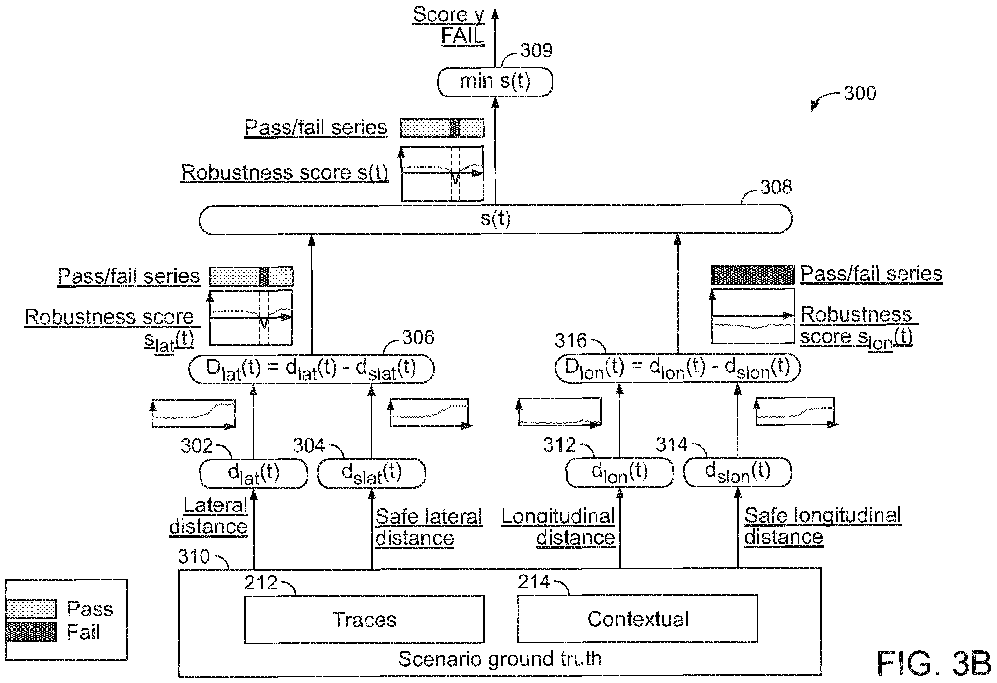

Robustness scores such as the score described below with reference to Figures 3A and 3B, take quantities such as absolute or relative positions, velocities, or other quantities of agents' relative motion. The robustness score is typically defined based on a threshold to one or more of these quantities based on the given rule (for example, the threshold might define a minimum lateral distance to a nearest agent that is deemed acceptable in terms of safety). The robustness score is then defined by whether the given quantity is above or below that threshold, and the degree to which the quantity exceeds or falls below the threshold. The robustness score therefore provides a measure of whether the agent is performing how it should or how it is expected to perform relative to other agents and to its environment (including, e.g. any speed limits, etc. defined within the drivable area for the given scenario).

The safe distance rule is chosen to illustrate certain principles underpinning the described methodology because it is simple and intuitive. It will, however, be appreciated that the described techniques can be applied to any rule that is designed to quantify some aspect (or aspects) of driving performance, such as safety, comfort and/or progress towards some defined goal, by way of a numerical "robustness score". A time-varying robustness score over the duration of a scenario run is denoted $s(t)$ and an overall robustness score for a run is denoted $y$.. For example, a robustness scoring framework may be constructed for driving rules that are based on signal-temporal logic.

FIG. 3A schematically illustrates the geometric principles of the safe distance rule, evaluated between an ego agent E and another agent C (the challenger).

FIGS. 3A and 3B are described in conjunction with each other.

Lateral distance is measured along a road reference line (which could be a straight line or a curve), and longitudinal separation is measured in the direction perpendicular to the road reference line. Lateral and longitudinal separation (distance between the ego agent E and the challenger C) are denoted by $d_{lat}$ and $d_{lon}$ respectively. Latitudinal and longitudinal distance thresholds (safety distances) are denoted by $d_{slat}$ and $d_{slon}$.

The safety distances $d_{slat}$, $d_{slon}$ are typically not fixed, but typically vary as functions of the agents' relative speed (and/or other factors, such as weather, road curvature, road surface, lighting etc.). Expressing the separations and safety distances as functions of time, t, latitudinal and longitudinal "headroom" distances are defined as:

$$D_{lat}(t) = d_{lat}(t) - d_{slat}(t)$$

$$D_{lon}(t) = d_{lon}(t) - d_{slon}(t).$$

FIG 3A(1) shows an ego agent E at a safe distance from a challenger C, by virtue of the fact that the agents' lateral separation $d_{lat}$ is greater than the current lateral safety distance $d_{slat}$ for that pair of agents (positive $D_{lat}$).

FIG 3A(2) shows an ego agent E at a safe distance from a challenger C, by virtue of the fact that the agents' longitudinal separation $d_{lon}$ is greater than the current longitudinal safety distance $d_{slon}$ for that pair of agents (negative $D_{lon}$).

FIG 3A(E) shows an ego agent E at an unsafe distance from a challenger C. The safe distance rule is failed because both $D_{lat}$ and $D_{lon}$ are negative.

FIG. 3B shows the safe distance rule implemented as a computational graph applied to a set of scenario ground truth 310 (or other scenario data).

The latitudinal separation, latitudinal safety distance, longitudinal separation and longitudinal safety distance are extracted from the scenario ground truth 310 by, respectively, first, second, third and fourths extractor nodes 302, 304, 312, 314 of the computational graph 300 as time-varying signals. The latitudinal and longitudinal headroom distances are computed by first and second computational (assessor) nodes 306, 316, and converted to robustness scores as follows. The following examples consider normalized robustness scores over some fixed range, such as [-1,1], with 0 as the pass threshold.

The headroom distances quantify the extent to which the relevant safety distance is or is not breached: a positive latitudinal/longitudinal headroom distance implies that the latitudinal/longitudinal separation between the ego E and the challenger C is greater than the current latitudinal/longitudinal safety distance, and a negative headroom distance implies the opposite. Following the principles set out above, robustness scores for lateral and longitudinal distance may, for example, be defined as follows:

If

$$D_{lat}(t) > 0 \text{ then } s_{lat}(t) = \min[1, D_{lat}(t)/A_{lat}]$$

If

$$D_{lat}(t) \leq 0 \text{ the } s_{lat}(t) = \max[-1, D_{lat}(t)/B_{lat}]$$

If

$$D_{lon}(t) > 0 \text{ then } s_{lon}(t) = \min[1, D_{lon}(t)/A_{lon}]$$

If

$$D_{lon}(t) \leq 0 \text{ then } s_{lon}(t) = \max[-1, D_{lon}(t)/B_{lon}]$$

Here, *A* and *B* denote some predefined normalization distances (which may be the same or different for the lateral and longitudinal scores). For example, it can be seen that the longitudinal robustness score $s_{lon}(t)$ varies between 1 and -1

as $D_{lon}(t)$ varies between $A_{lon}$ and $-B_{lon}$. For $D_{lon}(t) > A$, the longitudinal robustness score is fixed at 1, and for $s_{lon}(t) < B_{lon}$ the robustness score is fixed at -1. The longitudinal robustness score $s_{lon}(t)$ varies continuously over all possible values of longitudinal headroom. The same considerations apply to the lateral robustness score. As will be appreciated, this is merely one example, and a robustness score $s(t)$ can be defined in various ways based on headroom distance.

Score normalization is convenient, because it makes the rules more interpretable, and facilitates comparison of the scores between different rules. However, it is not essential for scores to be normalized in this way. A score could be defined over any range with any failure threshold (not necessarily at zero).

The robustness score $s(t)$ for the safe distance rule as a whole is computed by a third assessor node 308 as:

$$s(t) = \min[s_{lat}(t), s_{lon}(t)].$$

The rule is passed when s(t)>0 and failed when $s(t) \leq 0$. The rule is 'just' failed when $s = 0$ (implying that one of the longitudinal and lateral separations is equal to its safety distance), representing the boundary between PASS and FAIL outcomes (performance categories). Alternatively, $s = 0$ could be defined at the point at which the ego E just passes; this is an immaterial design choice and, for that reason, the terms "pass threshold" and "failure threshold" are used interchangeably herein to refer to the subset of the parameter space where the robustness score $y = 0$.

A pass/fail result (or, or more generally, a performance category) may be assigned to each time step of a scenario run based on the robustness score $s(t)$ at that time, which is useful to an expert interpreting the results. However, the example directed search methods below are based on an overall robustness score assigned to a scenario run by a fourth assessor node 309 as:

$$y = \min_{t} s(t),$$

with an overall pass when $y > 0$ and an overall fail when $y \leq 0$.

One possible directed search methodology utilizing the overall score $y$ will now be described. The directed search uses a Gaussian process model to build a score predictor, which in turn is used to guide the selection of points (parameter sets) in the parameter space of a scenario.

To facilitate the description, an $x$ superscript is introduced into the above notation to denote a quantity obtained with a given parameter set, e.g. $y^{(x)}$ denotes the overall robustness score obtained on a run characterized by parameter set x (a given point in the parameter space).

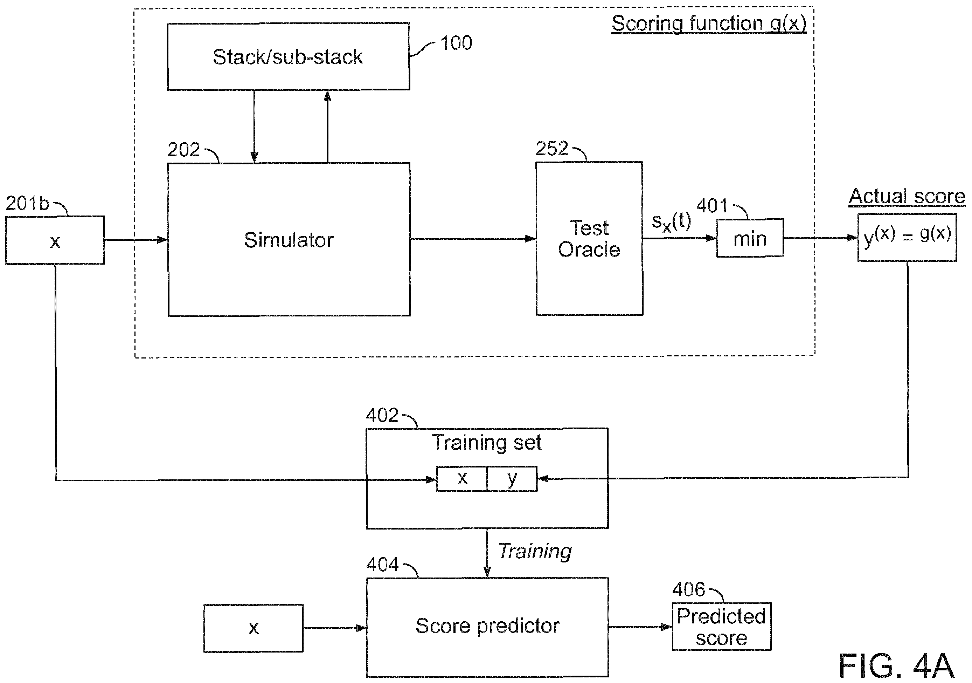

Figure 4A shows a score predictor 402 which is trained to learn a scoring function

$$g(x) := y^{(x)}.$$

The Gaussian process model described herein assumes that the scoring function $g(x)$ varies continuously as a function of the scenario parameters $x$. That is, it is assumed that a small change in $x$ causes only a small change in the overall score $y_x$ that is obtained. It will be appreciated that the techniques can be applied with other forms of machine learning model, and the description applies equally to other such models.

Figure 4A shows the scoring function $g(x)$ to be composed of the simulator 202, the stack 100 (or some part of parts thereof) coupled to the simulator 202, the test oracle 252 (running on the output of the simulator 252, and a max function that computes the overall score for a run on a given parameter set $x$ as

$$y^{(x)} = \min_{t} s^{(x)}(t)$$

The score predictor 402 is a machine learning component based on a trainable regression model. A training set 404 is comprised of training example $(x, y)$ pairs, where $x$ is a parameter set on which a simulated run has been performed and $y$ is the resulting score (for conciseness, the $x$ superscript is omitted in the following description when the meaning is clear).

The score predictor 402 consumes a parameter set $x$ as input, and outputs a predicted score 406. In fact, the output is a probability distribution over possible scores in the following examples, which provides not only a predicted score 406 but also a confidence level associated with the prediction. Ultimately, the aim is to train the score predictor 402 so that it can accurately predict the overall performance of a given stack 100 (or some part of parts thereof) in a given scenario with a given parameter set $x$, without having to actually run and score a simulated instance of the scenario with those parameters $x$. To generate a training example for a given scenario, an instance of that scenario is run on a given parameter set $x$ in the simulator 202, the test oracle 252 is applied to the simulator output, and the overall score $y$ is computed from the oracle output. This requires significant computational resources, both to tune the simulation, and then score the simulator output against the rule or rules in question. It is therefore highly desirable to build the training set 404 in a targeted manner, with as few examples as needed to give sufficient confidence given some analysis objective. In the following examples, that objective is to accurately map out the 'boundaries' in the scenario's parameter space between PASS and FAIL regions. Here, the methodology is less concerned with accurately predicting the score $y$ per se; rather, the aim is to accurately predict the *sign* of the score with confidence (or, more generally, to predict whether or not the score satisfies the pass threshold).

The directed search methodology can be applied with multiple rules simultaneously based on a set of scores

$$\{y_i | i = 1, ..., N\},$$

where the i subscript denotes the ith rule and $N$ is the number of rules on which the directed search is applied. In this case, a score predictor is constructed and trained for each rule i, as described in further detail below.

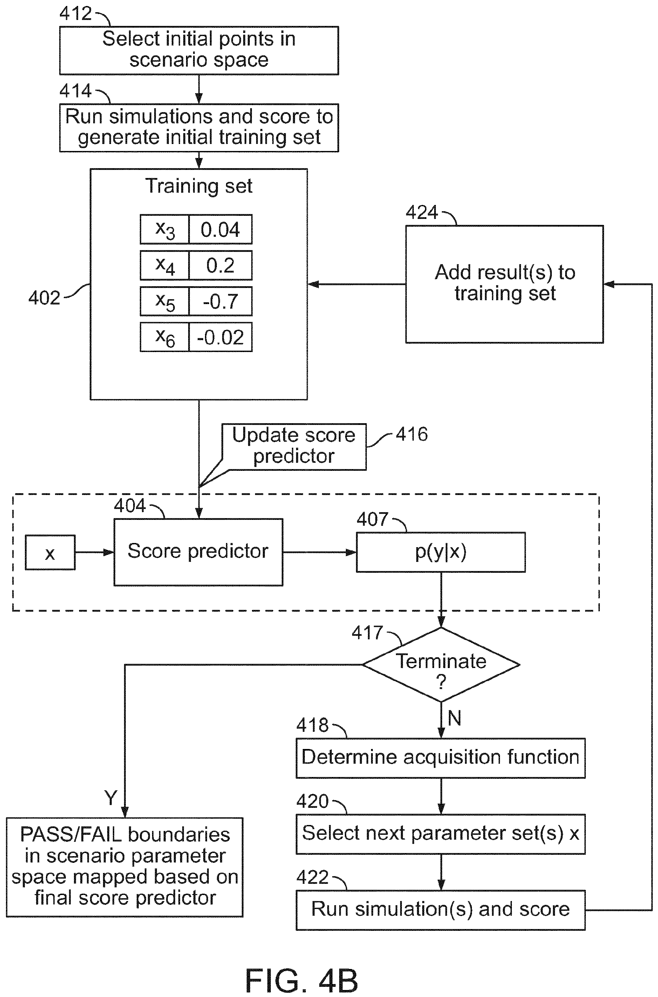

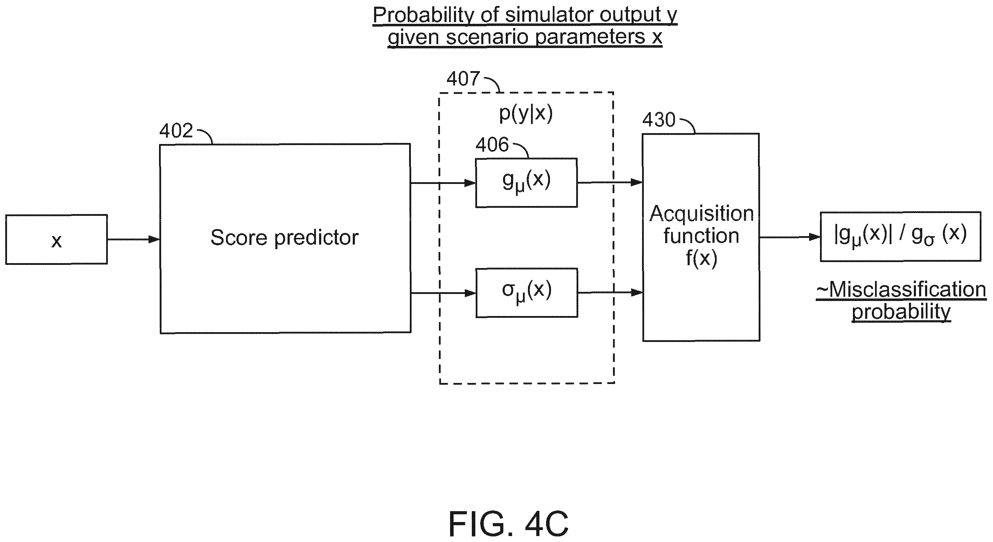

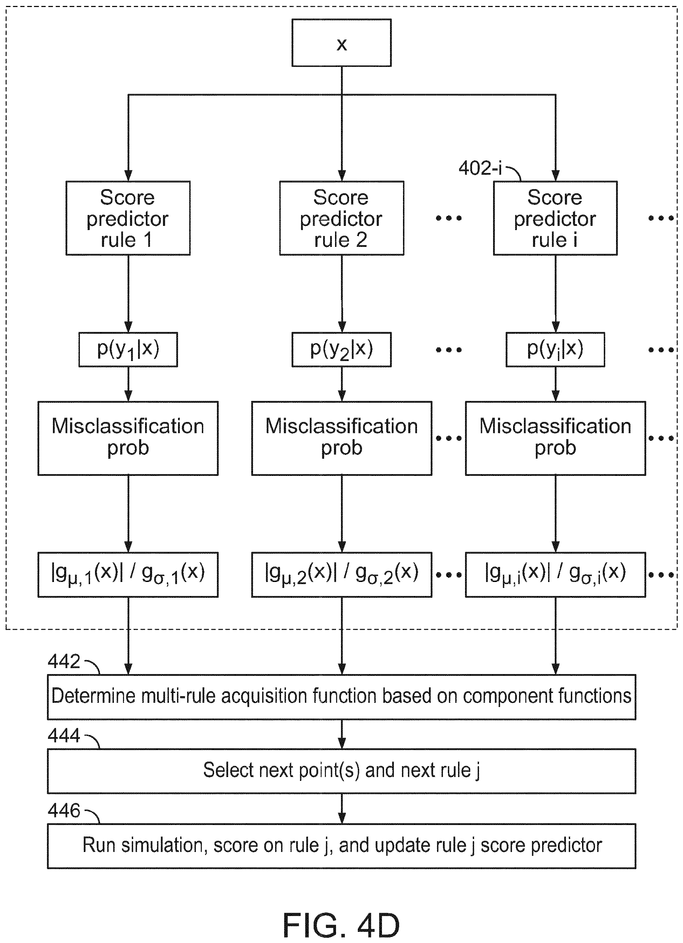

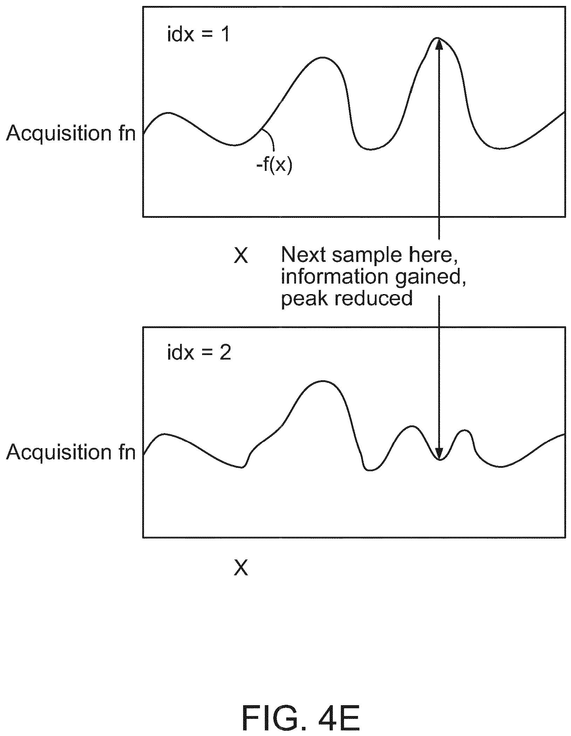

Figure 4 shows a high-level flow chart for a directed search method applied to a scenario.

At step 412, an initial set of points is selected in the parameter space of the scenario. For example, these could be selected randomly (e.g. based on Monte Carlo sampling, or a 'grid' of uniformly spaced points in the parameter space may be chosen initially. The scenario is instantiated at each of these initial points, and the simulator output is analyzed in the test oracle 252 to obtain an overall score for each initial point (step 414).

The training set 404 is constructed initially based on the initially selected points and their computed scores.

At step 416, the score predictor 402 is trained based on the training set 406 to compute a predicted score for any given input $x$ in the parameter space. As noted above, the output of the score predictor is actually a probability distribution 407 over possible scores $y$ given $x$, denoted by denoted by $p(y|x)$ (score distribution).

The method could terminate at this point (decision block 417), otherwise at step 418, the score distribution 407 is used to determine an "acquisition function". Details of the acquisition function are described below. For now, suffice it to say that the acquisition function encodes the analysis objective (e.g. the objective to map out PASS/FAIL boundaries with confidence) in precise, mathematical terms. The acquisition function is then used to select (step 420) a next point $x$ in the parameter space in fulfilment of that objective.

At step 422, the scenario is instantiated at the selected next point $x$, the simulator output is scored, and that point $x$ is added to the training set 402 with its associated score $y$ (step 424). Thereafter, the method is repeated from step 416 onwards. Step 416 is an update/re-training step in subsequent iterations, at which the score predictor 402 is updated or retrained based on the updated training set 402.

The current example considers the selection of a single point based on the acquisition function. A single additional data point is obtained (the next parameter set and its actual score) and the scoring function 402 is updated based on this single additional data point. In other implementations, multiple points may be selected at each update step instead. Multiple points may, for example, be selected in a given iteration based on an acquisition function using a batched greedy optimisation as described at https://emukit.readthedoes.io/en/latest/api/emukit.core.loop.html#emukit.core.loop.candi date _point_calculators.GreedyBatchPointCalculator, and also in sec 19.4.3 of https://github.com/probml/pml-book/ releases/latest/download/book1.pdf.

Returning to decision block 417, there are various termination criteria that could be applied. For example, the method might terminate (426) following step 416 if it is determined from the score distribution 407 that the analysis objective has been satisfied (e.g. the PASS/FAIL boundary has been mapped with sufficient confidence, e.g. as determined when a minimum misclassification probability has been achieved throughout the parameter space, or some subset of the parameter space that is of interest). Alternatively or additionally, the method may terminate after some defined number of iterations.

The predicted PASS/FAIL boundary refers to the subset of the parameter space where $g(x)$ is zero or close to zero.

Figure 4C shows further details of the output of the score predictor 402. In this example, the score distribution 407 has a Gaussian form, defined by a mean $g_\mu(x)$ and a standard deviation $g_\sigma(x)$ that vary as functions of $x$ that are outputted by the score predictor 402. Here, the computed mean $g_\mu(x)$ is interpreted as the predicted score 406, and the standard deviation $g_\sigma(x)$ denotes a confidence in the predicted score 406.

For conciseness, the $\mu$ is dropped in the following description, and the mean score is denoted by $g(x)$.

The acquisition function, denoted by reference numeral 430, is defined based on "misclassification probability". The misclassification probability for a predicted score is the probability that the *sign* of the score is wrong (or, more generally, the probability that the predicted score is on the wrong side of the pass threshold compared with the true score that would be obtained by instantiating the scenario at x). This is not the same as the confidence in the predicted score 406 itself: the misclassification probability does depend on the standard deviation $g_\sigma(x)$, but this is not the only factor; it also depends on *how close x is* to a PASS/FAIL boundary. A relatively high standard deviation (low confidence) at *x* may still imply a low misclassification probability if the predicted score *g(x)* is close to 1 or -1; on the other hand, a relatively low standard deviation may still imply a high misclassification probability if the predicted score *g(x)* is close to zero.

Taking the above factors into account, the acquisition function 430 is defined as:

$$f(x) = |g(x)|/g_\sigma(x).$$

That is, the acquisition function 430 is defined as the modulus of the predicted score divided by its computed standard deviation.

The next point to is selected at step 420 above as:

$$x = \operatorname{argmin}_x f(x)$$

That is, the next point *x* is selected as that which minimizes the acquisition function *f(x)*.

As can be seen, as the predicted score in the numerator can decrease the value of the acquisition function as the predicted score moves closer to zero (this is true for both positive and negative scores), but an increase in the predicted standard deviation can also decrease the value of *f(x)*.

In a Gaussian model, the misclassification probability is given by

$$p(x) = \Phi(-f(x)).$$

Here, $\Phi$ denotes the standard normal distribution (Gaussian with mean and variance of one). The misclassification probability does not necessarily need to be computed; the method can be applied with the acquisition function *f(x)* directly. As can be seen, the misclassification probability increases as *f(x)* decreases, such that the argmin of *f(x)* (or, equivalently, the argmax of *-f(x)*) corresponds to the point of greatest misclassification probability.

Points which have already been explored will have $g_\sigma \approx 0$ hence *f(x)* should be small and these points will not be chosen. In practice there can be numerical instabilities when *g(x)* is also close to zero. This can be mitigated in various ways, for example, by sampling from the acquisition function rather than the argmin of the acquisition. Another technique excludes points based on a desired accuracy level. For example, a credible interval may be determined for the failure probability (an interval in which the failure probability falls with some given probability, such as 0.95), and points *x* may be excluded if the credible interval falls within some predetermined range. When calculating the misclassification probability, a small constant may be added to the failure threshold when the mean associated with the credible interval is close to the threshold. This will mitigate the effect of *g(x)* and *g(x)* both being close to zero simultaneously.

Figure 4D shows an extension of the method to a rule set comprising multiple rules. As noted, in this case, a score predictor 402-i is constructed for each rule i under consideration. In the multiple rules case, the steps of Figure 4B are modified as shown in Figure 4D. An component acquisition function *f_i(x)* is defined as above for each rule i:

$$f_i(x) = |g_i(x)|/g_{\sigma,i}(x),$$

where $|g_i(x)|$ and $g_{\sigma,i}(x)$ denote the predicted mean and standard deviation variance for rule *i*

Each update is applied to a single rule only. With multiple roles, an overall "PASS" is obtained if and only if *all* rules are passed. On the other hand, an overall "FAIL" result is obtained if *any* of the rules is failed. The rule selection mechanism takes this into account, in order to accommodate multiple rules in the directed search process in the most efficient way possible.

At step 442, the method selects which of the rules to update as follows (index *j* denotes the rule selected at step 422). An overall acquisition function *f(x)* is determined (step 422) in terms of the component acquisitions functions:

$$\text{If } g_i(x) > 0 \forall i \text{ then} f(x) = f_j(x) \text{ where } j = \operatorname{argmin}_i f_i(x),$$

$$\text{If } g_i(x) \le 0 \exists i \text{ then } f(x) = f_j(x) \text{ where } j = \operatorname{argmax}_{i \in \hat{p}} f_i(x), \text{ where } \hat{p} = \{i : g_i(x) \le 0\}.$$

The rationale is as follows. If all rules are currently predicted to be passed for a given parameter set *x*, then a misclassification occurs if any one of those rules is, in fact, failed at that point *x* in the parameter space. Therefore, in the first case above (all rules predicted to be passed at $x$), the rule with the highest misclassification probability is selected. This is the rule that is most likely to change the overall outcome when a simulation is actually performed, and therefore the most "promising" in terms of discovering a parameter combination $x$ on which an overall FAIL result is obtained (finding a failure point is the first step towards mapping out the PASS/FAIL boundary, assuming the parameter space contains at least one failure region).

On the other hand, if at least one rule is predicted to be failed at a given $x$ with relatively high confidence, there is little point in incurring the significant expense of evaluating other rules at that point (requiring expensive simulations and analysis): the overall "FAIL" outcome is unlikely to change (a confident predicted failure on rule $j$ at point $x$ implies a confident predicted overall fail). Somewhat counterintuitively, it is therefore the rule that is predicted to be failed with the *lowest* misclassification probability that is taken to be indicative of the overall probability of misclassification (because an overall misclassification result would require the most confident failure prediction to be wrong). The set $\hat{p}$ is the subset of rule(s) for which a failure outcome is predicted at $x$, and the overall acquisition function is defined at that point by the rule for which a failure outcome is predicted with the *lowest* misclassification probability.

At step 444, the next point in the parameter space is selected in the same manner as above:

$$x = \mathrm{argmin}_x f(x) = \mathrm{argmin}_x f_j(x),$$

with $j$ defined as above. Thus, in addition to selecting the next point $x$, one of the rules, $j$ is also selected (as the rule that determines the acquisition function $f(x)$ at the selected point).

At step 446, the scenario is instantiated at the next point $x$. However, the simulator output need only be scored on rule $j$, as it is only the score predictor 402-j for rule $j$ that is updated. This requires a simulation, but does not require a multi-rule scoring analysis (which is expensive in and of itself).

In principle, a situation can arise where the next point $x$ has been previously explored, but only evaluated for some different rule $k \neq j$. In this case, the simulation at $x$ does not need to be repeated, and the existing simulator output can be accessed and scored at this point for rule $j$. In practice, this is almost impossible because choosing the same float when sampling from a continuous distribution is extremely unlikely.

Alternatively, every rule may be scored on every run, and the Gaussian process models for all rules may be updated after the scoring of each run.

Figure 4E shows the negative of an acquisition function $-f(x)$ visually plotted in a single $x$ dimension (recall that the misclassification probability is a function of $-f(x)$; a maximum in $-f(x)$ implies maximum misclassification probability, and corresponds to a minimum in $f(x)$). The point $x$ of maximum misclassification probability (overall misclassification probability in the case of multiple rules) is selected for the next simulation, leading to reduced uncertainty at that point when the scoring model is updated based on the robustness score that is obtained.

As briefly discussed, when a Gaussian process model is used, the score prediction assumes that the scoring function $g(x)$ is continuous over the parameter space. If the rules are constructed in a way that materially breaches this assumption, the resulting discontinuities in the parameter space can prevent the Gaussian process search from converging. These considerations apply to other forms of model, and are not unique to Gaussian processes.

Without careful design, discontinuities in $g(x)$ are more likely to arise in more complex scenarios where certain rules might only be naturally applicable for some part (or parts) of a run.

For example, consider an ego vehicle waiting on a minor road at a T-junction to join a traffic stream on a major road. Before the ego vehicle joins the traffic stream, the "safe distance" rule is not naturally applicable between the ego vehicle and other vehicles in the traffic stream, as that is not a lane following context; the rule only becomes pertinent once the ego vehicle enters the road and joins the traffic stream.

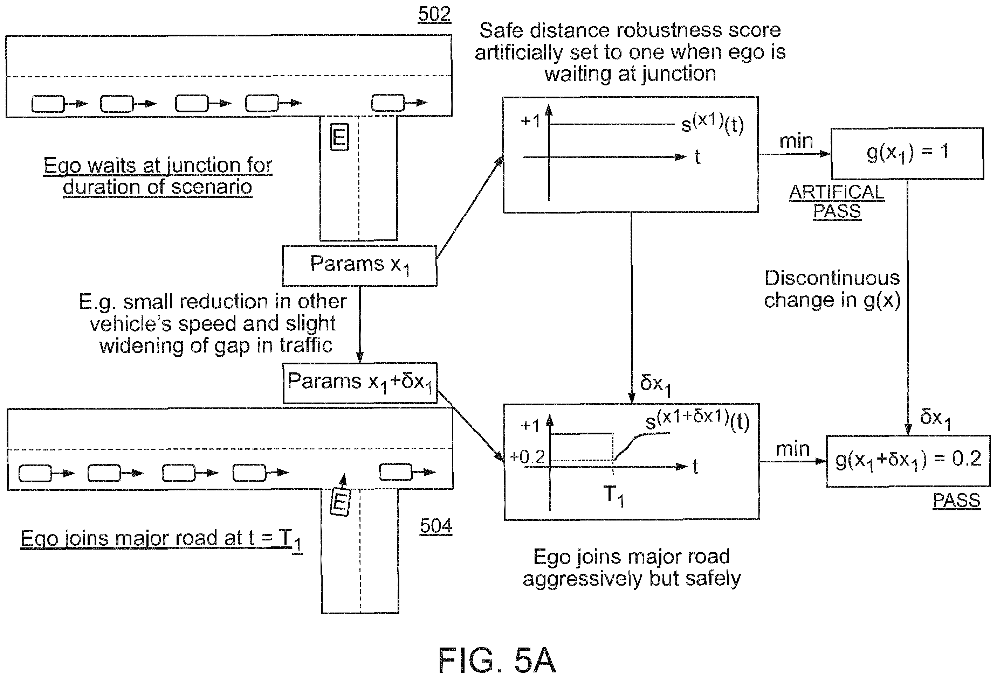

A simple way to address this would be to define a set of circumstances in which a given rule applies, and to set the rule robustness to a default value of 1 whenever the rule is inapplicable. For example, the safe distance rule may only be "activated" when the go agent crosses the junction line between the major and minor roads. Prior to that, the rule is inactive and set to a default value of 1. This is superficially appealing; generally the system designer/tester is only interested in failure cases. A "maximum" pass result of 1 is, in that context, the least interesting result, and it would therefore appear natural to extend a score of one to circumstances when the rule is inapplicable. However, in the context of the directed exploration method described above, this can cause significant convergence issues, as will now be illustrated with reference to FIGS. 5A to 6.

FIG. 5A shows first and second instances of a scenario 502, 504 with very similar parameters: $x_1$ and $x'_1 = x_1 + \delta x_1$ respectively. The "safe distance" rule discussed above is considered in this context.

The scenario commences with an ego vehicle, E, waiting at a junction on a minor road to join a traffic stream on a major road. In the first instance 520, the parameters $x_1$ are such that the ego vehicle E is never able to find an opportunity to join the major road, and simply waits at the junction for the entirety of the run (this does not necessarily mean that it would have been impossible for any ego vehicle to join the major road safely; it could also be that the ego vehicle is exercising 'excessive' caution).

By contrast, in the second instance 504, the ego vehicle E determines that it is able to safely join the traffic stream. This has arisen because the small difference $\delta x_1$ between the two parameter sets causes, for example, a slight reduction in the speed of the vehicles on the major road and/or a slight widening of a gap in the stream of traffic.

In the first instance 502, the robustness score for the safe distance rule $s^{(x1)}(t)$ is artificially set to zero whilst the ego vehicle is waiting at the junction, and thus remains at one throughout the scenario. In the second instance 504, the robustness score $s^{(x'_1)}(t)$ suddenly drops as the ego vehicle E joins the major road, as from that point on the score is calculated as set out above. In this example, the robustness score $s^{(x'_1)}(t)$ reaches its minimum value of 0.2 at $t = T_1$.

Thus, the first parameter set is assigned an overall score of $g(x_1) = 1$ whilst the second parameter set is assigned an overall score of $g(x'_1) = g(x_1 + \delta x_1) = 0.2$. Both outcomes are a "PASS" overall on the safe distance rule (as the score never falls below zero). However, a discontinuity has arisen in the scoring function $g(x)$ in that a small change in the variable has caused a large and sudden change in the score. The pass in the first instance 502 is 'artificial' in the sense that the safe distance rule was never actually applicable.

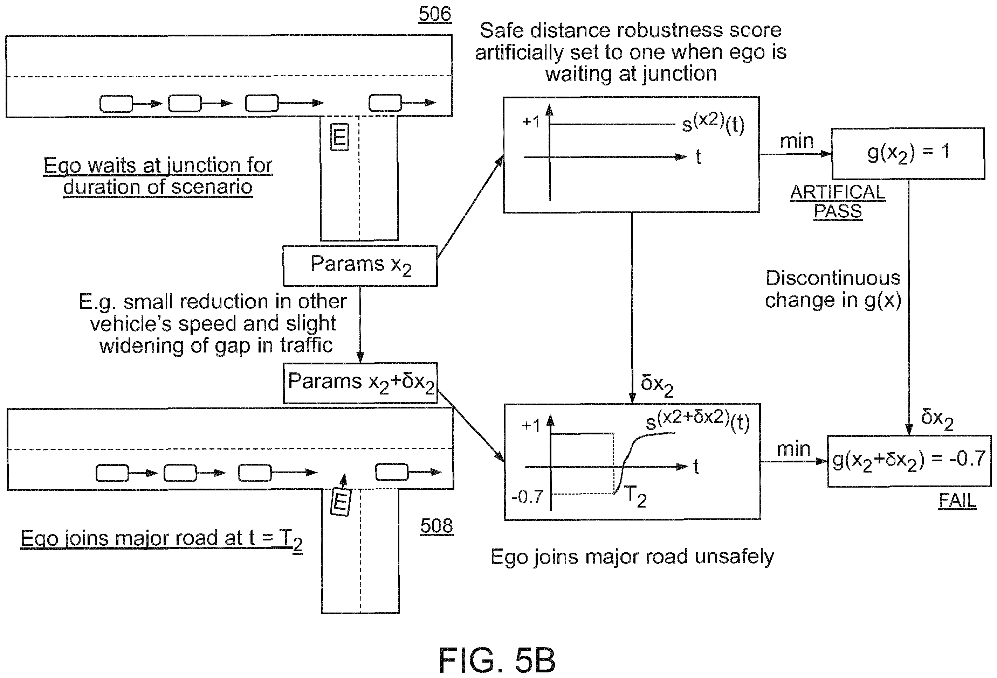

FIG. 5B illustrates a similar situation, where for a given parameter set $x_2$, the ego vehicle, once again, never joins the major road, resulting in an overall score of one (third instance 506). In this case, a small change in $x_2 \rightarrow x'_2 = x_2 + \delta x_2$ causes the ego vehicle E to pull out unsafely, resulting in an overall robustness score of -0.7 (the minimum value at time \$T\_2\$), and an overall "FAIL" (fourth instance 508). Here, a discontinuity in $g(x)$ has arisen across the PASS/FAIL boundary in the parameter space.

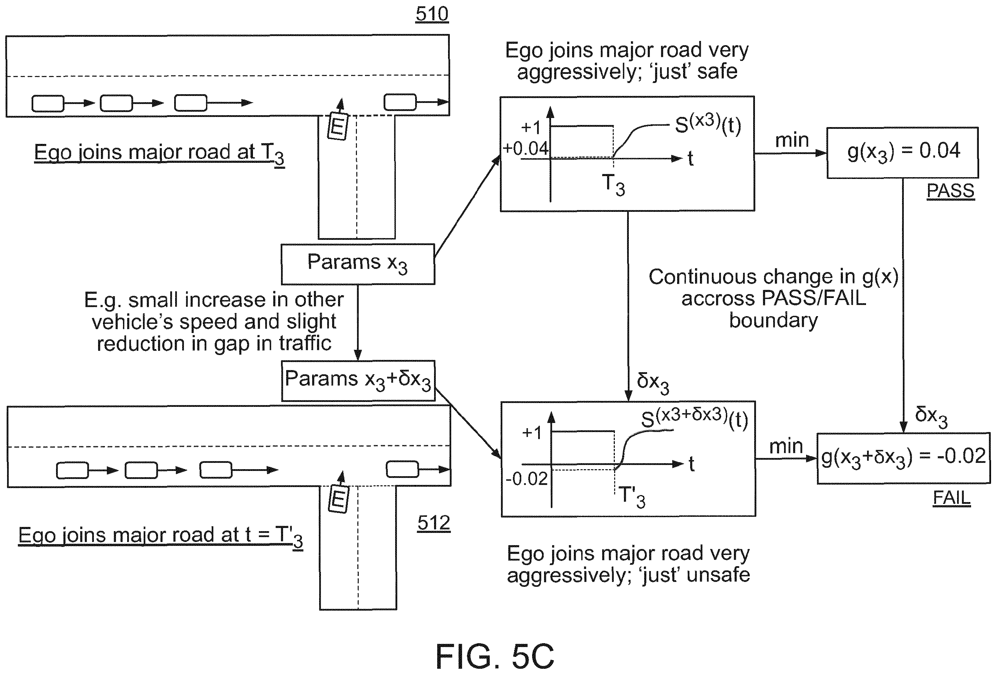

FIG. 5C, by contrast, illustrates fifth and sixth instances 510, 512 defined by parameters sets $x_3$ and $x'_3 = x_3 + \delta x_3$ where $\delta x_3$ is again small. In the fifth instance 510, the ego vehicle E joins the stream of traffic in a way that 'just' passes the safe distance rule, in the sense that the robustness score $s^{(x3)}(t)$ falls very close to zero, to a minimum value of 0.04 at time $T_3$. In the sixth instance, the small change $\delta x_3$ does not materially alter the ego vehicle's behavior; the ego vehicle E still joins the traffic flow at a similar time, but now does so in a way that violates the safe distance rule (e.g. because the speed of the traffic flow has increased slightly and/or the gap in the traffic has reduced slightly). The robustness score $s^{(x'_3)}(t)$ now falls slightly below zero to a minimum value of -0.02 at time $T'_3$, meaning the ego vehicle E has 'just' failed on the safe distance rule. In contrast to FIGS. 5A and 5B, the change in the scoring function $g(x)$ is continuous across the 'true' PASS/FAIL boundary, in that the small change in the parameters $\delta x_3$ has caused only a small change in $g(x)$ from 0.04 to -0.02.

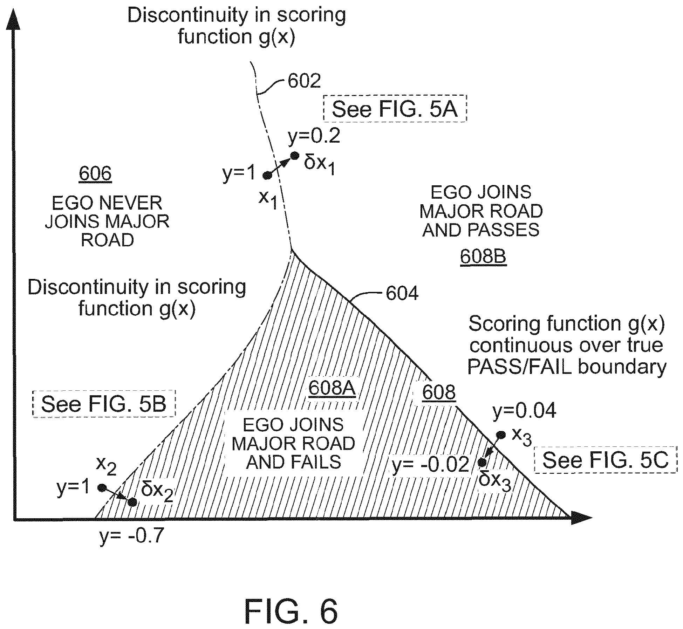

FIG. 6 summarizes the scoring outcomes of FIGS. 5A to 5C. A two-dimensional parameter space is shown, but the parameter space can have any number of dimensions in general. A first line segment 602 represents a discontinuity in the scoring function $g(x)$ for the safe distance rule; in a first region 606 of the parameter space to the left of this line 602, the conditions of the scenario are such that ego vehicle E never joins the traffic stream; in a second region 608 to the right, the ego vehicle does join the traffic stream at some point. Points $x_1$ and $x'_1 = x_1 + \delta x_1 +$ (FIG. 5A) are shown either side of this line 602, as are points $x_2$ and $x'_2 = x_2 + \delta x_2$ (FIG. 5B).

By contrast, a second line segment 604 denotes the true PASS/FAIL boundary. In a third 'fail' region 608A to the left of this line 604, the conditions of the scenario are such that the ego vehicle E joins the major road but fails the safe distance rule; in a fourth 'pass' region 608B to the right, the ego vehicle E joins the major road and passes. The third and fourth regions 608A, 608B are subsets of the second region 608. The scoring function $g(x)$ changes continuously across the true PASS/FAIL boundary 604, with $x_3$ (FIG. 5C) shown just to the right of the boundary 604 and $x'_3 = x_3 + \delta x_3$ shown just to the left.

The Gaussian process methodology described above is based on an assumption that the scoring function $g(x)$ is continuous. The discontinuity 602 that has been created by artificially setting a rule to one when it is not inherently applicable violates this assumption, and can prevent the directed search from converging. This applies to any rules, and to other forms of directed search that assume a continuous scoring function.

To address the aforementioned convergence problem, rules are instead assigned a special, non-numerical value ('not a number' or 'NaN') in conditions where they are not applicable. The 'min' function is now defined so that $g(x) = $ nan if the robustness score remains NaN-valued throughout the entire duration of the scenario; if the robustness score is numerical at any point, the overall score is equal to the lowest numerical robustness value. For the safe distance rule example, the robustness score is set to be NaN valued at any time at which the ego vehicle E is waiting at the junction. Once the ego vehicle joins the major road, e.g. by crossing a defined junction line, the robustness score becomes numerical, and is computed as set out above.

Another benefit of NaN results is that they are more informative to an expert, expressly distinguishing, in the value of the robustness score, between circumstances in which the rule applies and is passed, and circumstances where the rule does not apply.

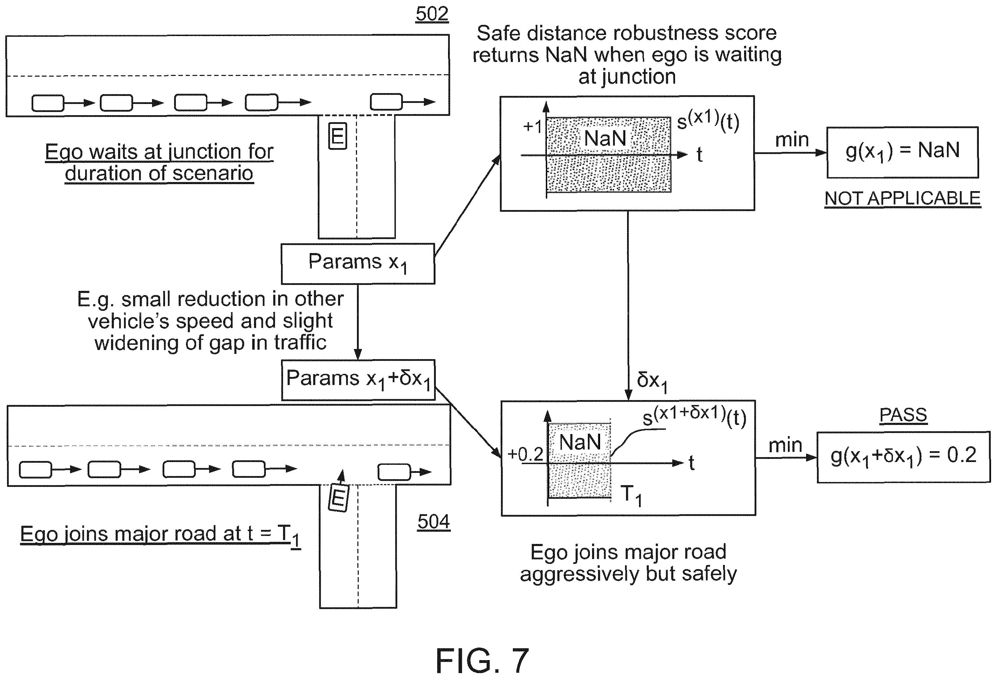

FIG. 7 shows the first and second instances 502, 504 of FIG. 5A, but now scored with robustness scores that can be NaN-valued. For the first instance 502, the robustness score $s^{(x_1)}(t)$ remains NaN-valued at all times, hence $g(x_1) = \text{nan}$. For the second instance, $g(x_1') = 0.2$ as before.

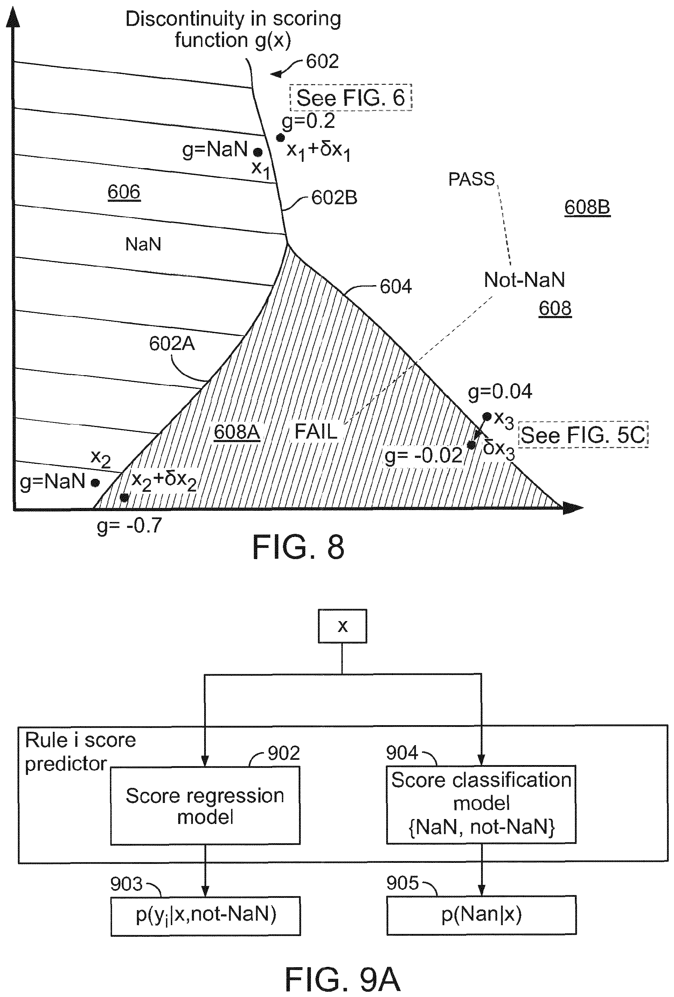

FIG. 8 shows the parameter space of the scenario as per FIG. 6; the difference is that the scoring function $g(x)$ is now NaN-valued in the first region 606. The first line segment 602 now denotes the boundary between the first region 606 in which the scoring function $g(x)$ is NaN-valued and the second region 608 in which it has a numerical value (e.g. float-valued), referred to as the 'NaN/float' boundary. The NaN/float 602 is divided into two sections: a first section 602A between the NaN region 606 and the FAIL region 608A and a second section 602B between the NaN region 606 and the PASS region 602B.

The directed search method above cannot be directly applied with a scoring function $g(x)$ that can be NaN-valued. However, the scoring function $g(x)$ now distinguishes explicitly between a 'PASS' outcome and a 'NOT APPLICABLE' (NaN) outcome, it becomes possible to model the discontinuity 602 explicitly using a hierarchical model.

With a Bayesian hierarchical approach, two models are learned for each rule, as shown in FIG. 9A.

FIG 9A shows hierarchical score predictor formed of a score regression model 902 and a score classification model 904. The score classification model 904 is trained to predict, for a given $x$, a first probability distribution 903 of the form:

$$p(y_i = \text{nan}|x),$$

denoting the probability that the scoring function is NaN-valued given input $x$. The probability that the scoring function is numerical is given by:

$$p(y_i \neq \text{nan}|x) = 1 - (y_i = \text{nan}|x),$$

The score regression model 902 is configured in the same way as the score predictor 404, but is now computing a second probability distribution 905 of the form:

$$p(y_i|x, y_i \neq \text{nan}),$$

denoting the conditional probability of the score value $y_i$ *given that $y_i$ is not NaN-valued.*

Any probabilistic classification and regression models can be used in this context. The training of the models 902, 904 is described in detail below.

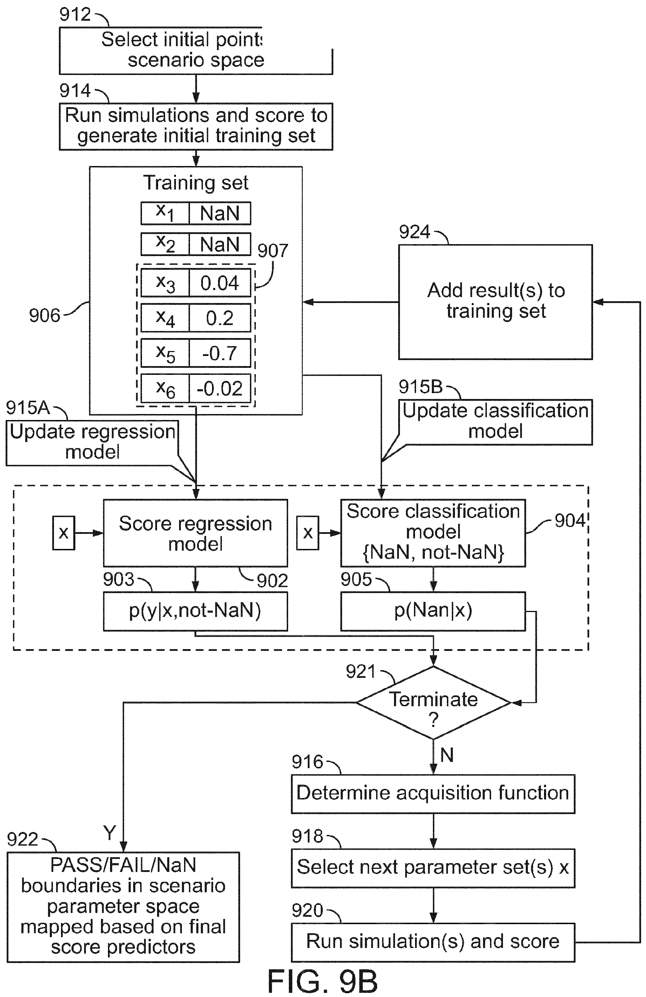

FIG. 9B shows a modified directed search method using the hierarchical models of FIG. 9A.

As in the method of FIG. 4A, an initial set of points in the parameter space is selected (step 912) and simulations are performed for each of the initial parameter sets (step 914). As before, the result is a training set 904 of $(x, y_i)$ example pairs, with the difference that $y\_i$ can now be NaN valued. The full training set 904 is used to train the classification model 904 as a probabilistic binary classifier on the {NAN, NUMERICAL}. For the purpose of training the classification model 904, the actual numerical score values are not germain; all parameter sets in the training set 904 are signed to the NUMERICAL (not-NaN) class.

The regression model 902 is trained only on the subset 907 of training examples that are numerically valued.

Thereafter, the method proceeds as before, but with a modified acquisition function that is described below. At step 916, the modified acquisition function is determined based on the first and second distributions 903, 905. At step 918, the next point (or points) to explore is selected based on the modified acquisition function and, at step 920, the scenario is instantiated and scored at that (or those) points. The latest result(s) is added to the training set 906, and the method repeats. The classification model 904 is always updated at this point (step 914B). The regression model 902 is only updated (step 914A) if a non-NaN-valued example has been added to the training set 906 (as it is only trained on the subset of numerically-valued examples).

If, following the update of the models at steps 912a, 915b, a termination condition is satisfied (decision block 921), the method terminates (step 922).

When the method eventually terminates at step 922, the final regression and classification models 902, 904 serve to map out not only the PASS/FAIL boundary (FIG. 8, 604), but also (to a certain extent) the NaN/not-NaN boundary (FIG. 8, 602). This provides an accurate approximation of the behavior of the stack 100 under testing over the entire parameter space, in terms of {PASS, FAIL, NaN} outcomes for each rule, with as few simulations as possible. This, in turn, allows regions of the parameter space to be identified where it can be predicted, with confidence, that the stack 100 will not behave as expected, indicating some issue within the stack 100 that can now be identified and mitigated. This could be a region in which the stack 100 is predicted to fail when it ought to be capable of passing. This could also be an unexpected NaN region indicating, for example, that the ego vehicle is predicted to behave too cautiously (e.g. never joining the oncoming traffic flow in the junction examples above).

The modified acquisition function is determined at step 916 as follows. The *i* subscript is omitted for conciseness; with multiple rules, a modified acquisition function is determined for each rule as set out below.

The scoring function 9 may now be expressed as a mapping:

$$g : \mathcal{X} \to \mathbb{R} \cup \{\mathrm{nan}\}$$

where $\mathcal{X} = \mathbb{R}^n$ denotes the parameter space of a scenario and $\mathbb{R}$ denotes the set of real numbers. In other words, the overall score $y = g(x)$ can be numerical or NaN-valued.

Here, $n \geq 1$ is the dimensionality of the parameter space, where each parameter set $x \in X$ (or, strictly speaking, each parameter tuple) has one or more numerically-valued elements.

Let F denote a failure event and *N* denote a NaN event. Using logic notation, the approach described herein seeks to classify cases where $F \cap \overline{N}$ vs. cases where $\overline{F} \cup N$. In other words, a first category cases with a failure (and therefore a non-NaN) outcome vs. a second category of cases where the outcome is either a non-failure event (pass) or a Nan event.

As set out above, the first model 902 is a Gaussian Process (GP) regression model that provides $p(y|x, y \neq nan)$. This is trained by performing GP regression for the dataset 907, which may be expressed in mathematical notation as $\{(x, y)|y \neq \mathrm{nan}\}$.

The model for F can, in turn, be expressed as:

$$p(F \cap \overline{N}|x) = \int_{y<0} p(y|x, y \neq \mathrm{nan})(1 - p(y = \mathrm{nan}|x))dy.$$

This assumes the pass/fail threshold is defined by $g(x) = 0$. As will be appreciated, the definition can be extended to any threshold by integrating over the range of numerical $y$ values that are classified as failure.

Because $p(y|x, y \neq nan)$ is parameterised as a Gaussian distribution with mean $g_\mu(x)$ and standard deviation $g_\sigma(x)$, this can be written as

$$p(F \cap \overline{N}|x) = \Phi\left(-\frac{g_\mu(x)}{g_\sigma(x)}\right)(1 - p(y = \mathrm{nan}|x)),$$

where $\Phi$ is the standard normal CDF. If $p(F \cap \overline{N}|x) > 0.5$, $x$ is classified as 'interesting' ($F \cap \overline{N}$ or 'not-NaN and FAIL'), implying an overall overall prediction is that $x$ would result in a numerical score below the threshold; otherwise $x$ is classified as 'uninteresting' ($\overline{F} \cup N$), implying an overall prediction that $x$ would lead to either a numerical pass score or a NaN score. Further explanation of the 'interesting/uninteresting' terminology is provided below.

Therefore, the probability of misclassification acquisition function can be calculated as follows:

- if classified as $F \cap \overline{N}$ then misclassification probability is $p(\overline{F} \cup N|x) = 1 - p(F \cap \overline{N}|x)$
- if classified as $\overline{F} \cup N$ the misclassification probability is $p(F \cap \overline{N}|x)$.

This, in turn, allows the modified acquisition function to be defined in terms of the first and second distributions 903, 905 as:

$$\min(p(F|x, \overline{N})p(\overline{N}|x), 1 - p(F|x, \overline{N})p(\overline{N}|x))$$

,

where

$$p(F|x, \bar{N}) = \Phi \left( \frac{-g_\mu(x)}{g_\sigma(x)} \right),$$

with the mean $g_\mu(x)$ and standard deviation $g_\sigma(x)$ of the first distribution 903 as provided by the regression model 902, and

$$p(\bar{N}|x) = 1 - p(y = \mathrm{nan}|x)$$

as provided by the classification model 904.

The definition of 'misclassification' in this context is somewhat nuanced. Misclassification is defined with respect to the 'interesting' category (not-NaN and FAIL) vs. all other possible outcomes (the 'uninteresting' category): the aim of the directed search is to determine the PASS/FAIL boundary 604 and the FAIL/NaN boundary 602B with sufficient confidence; the search is not concerned with the PASS/NaN boundary 602A. Accordingly, a misclassification occurs if $x$ is classified as 'interesting' (not-NaN and FAIL) when the actual outcome is anything else (uninteresting). The acquisition function does not distinguish between different 'uninteresting' outcomes; hence, the definition of misclassification probability in the first bullet point above. A misclassification also occurs if the actual outcome for $x$ is 'interesting' (not-NaN and FAIL), but it has been classified as 'uninteresting' (implying a predicted outcome of anything other than 'not-NaN and FAIL'); hence the definition of misclassification probability in the second bullet point.

On the other hand, if the most probable outcome for $x$ is 'not-NaN and PASS', but the actual outcome is NaN, this is *not* considered a misclassification (and vice versa). To give an example, suppose $x$ has been classified as PASS with $p(F|x, \bar{N}) = 0.1$ and $p(\bar{N}|x) = 0.51$. This is a state of near-maximum entropy between the PASS and NaN classes, with a 0.49 probability that the parameter set $x$ would actually lead to a NaN outcome in the simulator rather than the predicted PASS (so almost 50/50 either way). However, the probability of $x$ leading to a FAIL outcome in the simulator is only 0.51*0.1=0.051 (just over 5%). The search is only concerned with the latter metric, and the high degree of uncertainty as between the PASS and NaN classes does not contribute to the modified acquisition function. This is a logical choice from the perspective of a system designer or engineer; if they can be highly confident that a given parameter choice $x$ will lead to PASS or 'not applicable' outcome on a given rule, there is little to be gained in exploring that rule further at $x$ (of course, that is not to say that scenario instances with a 'not applicable' outcome on a given rule are of no interest at all; for example, if an ego vehicle is being too hesitant or conservative waiting at a junction, leading to a NaN result on some rule that only applies when the ego exits the junction, the underlying ego behavior may well be of interest to the expert; but rather than trying to explore this in terms of PASS/NaN outcomes on the rule that is inapplicable at the junction, the correct approach would be to design a rule that targets the desired behavior directly in terms of PASS/FAIL outcomes and perform a directed search with respect to that rule, which could, for example, be some progress metric that applies whilst the ego vehicle waits at the junction and results in a FAIL outcome if the ego vehicle is determined to have waited for 'too long' before joining the major road in a given set of circumstances).

Note that the 'interesting/uninteresting' terminology refers to the predicted outcome in a testing context, and reflects the special status of the 'not-NaN and FAIL' outcome. A point $x$ with $p(F \cap \bar{N}|x) = 0.49$ belongs to the uninteresting category, because the overall prediction is that the result will be uninteresting (i.e. something other than 'not-Nan and FAIL'); nevertheless, there is a 49% probability that the outcome will actually be interesting, and such a point could well be selected as the next point to explore if 49% is the highest overall misclassification probability.

Applying the above definition of the modified acquisition function, the next point $x$ is determined as that most likely to have been misclassified with respect to the FAIL category vs. all other categories:

$$\mathrm{argmax}_x \min(p(F|x, \bar{N})p(\bar{N}|x), 1 - p(F|x, \bar{N})p(\bar{N}|x))$$

This considers the selection of a single next point in each iteration for simplicity. Alternatively, multiple points may be selected for the next iteration, e.g. using the batched greedy optimisation described above.

It is useful to note that, when $p(y = \mathrm{nan}|x) = 0$, the modified acquisition function reduces, as expected, to the simpler, non-hierarchical form described above:

$$\min \left( \Phi \left( -\frac{g_\mu(x)}{g_\sigma(x)} \right), 1 - \Phi \left( -\frac{g_\mu(x)}{g_\sigma(x)} \right) \right) = \Phi \left( -\frac{|g_\mu(x)|}{g_\sigma(x)} \right)$$

Multiple rules can be combined using the method of FIG. 4D, but replacing the simpler form of the acquisition function with the modified acquisition function for each rule.

References herein to components, functions, modules and the like, denote functional components of a computer system which may be implemented at the hardware level in various ways. A computer system comprises execution hardware which may be configured to execute the method/algorithmic steps disclosed herein and/or to implement a model trained using the present techniques. The term execution hardware encompasses any form/combination of hardware configured to execute the relevant method/algorithmic steps. The execution hardware may take the form of one or more processors, which may be programmable or non-programmable, or a combination of programmable and non-programmable hardware may be used. Examples of suitable programmable processors include general purpose processors based on an instruction set architecture, such as CPUs, GPUs/accelerator processors etc. Such general-purpose processors typically execute computer readable instructions held in memory coupled to or internal to the processor and carry out the relevant steps in accordance with those instructions. Other forms of programmable processors include field programmable gate arrays (FPGAs) having a circuit configuration programmable through circuit description code. Examples of non-programmable processors include application specific integrated circuits (ASICs). Code, instructions etc. may be stored as appropriate on transitory or non-transitory media (examples of the latter including solid state, magnetic and optical storage device(s) and the like). The subsystems 102-108 of the runtime stack Figure 1A may be implemented in programmable or dedicated processor(s), or a combination of both, on-board a vehicle or in an off-board computer system in the context of testing and the like. The various components of Figure 2, such as the simulator 202 and the test oracle 252 may be similarly implemented in programmable and/or dedicated hardware.

**Experiments**

**Benchmark tasks**

We evaluate our methodology on two benchmark problems where the system performance is partially undefined and for which $p_f$ can be calculated analytically.

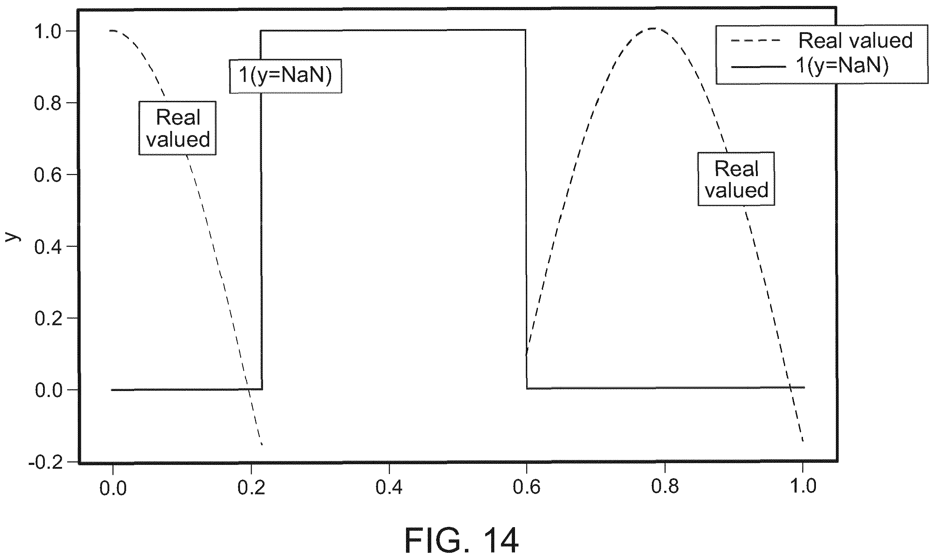

*Toy function* For illustration, a toy function of system performance (plotted in FIG. 14) is defines as

$$g(x) = \begin{cases} \text{NaN} & \text{if } 0.215 < x < 0.6, \\ \cos(8x) & \text{otherwise,} \end{cases} \tag{3}$$

where the uncertain variable x is distributed with $p(x) = \mathcal{U}[0, 1]$.

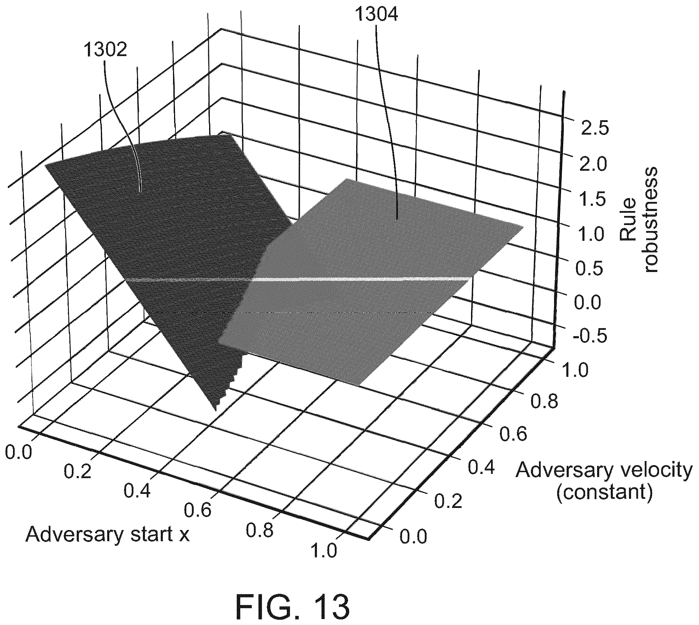

*Autonomous driving (AD)* IN addition, a mathematical model of an autonomous vehicle joining a main road at a T-junction is considered where the thresholded minimum lateral distance between the autonomous vehicle and an approaching vehicle is given by the performance function (plotted in FIG. 13). This is given in Eqn. 4 below with input features normalised. ;

$$g(x_a, v_a) = \begin{cases} \text{NaN} & \text{if } d_{\min}(x_a, v_a) < d_{\text{threshold}} \text{ and } |x_a| < x_{\lim}, \\ d_{\min}(x_a, v_a) - d_{\text{threshold}} & \text{otherwise,} \end{cases} \tag{4}$$

where we have defined the closest approach distance between the vehicles as

$d_{\min}(x_a, v_a) = \max\left(-\left(x_a + \frac{v_a^2}{2a_{ego}}\right), 0\right)$ where $v_a$, $x_a$, $x_{\lim}$, $d_{\text{thre shold}}$, $a_{\text{ego}}$ and $v_a$ are physical variables parame-

terised by distributions shown alongside a full derivation in Annex A. Undefined values here represent scenarios when the autonomous vehicle decides not to join the main road, and so the lateral distance along the road is undefined.

FIG. 13 shows real valued performance as surface 1302 the undefined performance masked with $\alpha$ = 1.0 as surface 1304.

**Baselines**

The hierarchical GP (hGP) will be compared with the following baseline methodologies:

*Masked GP (mGP):* AK-MCS [4] with a regression GP where NaN values are masked with positive constant $\alpha > 0$, i.e.

$$\tilde{g} = \begin{cases} g(x) & \text{if } g(x) \neq \text{NaN}, \\ \alpha & \text{if } g(x) = \text{NaN}. \end{cases}$$

*Active GP Classification (GPC):* similarly to Kapoor et al. [8], we apply a GP classifier to classify the event $y_* < 0 \cap y_* \neq NaN$ and use this to replace the Kriging model in the AK-MCS active learning loop.

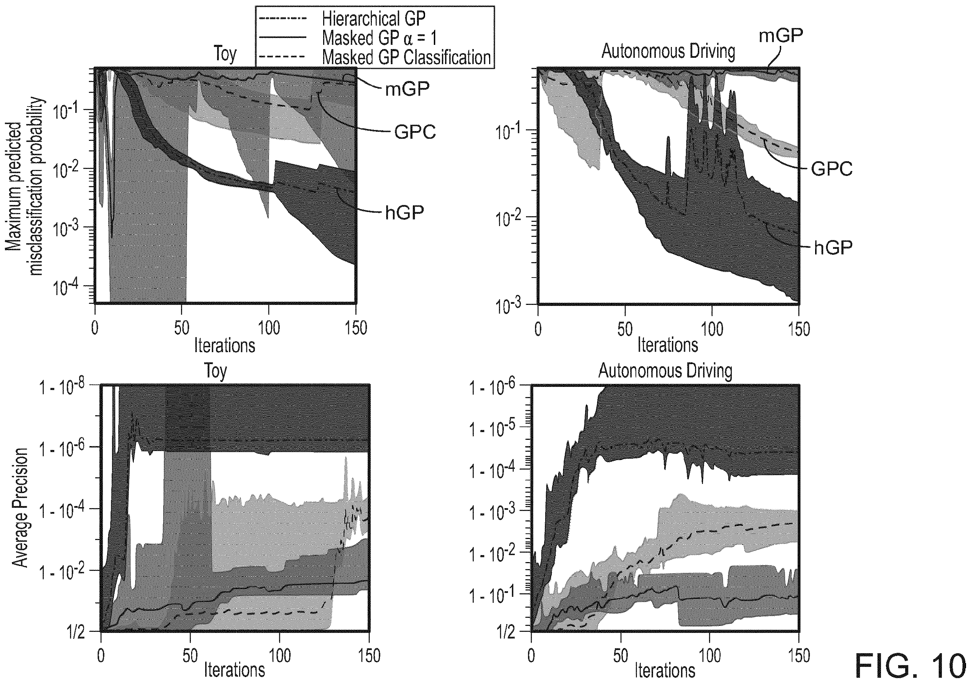

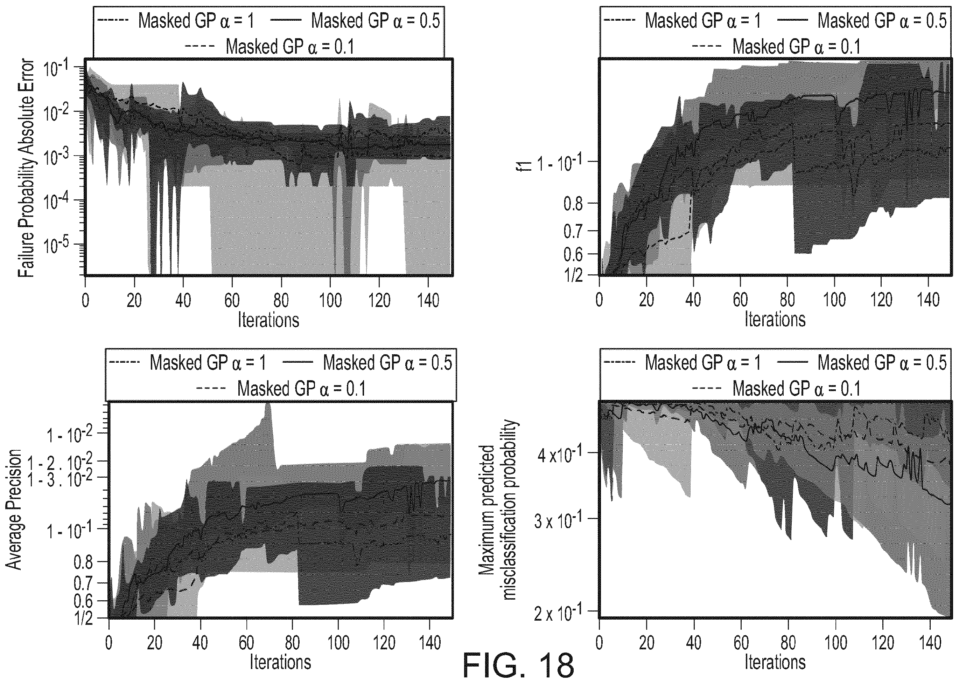

Hyperparameters for each algorithm are shown in Annex D. Metrics used to compare the models are described in further detail in Annex E.1 We repeat the experiments with different values of $\alpha$ ($\alpha = 0.1$, $\alpha = 0.5$, $\alpha = 1.0$) for the Masked GP in Annex E.3, where no significant differences are observed for different values of $\alpha$ (results for $\alpha = 1$ are shown in this section and in FIGS. 10 and 15-18).

## Model accuracy

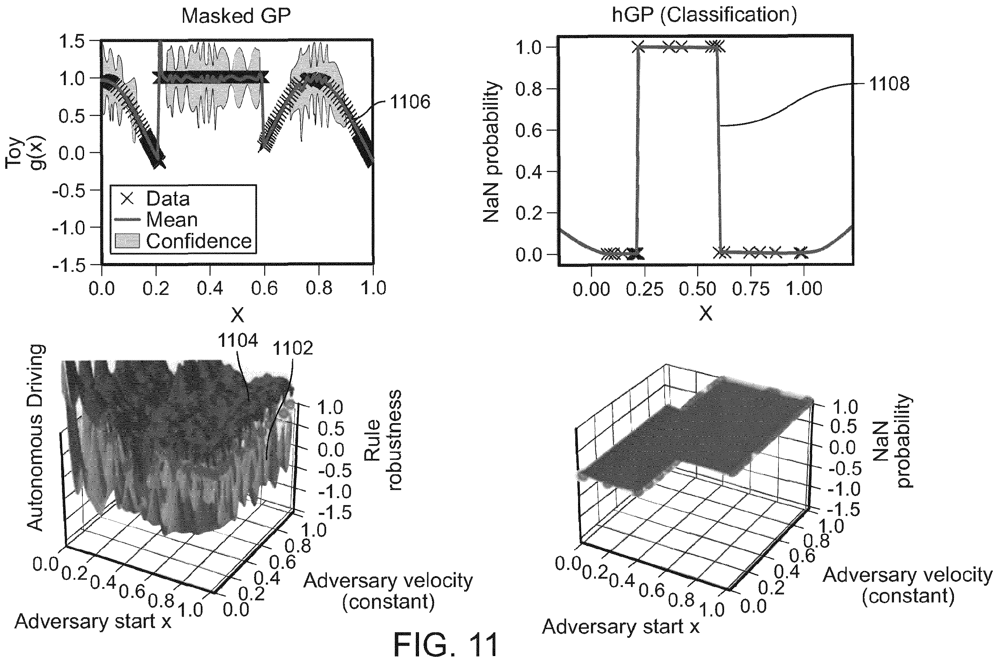

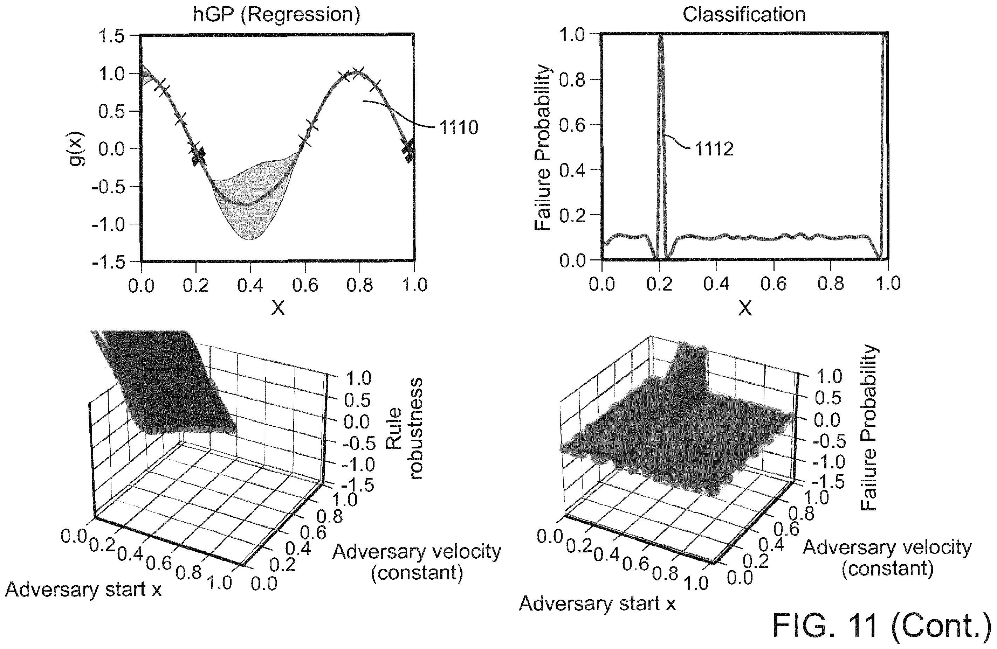

Firstly we run each algorithm for 150 iterations, i.e. neglect the termination criteria by setting $\eta = 0$, in order to study the accuracy of the models independently of the termination criteria. FIG. 10 shows the convergence of the failure probability and maximum predicted misclassification probability for the models for the Toy and Autonomous experiments. In addition, in Annex E.2 the convergence of the failure probability ($p_f$) and $F_1$ score for the models is shown. We observe that the convergence for the hGP is far faster than for the other models. All methodologies obtain a value for $p_f$ consistent with the analytically computed value when considering the error implied by the CoV. The convergence of $p_f$ and predicted misclassification probability for the masked GP is erratic, which is indicative of the misspecification of the model. Visualising the fitted models in FIG. 11, reveals that the low $F_1$ score and average precision are caused by the length scale for the masked GP becoming extremely short due to the discontinuity in the masked performance function, resulting in a large predicted variance and hence erroneous class scores. In FIG. 11, standard deviation prediction bounds are shown for the AD regression models as surfaces 1102 and 1104 respectively and for the toy function regression models as lines 1106, 1108, 1110, and 1112. Training data is shown as scatter points. This is expected as the hGP utilises more information about the magnitude of the performance function in order to make a more educated selection of the next point to query.

Overall, although all models eventually accurately estimate $p_f$, the hGP clearly provides a more accurate classification of the failure region, more stable training, and class probabilities which better represent the state of knowledge given the available data.

## Termination criteria

We analyse the ability of the models to terminate the active learning loop after an appropriate number of iterations by repeating the experiments in the previous section with the termination criteria enabled. Table 1 shows the number of samples, the $p_f$ and $F_1$ score when the algorithm terminates. Annex E.2 shows additional properties of the models upon termination. The hGP AK-MCS terminates with an accurate model in both experiments. For both experiments we see that GPC eventually learns an accurate model but does not terminate, because the maximum predicted misclassification probability remains high. In the toy function experiment the masked AK-MCS terminates far earlier while the $F_1$ score is low. The masked AK-MCS does not terminate for the AD experiment; the short length scale in the masked GP means that the predicted variance is large and a large number of iterations will be required to significantly reduce this. For the AD experiment all models obtain the correct value of $p_f$ within estimated error, however the $F_1$ score is much lower for the masked GP, suggesting the identified failure region is incorrectly located.

It is clear that due to the ability of the hGP to predict appropriate classification probabilities it is the only model which can reliably terminate when the model is sufficiently accurate.

Table 1: Comparison of $p_f$, $F_1$ score ($F_1$), and number of evaluations (N. Eval.) for all methodologies. N. Eval. includes the initial design of experiments (12 evaluations) and the number of iterations of the active learning algorithm. Number of iterations was capped at 150 and methods hitting the cap are marked with did not terminate (DNT). Mean and standard deviation for 5 repeats are shown.

| Methodology $p_f$ Avg. (Std. Dev.) $F_1$ | | N. Eval. | $p_f$ | $F_1$ | N. Eval. |
|---|---|---|---|---|---|
| | Toy function | | | Autonomous Driving | |
| Analytic | 0.036906 | N/A | N/A | 0.0382 | N/A | N/A |
| hGP (ours) | 0.036 (0.0051) | 1 (0.0011) | 56 (3.4) | 0.038 (0.0019) | 1 (0.0013) | 81 (21) |
| Masked GP | 0.019 (0.0031) | 0.66 (0.00013) | 20 (3.2) | 0.037 (0.0041) | 0.92 (0.063) | DNT |
| GPC | 0.037 (0.0026) | 0.99 (0.003) | DNT | 0.035 (0.0029) | 0.98 (0.0049) | DNT |

References

[1] Halil Beglerovic, Michael Stolz, and Martin Horn. Testing of autonomous vehicles using surrogate models and stochastic optimization. In 2017 IEEE 20th International Conference on Intelligent Transportation Systems (ITSC), pages 1-6. IEEE, 2017.

[2] Hans-Georg Beyer and Bernhard Sendhoff. Robust optimization-a comprehensive survey. Computer methods in applied mechanics and engineering, 196(33-34):3190-3218, 2007.

[3] Chao Dang, Pengfei Wei, Matthias GR Faes, Marcos A Valdebenito, and Michael Beer. Parallel adaptive Bayesian quadrature for rare event estimation. Reliability Engineering & System Safety, 225:108621, 2022. ISSN 0951-8320. doi: https://doi.org/10.1016/j.ress.2022.108621.

[4] B. Echard, N. Gayton, and M. Lemaire. AK-MCS: An active learning reliability method combining kriging and monte carlo simulation. Structural Safety, 33(2):145-154, 2011. ISSN 01674730. doi: 10.1016/j.strusafe.2011.01.002.

[5] GPy. GPy: A gaussian process framework in python. http://github.com/SheffieldML/GPy, since 2012.

[6] Yu Inatsu, Shogo Iwazaki, and Ichiro Takeuchi. Active learning for distributionally robust level-set estimation. In International Conference on Machine Learning, pages 4574-4584. PMLR, 2021.

[7] Shogo Iwazaki, Yu Inatsu, and Ichiro Takeuchi. Bayesian quadrature optimization for probability threshold robustness measure. Neural Computation, 33(12):3413-3466, 2021.

[8] Ashish Kapoor, Kristen Grauman, Raquel Urtasun, and Trevor Darrell. Active learning with gaussian processes for object categorization. In 2007 IEEE 11th international conference on computer vision, pages 1-8. IEEE, 2007.

[9] Philip Koopman and Michael Wagner. Challenges in autonomous vehicle testing and validation. SAE International Journal of Transportation Safety, 4(1):15-24, 2016.

[10] Philip Koopman and Michael Wagner. Toward a framework for highly automated vehicle safety validation. SAE Technical Paper, Tech. Rep, 2018.

[11] Mark Koren, Saud Alsaif, Ritchie Lee, and Mykel J. Kochenderfer. Adaptive stress testing for autonomous vehicles, 2019.

[12] S. M. Mahmud, Luis Ferreira, Md Hoque, and Ahmad Hojati. Application of proximal surrogate indicators for safety evaluation: A review of recent developments and research needs. IATSS Research, 41, 03 2017. doi: 10.1016/j.iatssr.2017.02.001.

[13] Robert E Melchers and André T Beck. Structural reliability analysis and prediction. John wiley & sons, 2018.

[14] M Moustapha, S Marelli, and B Sudret. A generalized framework for active learning reliability: survey and benchmark. arXiv preprint arXiv:2106.01713, 2021.

[15] Maliki Moustapha and Bruno Sudret. A two-stage surrogate modelling approach for the approximation of models with non-smooth outputs. In UNCECOMP 2019 Proceedings of the 3rd International Conference on Uncertainty Quatification in Computational Sciences and Engineering, pages 357-366. Institute of Structural Analysis and Antiseismic Research, National . . . , 2019.

[16] Demin Nalic, Tomislav Mihalj, Maximilian Baeumler, Matthias Lehmann, Arno Eichberger, and Stefan Bernsteiner. Scenario based testing of automated driving systems: A literature survey. In FISITA web Congress, 10 2020. doi: 10.46720/f2020-acm-096.

[17] Andrei Paleyes, Mark Pullin, Maren Mahsereci, Cliff McCollum, Neil Lawrence, and Javier González. Emulation of physical processes with emukit. In Second Workshop on Machine Learning and the Physical Sciences, NeurIPS, 2019.

[18] C.E. Rasmussen and C.K.I. Williams. Gaussian Processes for Machine Learning. Adaptive Computation and Machine Learning series. MIT Press, 2005. ISBN 9780262182539.

[19] Rui Teixeira, Maria Nogal, and Alan O'Connor. Adaptive approaches in metamodelbased reliability analysis: A review. Structural Safety, 89:102019, 2021.

[20] Jonathan Uesato, Ananya Kumar, Csaba Szepesvari, Tom Erez, Avraham Ruderman, Keith Anderson, Krishmamurthy, Dvijotham, Nicolas Heess, and Pushmeet Kohli. Rigorous agent evaluation: An adversarial approach to uncover catastrophic failures, 2018.

[21] Jingkang Wang, Ava Pun, James Tu, Sivabalan Manivasagam, Abbas Sadat, Sergio Casas, Mengye Ren, and Raquel Urtasun. AdvSim: Generating safety-critical scenarios for self-driving vehicles. CoRR, abs/2101.06549, 2021.

[22] Wanying Yun, Zhenzhou Lu, Yicheng Zhou, and Xian Jiang. AK-SYSi: an improved adaptive kriging model for system reliability analysis with multiple failure modes by a refined u learning function. Structural and Multidisciplinary Optimization, 59(1):263-278, 2019.

**Annexes**

**A Motivating example**

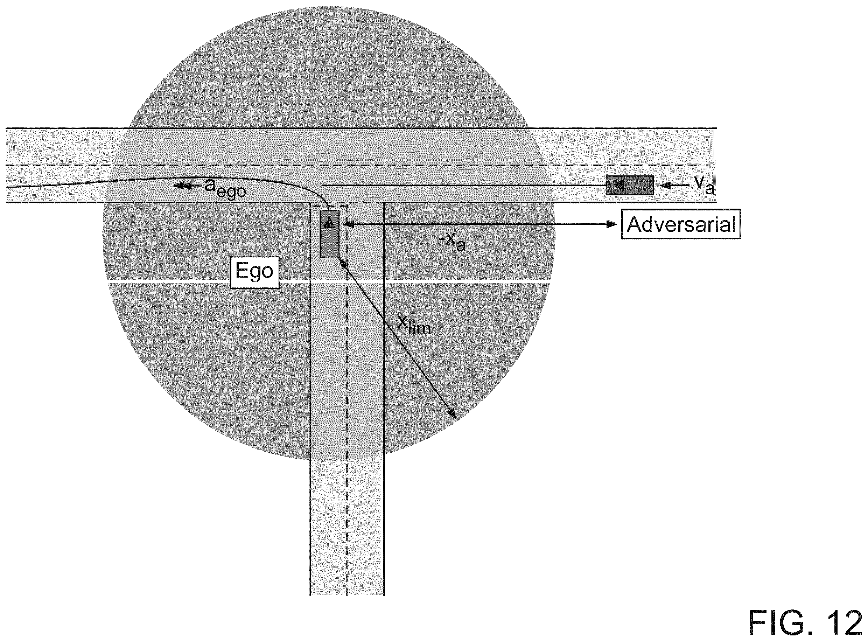

Consider the case of an autonomous vehicle (ego agent) waiting to join a road at a T-junction (See FIG. 12) where another vehicle (treated as an adversarial agent) is travelling on the road at constant velocity. The distance between the ego agent and the adversarial agent along the main road represents the closest distance between the vehicles. In this simulation vehicles travel on the left hand side of the road. Assuming that the autonomous vehicle behaves deterministically with respect to variables like the initial starting positions and velocities of the vehicles, one could specify a measure of safe system performance, for example the distance of closest approach between the autonomous vehicle and the other vehicles as a function of these variables. Then an engineer could use an optimisation algorithm to find the conditions which cause the closest distance to become dangerously small. However, in some cases the closest distance function could be undefined because the autonomous vehicle never joined the road at all, for example if the autonomous vehicle's planner deems the situation to be unsafe. In scenario based testing of autonomous vehicles such rule functions, which have the potential to be partially specified, are common [12, 16, 9, 10].

**A.1 Mathematical Model**

We consider a vehicle moving in the nearside lane at a constant velocity $v_a$, which has starting longitudinal position $x(t = 0) = x_a < 0$ relative to the ego vehicle. The ego vehicle will perceive the adversarial vehicle if the distance between the two vehicles is less than the limiting distance for the sensor ($x_{\text{lim}}$), otherwise a false negative detection will occur. The scenario will be considered safe provided the distance between the vehicles in the same lane is no less than a threshold $d_{\text{threshold}}$, corresponding to the stopping distance of a typical vehicle. Ego will attempt to merge into the nearside lane and accelerate at its maximum velocity $a_{\text{ego}}$ until it reaches $v_a$, however if ego perceives that this action will result in a collision due to the position and velocity of the adversarial vehicle then ego will not merge into the road and hence the longitudinal distance between the vehicles in the lane will be undefined. This is shown in FIG. 12. The ego vehicle is merging into a road in a left hand traffic system where the adversarial car is. In FIG.12, the circle represents the limits of the perception system of ego. The smallest safe distance between ego and the adversarial car, $d_{\text{threshold}}$, is not shown.

Modelling each vehicle as a particle moving in a one dimensional space, we can write the rule numerically as

$$g(x_a, v_a) = \begin{cases} \text{NaN} & \text{if } d_{\min}(x_a, v_a) < d_{\text{threshold}} \text{ and } |x_a| < x_{\text{lim}}, \\ d_{\min}(x_a, v_a) - d_{\text{threshold}} & \text{otherwise}, \end{cases}$$

where we have defined the closest approach distance between the vehicles as

$$d_{\min}(x_a, v_a) = \min_{t \in [0,\infty]} \left| \frac{1}{2} a_{\text{ego}} t^2 - (x_a + v_a t) \right| = \max\left( -\left( x_a + \frac{v_a^2}{2a_{\text{ego}}} \right), 0 \right). \tag{5}$$

A plot of the rule is shown in FIG. 13. The values for the fixed and random variables are shown in Table 2. In order to ensure that the scale of the performance function is appropriate for the GP hyperparameters we have chosen, we rescale the performance function by dividing by 20 resulting in performance values of lower magnitude.

Table 2: Random variables and parameters for T-junction experiment

| Variable | Distribution / Value |
| --- | --- |
| $x_a$ | $\mathcal{U}$[-100m, 0m] |
| $\upsilon_a$ | $\mathcal{U}$[10m, 15m] |
| $d_{threshold}$ | 20 m |
| $a_{ego}$ | 2 ms$^{-2}$ |
| $x_{lim}$ | 60 m |

## C. Hierarchical model details

In this section we provide additional details which describe the hGP model in further detail.

Let $X$ be a matrix containing all the $x$ in $D$ and $Y$ be a vector containing all the $y$ in $\mathcal{D}$. We assume that $p(y_*|x_*, \mathcal{D}, y_* \neq \text{NaN})$ follows a Gaussian process, i.e. $p(y_*|x_*, \mathcal{D}, y_* \neq \text{NaN}) = \mathcal{N}(\mu(x_*),\sigma(x_*))$ with

$$\mu(\boldsymbol{x}_*) = k(\boldsymbol{x}_*, \boldsymbol{X})^\top (k(\boldsymbol{X}, \boldsymbol{X}) + \sigma_{\text{noise}}^2 I)^{-1} Y,$$

$$\sigma^2(\boldsymbol{x}_*) = k(\boldsymbol{x}_*, \boldsymbol{x}_*) - k(\boldsymbol{x}_*, \boldsymbol{X})^\top (k(\boldsymbol{X}, \boldsymbol{X}) + \sigma_{\text{noise}}^2 I)^{-1} k(\boldsymbol{X}, \boldsymbol{x}_*),$$

where $k : \mathcal{X} \times \mathcal{X} \to \mathbb{R}$ is a positive definite kernel with $0 < k(x, x)| \leq 1$ for all $x \in X$, and $K(X_1, X_2)$ is matrix containing evaluations of the kernel at all points in $X_1$ and $X_2$, and $\sigma_{\text{noise}}$ is a small positive constant which should be inversely proportional to how deterministic the evaluation of y is.

We assume that $p(y_* = \text{NaN}|x_*, \mathcal{D})$ is given by a classification Gaussian process, i.e. $p(y_* = \text{NaN}|x_*, \mathcal{D}) = \int \text{probit}(h)p(h|x_*, \mathcal{D})dh = p_{\text{nan}}(x_*)$, where $p(h|x_*, \mathcal{D})$ is the predictive distribution of a Gaussian process which can be calculated using the expectation propagation method as described in Rasmussen and Williams [18].

To calculate the predicted probability of misclassification for our model, recall that we are trying to define the classification boundary between the failure event $y_* < 0 \cap y_* \neq \text{NaN}$ and the complementary case. We classify this event based on $p(y_* < 0, y_* \neq \text{NaN}|x_*, \mathcal{D}) = p(y_* < 0|x_*, \mathcal{D}, y_* \neq \text{NaN})p(y_* \neq \text{NaN}|x_*, \mathcal{D}) > 0.5$. Therefore, we calculate the predicted misclassification probability as

$$p_{\text{misclassification}}(\boldsymbol{x}_*) = \begin{cases} p(y_* < 0, y_* \neq \text{NaN}|\boldsymbol{x}_*, \mathcal{D}) & \text{if } p(y_* < 0, y_* \neq \text{NaN}|\boldsymbol{x}_*, \mathcal{D}) < 0.5, \\ 1 - p(y_* < 0, y_* \neq \text{NaN}|\boldsymbol{x}_*, \mathcal{D}) & \text{otherwise.} \end{cases} \tag{6}$$

where $p(y_* < 0, y_* \neq \text{NaN}|\boldsymbol{x}_*, \mathcal{D}) = \Phi\left(-\frac{\hat{\mu}(\boldsymbol{x}_*)}{\sigma(\boldsymbol{x}_*)}\right) p(y_* \neq \text{NaN}|\boldsymbol{x}_*, \mathcal{D})$, where $\hat{\mu}(x_*)$ and $\hat{\sigma}(x_*)$, are the predicted mean and standard deviation of the regression Gaussian process, and $\Phi$ is the standard normal CDF.

We calculate the conditional failure probability for the regression Gaussian process using

$$p(y_* < 0|\boldsymbol{x}_*, \mathcal{D}, y_* \neq \text{NaN}) = \Phi\left(-\frac{\hat{\mu}(\boldsymbol{x}_*)}{\sigma(\boldsymbol{x}_*)}\right)$$, where $\hat{\mu}(x_*)$ and $\hat{\sigma}(x_*)$ are the predicted mean and standard deviation of the regression Gaussian process.

It follows when $p(y_* \neq \text{NaN}|x_*, \mathcal{D}) = 1$, Eqn. 6 reduces to the form in Echard et al. **[4],** i.e.

$$p_{\text{misclassification}}(\boldsymbol{x}_*) = \Phi\left(-\frac{|\mu(\boldsymbol{x}_*)|}{\sigma(\boldsymbol{x}_*)}\right).$$

In this paper we only consider systems with a single performance function, however Yun et al. [22] demonstrate how acquisition functions for multiple performance functions can be combined when one is interested in a combined PTR measure for the performance functions.

We note that our modifications to the AK-MCS algorithm are fairly general and only involve changing the performance function model and acquisition function, and therefore these changes could possibly also be used with different active learning algorithms. We do not explore these possible applications here and instead leave this as a topic for future research.

## D. **Experimental hyperparameters**

For the classification part of the hierarchical GP we use a Matern52 kernel and fix the variance to $10^5$ as we find that this ensures a quick convergence in practice, and corresponds to a prior belief that the classification GP should model a deterministic function. For all regression GPs we use a Matern52 kernel with variance and lengthscale determined by optimisation on the training data with some relatively week constraints: the lengthscale falls in [0, 0.2] and variance falls in [0.5, 1]. For GPC we use a Matern52 kernel with variance 100 and length scale constrained within [0, 0.2]. For all GPs we set the likelihood variance to a small positive number ($0.005^2$), representing a belief that the system performance is deterministic. For AK-MCS we add nmc = $5 \times 10^3$ proposal samples when the maximum misclassification is below $\eta = 0.02$ and terminate the algorithm when the coefficient of variation is below 0.1, which are similar criteria to those used in Echard et al. [4]. In all experiments, the initial design of experiments is 12 samples. The Gaussian Process models were created using GPy [5], and Emukit was used for the active learning algorithms [17].

## E Additional Experimental Results

### E.1 Metrics

We use the following metrics, some of which were used in the original AK-MCS paper [4], and some of which we introduce specifically to measure aspects of performance related to our problem.

Maximum predicted misclassification ($\max_{x \in \mathcal{S}} p_{\text{misclassification}}(x)$) bounds the "risk" suffered over $p(x)$, and hence can be used to measure the convergence of the *internal* state of the algorithm, i.e. it does not require ground truth data. Used in Echard et al. [4].

Failure probability ($p_f$) can be used to measure if the identified failure region has the correct size, by comparing to the $p_f$ computed in some other way as ground truth (i.e. analytically). Used in Echard et al. [4].

Coefficient of Variation (CoV) is used to assess the algorithms internal uncertainty in the estimated $p_f$, and can be calculated as described in Algorithm 1. Used in Echard et al. [4].

$F_1$ score can be used to check if the identified failure region is correctly located in the space of x. We introduce this metric because in reliability problems the failure probability is usually low and hence the class distribution is imbalanced, and $F_1$ score is known to perform well in such cases. The $F_1$ score is defined as $F_1 = \frac{\text{precision} \times \text{recall}}{\text{precision} + \text{recall}}$ where precision and recall are measured with a test set of $10^5$ points, treating failure as the positive class and the safe region as the negative class. Used in Iwazaki et al. [7].

Average precision penalises an incorrectly located failure region in a similar way to $F_1$ score, however it has the additional advantage that the ranking of the predicted class scores is tested. Average precision is insensitive to correctly ranked but miscalibrated scores. It is also measured with a test set of 105 points.

### E.2 Additional figures

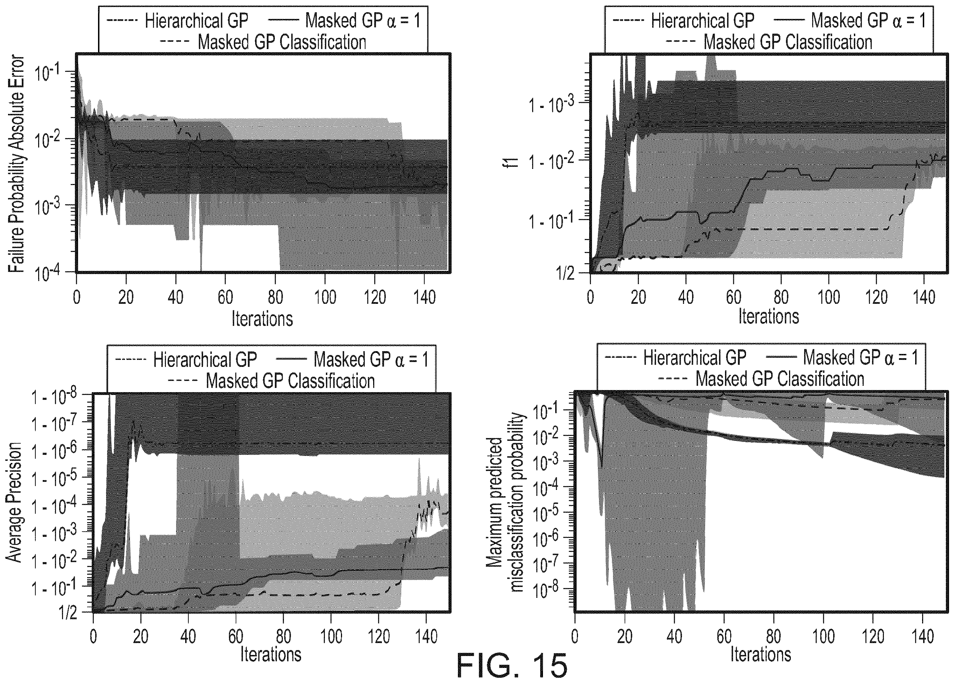

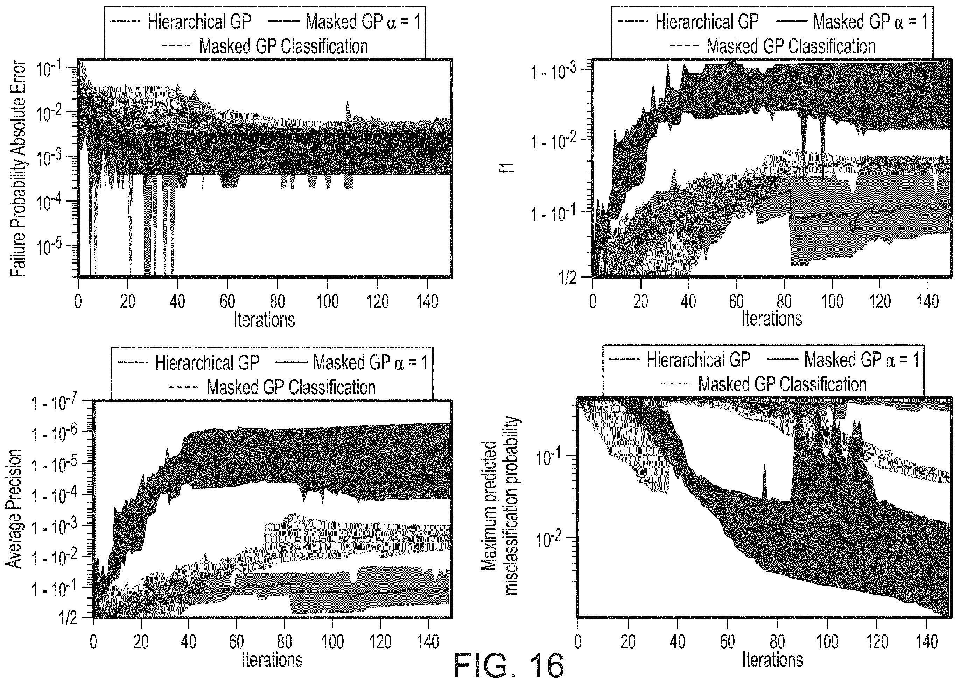

FIG. 15 and FIG. 16 show the convergence of the failure probability ($p_f$), maximum predicted misclassification probability, average precision and $F_1$ score for the models for the toy function and autonomous driving experiments. In FIG. 15 and FIG. 16, The shaded area represents the minimum and maximum of 5 repeats, and the line represents the mean. All models eventually obtain a $p_f$ which is correct within the Monte Carlo error calculated using the CoV (approximately 0.0027). The ground truth performance function for the toy function this experiment is plotted in FIG. 14. In Table 3 we show the number of samples required for each algorithm to terminate and the $p_f$, average precision and $F_1$ score when the algorithm terminates.

Table 3: Comparison of $p_f$, coefficient of variation (CoV), $F_1$ score ($F_1$), Average Precision (AP) and number of evaluations (N. Eval.) for all methodologies. The total function evaluations includes the initial design of experiments (12 evaluations) and the number of iterations of the active learning algorithm. Number of iterations was capped at 150 and methods hitting the cap are marked with did not terminate (DNT). Mean and standard deviation for 5 repeats are shown.

| Methodology | $p_f$ Avg. (Std. Dev.) | CoV | $F_1$ | AP | N. Eval. |
|---|---|---|---|---|---|
| | Toy function | | | | |
| Analytic | 0.036906 | N/A | N/A | N/A | N/A |
| Hierarchical GP (ours) | 0.036 (0.0051) | 0.074 (0.0061) | 1 (0.0011) | 1 (6.1e-07) | 56 (3.4) |
| Masked GP $\alpha$ = 1.0 | 0.019 (0.0031) | 0.096 (0.013) | 0.66 (0.00013) | 0.56 (0.041) | 20 (3.2) |
| GPC | 0.037 (0.0026) | 0.073 (0.0027) | 0.99 (0.003) | 1 (0.00027) | DNT |
| | Autonomous Driving | | | | |
| Analytic | 0.0382 | N/A | N/A | N/A | N/A |
| Hierarchical GP (ours) | 0.038 (0.0019) | 0.071 (0.0019) | 1 (0.0013) | 1 (1.7e-05) | 81 (21) |
| Masked GP $\alpha$ = 1.0 | 0.037 (0.0041) | 0.073 (0.0044) | 0.92 (0.063) | 0.89 (0.097) | DNT |
| GPC | 0.035 (0.0029) | 0.074 (0.003) | 0.98 (0.0049) | 1 (0.0023) | DNT |

**E.3 Comparing values of $\alpha$ for the regression GP**

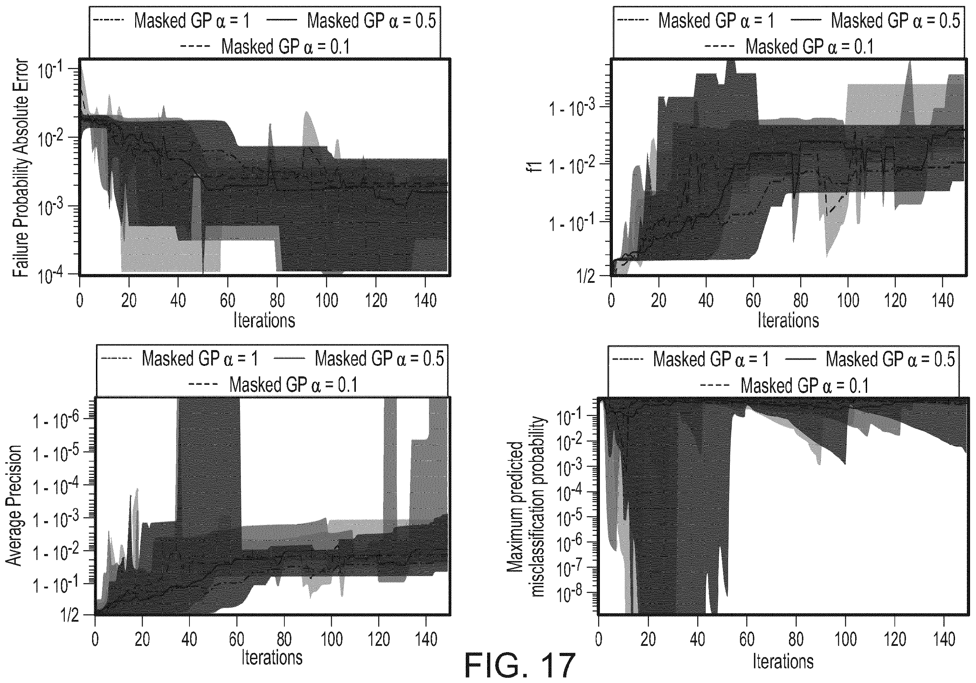

In FIGS. 17-18 we repeat the analysis set out in the above Experiments section to show the convergence of failure probability ($p_f$), average precision, maximum predicted misclassification probability and $F_1$ score for fitted masked Gaussian processes with different $\alpha$. In comparison to Hierarchical GP, all masked GPs are similar. All models show slower convergence than Hierarchical GP. Table 4 shows the termination results for different values of $\alpha$.

Table 4: Comparison of $p_f$, coefficient of variation (CoV), $F_1$ score ($F_1$), Average Precision (AP) and number of evaluations (N. Eval.) for fitted masked Gaussian processes with different $\alpha$. The total function evaluations include the initial design of experiments (12 evaluations) and the number of iterations of the active learning algorithm. Number of iterations was capped at 150 and methods hitting the cap are marked with did not terminate (DNT). Mean and standard deviation for 5 repeats are shown.

| Methodology | $p_f$ Avg. (Std. Dev.) | CoV | $F_1$ | AP | N. Eval. |
|---|---|---|---|---|---|
| | Toy function | | | | |
| Masked GP $\alpha$ = 0.1 | 0.025 (0.0089) | 0.08 (0.0098) | 0.79 (0.19) | 0.71 (0.26) | 75 (78) |
| Masked GP $\alpha$ = 0.5 | 0.018 (0.0012) | 0.086 (0.018) | 0.66 (6.7e-05) | 0.56 (0.055) | 19 (4.9) |
| Masked GP $\alpha$ = 1.0 | 0.019 (0.0031) | 0.096 (0.013) | 0.66 (0.00013) | 0.56 (0.041) | 20 (3.2) |
| | Autonomous Driving | | | | |
| Masked GP $\alpha$ = 0.1 | 0.038 (0.0014) | 0.071 (0.0014) | 0.95 (0.047) | 0.93 (0.078) | DNT |
| Masked GP $\alpha$ = 0.5 | 0.038 (0.0019) | 0.072 (0.0019) | 0.97 (0.0093) | 0.97 (0.017) | DNT |
| Masked GP $\alpha$ = 1.0 | 0.037 (0.0041) | 0.073 (0.0044) | 0.92 (0.063) | 0.89 (0.097) | DNT |

**Claims**

1. A computer-implemented method of testing, in simulation, performance of a robotic system in control of an ego agent of a test scenario, the method comprising:

    determining (912) a first set of points in a parameter space of the test scenario, each point being a set of one or more parameter values for the test scenario;
    based the first set of points, generating in a simulation environment multiple first instances of the test scenario with the robotic system in control of the ego agent;
    assigning (914) to each point of the first set at least one performance score based on at least one predetermined performance evaluation rule, thereby generating a training set (906) of points and their assigned performance scores, wherein each performance score is numerical or non-numerical, wherein a numerical performance score quantifies the performance of the robotic system with respect to the predetermined performance evaluation rule, and a non-numerical performance score denotes inapplicability of the predetermined performance evaluation rule;

using the training set (906) to train a score classification model (904) for computing a probability, $p(\overline{N}|x)$, that the given point $x$ would be assigned a performance score that is numerical;

using a subset of the training set (906) to train a score regression model (902) for determining a probability distribution, $p(y|x, y \neq \text{nan})$, over possible performance scores $y$ for a given point $x$ given that the performance score $y$ is numerical, the subset of the training set including only points that have been assigned numerical performance scores;

selecting one or more second points in the parameter space based on a misclassification probability acquisition function defined as:

$$\min(p(F|x, \overline{N})p(\overline{N}|x), 1 - p(F|x, \overline{N})p(\overline{N}|x))$$

wherein $p(F|x, \overline{N})$ is a probability, computed from $p(y|x, y \neq \text{nan})$, that a given point $x$ would be assigned a performance score that satisfies a failure condition given that the performance score is numerical;

based on the one or more second points in the parameter space, generating in a simulation environment one or more second instances of the test scenario with the robotic system in control of the ego agent; and

providing one or more outputs for evaluating performance of the robotic system in the one or more second instances based on the at least one predetermined performance evaluation rule.

2. The method of claim 1, wherein the one or more outputs are rendered in a graphical user interface.

3. The method of claim 1 or 2, wherein the one or more outputs comprise one or more performance scores assigned to each second point for the at least one performance evaluation rule.

4. The method of claim 3, comprising updating the score classicisation model (904) based on the one or more second points and the one or more performance scores assigned thereto, wherein the score regression model (902) is updated based on any numerical performance scores of the one or more performance scores.

5. The method of claim 4, comprising:

selecting one or more third points in the parameter space based on an updated misclassification probability acquisition function defined by the updated score classification model (904) and score regression model (902);

based the one or more third points in the parameter space, generating in a simulation environment one or more third instances of the test scenario with the robotic system in control of the ego agent; and

providing one or more second outputs for evaluating performance of the robotic system in the one or more third instances based on the at least one predetermined performance evaluation rule.

6. The method of claim 5, wherein the one or more second outputs comprise one or more performance scores assigned to the one or more third points, and the method is repeated iteratively until the score classification (904) and score regression models (902) satisfy a termination condition, or a predetermined number of iterations is reached.

7. The method of any preceding claim, wherein the score classification (904) and score regression models (902) are Gaussian.

8. The method of any preceding claim, wherein the score regression model (902) is Gaussian with mean $g_\mu(x)$ and standard deviation $g_\sigma(x)$ at a given point $x$ in the parameter space, wherein

$$p(F|x, \bar{N}) = \Phi\left(\frac{-g_\mu(x)}{g_\sigma(x)}\right),$$

wherein $\Phi$ is the standard normal distribution.

9. The method of any preceding claim, wherein the robotic system comprises a trajectory planner (106) for a mobile robot.

10. The method of any preceding claim, comprising using the score classification model (904) and the score regression model (902) to identify and mitigate an issue with the robotic system.

11. A computer-implemented method of testing, in simulation, performance of a robotic system in control of an ego agent of a test scenario, the method comprising:

determining (912) a first set of points in a parameter space of the test scenario, each point being a set of one or more parameter values for the test scenario;
based the first set of points, generating in a simulation environment multiple first instances of the test scenario with the robotic system in control of the ego agent;
assigning (914) to each point of the first set at least one performance score based on at least one predetermined performance evaluation rule, thereby generating a training set (906) of points and their assigned performance scores, wherein each performance score is numerical nor non-numerical, wherein a numerical performance score quantifies the performance of the robotic system with respect to the predetermined performance evaluation rule, and a non-numerical performance score denotes inapplicability of the predetermined performance evaluation rule;
using the training set (906) to train a score classification model (904) for computing a probability that the given point would be assigned a performance score that is numerical;
using a subset of the training set to train a score regression model (902) for determining a probability distribution over possible performance scores for a given point given that the performance score is numerical, the subset of the training set including only points that have been assigned numerical performance scores;
selecting one or more second points in the parameter space based on misclassification probability acquisition function denoting a probability of misclassification, wherein for a point such that (i) the score classification model (904) predicts a numerical performance score and (ii) the score regression model (902) predicts a performance score that satisfied a failure condition, a misclassification occurs for any other outcome, and for any other predicted outcome, a misclassification only occurs for an outcome with a performance score that is (i) numerical and (ii) satisfies the failure condition;
based on the one or more second points in the parameter space, generating in a simulation environment one or more second instances of the test scenario with the robotic system in control of the ego agent; and
providing one or more outputs for evaluating performance of the robotic system in the one or more second instances based on the at least one predetermined performance evaluation rule.

12. A computer system configured to implement the method of any preceding claims.

13. Computer program code configured to program the computer system of claim 12 to implement the method of any of claims 1 to 11.

**Patentansprüche**

1. Computergestütztes Verfahren zum Testen der Leistung eines Robotersystems bei der Steuerung eines Ego-Agenten eines Testszenarios in einer Simulation, das Verfahren umfassend:

Bestimmen (912) eines ersten Satzes von Punkten in einem Parameterraum des Testszenarios, wobei jeder Punkt ein Satz von einem oder mehreren Parameterwerten für das Testszenario ist;
basierend auf dem ersten Satz von Punkten, Erzeugen in einer Simulationsumgebung mehrerer erster Instanzen des Testszenarios, wobei das Robotersystem die Steuerung des Ego-Agenten übernimmt;
Zuweisen (914) mindestens einer Leistungsbewertung zu jedem Punkt des ersten Satzes basierend auf mindestens einer vorbestimmten Leistungsbewertungsregel, wodurch ein Trainingssatz (906) von Punkten und ihren zugewiesenen Leistungsbewertungen erzeugt wird, wobei jede Leistungsbewertung numerisch oder nicht numerisch ist, wobei eine numerische Leistungsbewertung die Leistung des Robotersystems in Bezug auf die vorbestimmte Leistungsbewertungsregel quantifiziert und eine nicht numerische Leistungsbewertung die Nichtanwendbarkeit der vorbestimmten Leistungsbewertungsregel angibt;
Verwenden des Trainingssatzes (906) zum Trainieren eines Bewertungsklassifizierungsmodells (904) zum Berechnen einer Wahrscheinlichkeit, $p(\overline{N}|x)$, dass dem gegebenen Punkt x eine numerische Leistungsbewertung zugewiesen wird;

Verwenden einer Teilmenge des Trainingssatzes (906) zum Trainieren eines Bewertungsregressionsmodells (902) zum Bestimmen einer Wahrscheinlichkeitsverteilung, $p(y|x,\ y \neq nan)$, über mögliche Leistungsbewertungen y für einen gegebenen Punkt x, vorausgesetzt, dass die Leistungsbewertung y numerisch ist, wobei die Teilmenge des Trainingssatzes nur Punkte einschließt, denen numerische Leistungsbewertungen zugewiesen wurden;

Auswahl eines oder mehrerer zweiter Punkte im Parameterraum basierend auf einer Erfassungsfunktion für die Fehlklassifizierungswahrscheinlichkeit, definiert als:

$$\min\big(p(F|x,\bar{\text{N}})p(\bar{\text{N}}|x),1-p(F|x,\bar{\text{N}})p(\bar{\text{N}}|x)\big)$$

wobei $p(F|x,\overline{\text{N}})$ eine Wahrscheinlichkeit ist, die aus $p(y|x, y \neq nan)$ berechnet wird, dass einem bestimmten Punkt x eine Leistungsbewertung zugewiesen wird, die eine Fehlerbedingung erfüllt, vorausgesetzt, dass die Leistungsbewertung numerisch ist;

basierend auf dem einen oder den mehreren zweiten Punkten im Parameterraum, Erzeugen einer oder mehrerer zweiter Instanzen des Testszenarios in einer Simulationsumgebung, wobei das Robotersystem die Steuerung des Ego-Agenten übernimmt; und

Bereitstellen einer oder mehrerer Ausgaben zum Bewerten der Leistung des Robotersystems in der einen oder den mehreren zweiten Instanzen basierend auf der mindestens einen vorbestimmten Leistungsbewertungsregel.

2. Verfahren nach Anspruch 1, wobei die eine oder mehreren Ausgaben in einer grafischen Benutzeroberfläche dargestellt werden.

3. Verfahren nach Anspruch 1 oder 2, wobei die eine oder mehreren Ausgaben eine oder mehrere Leistungsbewertungen umfassen, die jedem zweiten Punkt für die mindestens eine Leistungsbewertungsregel zugewiesen sind.

4. Verfahren nach Anspruch 3, umfassend das Aktualisieren des Bewertungsklassifizierungsmodells (904) basierend auf dem einen oder der mehreren zweiten Punkte und der einen oder der mehreren ihnen zugewiesenen Leistungsbewertungen, wobei das Bewertungsregressionsmodell (902) basierend auf beliebigen numerischen Leistungsbewertungen der einen oder der mehreren Leistungsbewertungen aktualisiert wird.

5. Verfahren nach Anspruch 4, umfassend:

Auswählen eines oder mehrerer dritter Punkte im Parameterraum basierend auf einer aktualisierten Erfassungsfunktion für die Fehlklassifizierungswahrscheinlichkeit, die durch das aktualisierte Bewertungsklassifizierungsmodell (904) und das Bewertungsregressionsmodell (902) definiert ist;

basierend auf dem einen oder den mehreren dritten Punkten im Parameterraum, Erzeugen einer oder mehrerer dritter Instanzen des Testszenarios in einer Simulationsumgebung, wobei das Robotersystem die Steuerung des Ego-Agenten übernimmt; und

Bereitstellen einer oder mehrerer zweiter Ausgaben zum Bewerten der Leistung des Robotersystems in der einen oder den mehreren dritten Instanzen basierend auf der mindestens einen vorbestimmten Leistungsbewertungsregel.

6. Verfahren nach Anspruch 5, wobei die eine oder mehreren zweiten Ausgaben eine oder mehrere Leistungsbewertungen umfassen, die dem einen oder den mehreren dritten Punkten zugewiesen sind, und das Verfahren iterativ wiederholt wird, bis die Bewertungsklassifizierung (904) und die Bewertungsregressionsmodelle (902) eine Abbruchbedingung erfüllen oder eine vorbestimmte Anzahl von Iterationen erreicht ist.

7. Verfahren nach einem der vorstehenden Ansprüche, wobei die Bewertungsklassifizierung (904) und die Bewertungsregressionsmodelle (902) gaußförmig sind.

8. Verfahren nach einem der vorstehenden Ansprüche, wobei das Bewertungsregressionsmodell (902) gaußförmig mit dem Mittelwert $g_{\mu}(x)$ und der Standardabweichung $g_{\mu}(x)$ an einem gegebenen Punkt x im Parameterraum ist, wobei

$$p(F|x, \bar{\text{N}}) = \Phi\left(\frac{-g_\mu(x)}{g_\sigma(x)}\right),$$

wobei $\Phi$ die Standardnormalverteilung ist.

**9.** Verfahren nach einem der vorstehenden Ansprüche, wobei das Robotersystem einen Trajektorienplaner (106) für einen mobilen Roboter umfasst.

**10.** Verfahren nach einem der vorstehenden Ansprüche, umfassend die Verwendung des Bewertungsklassifizierungsmodells (904) und des Bewertungsregressionsmodells (902), um ein Problem mit dem Robotersystem zu identifizieren und zu beheben.

**11.** Computergestütztes Verfahren zum Testen der Leistung eines Robotersystems bei der Steuerung eines Ego-Agenten eines Testszenarios in einer Simulation, das Verfahren umfassend:

Bestimmen (912) eines ersten Satzes von Punkten in einem Parameterraum des Testszenarios, wobei jeder Punkt ein Satz von einem oder mehreren Parameterwerten für das Testszenario ist;
basierend auf dem ersten Satz von Punkten, Erzeugen in einer Simulationsumgebung mehrerer erster Instanzen des Testszenarios, wobei das Robotersystem die Steuerung des Ego-Agenten übernimmt;
Zuweisen (914) mindestens einer Leistungsbewertung zu jedem Punkt des ersten Satzes basierend auf mindestens einer vorbestimmten Leistungsbewertungsregel, wodurch ein Trainingssatz (906) von Punkten und ihren zugewiesenen Leistungsbewertungen erzeugt wird, wobei jede Leistungsbewertung numerisch oder nicht numerisch ist, wobei eine numerische Leistungsbewertung die Leistung des Robotersystems in Bezug auf die vorbestimmte Leistungsbewertungsregel quantifiziert und eine nicht numerische Leistungsbewertung die Nichtanwendbarkeit der vorbestimmten Leistungsbewertungsregel angibt;
Verwenden des Trainingssatzes (906) zum Trainieren eines Bewertungsklassifizierungsmodells (904) zum Berechnen einer Wahrscheinlichkeit, dass dem gegebenen Punkt eine numerische Leistungsbewertung zugewiesen wird;
Verwenden einer Teilmenge des Trainingssatzes zum Trainieren eines Bewertungsregressionsmodells (902) zum Bestimmen einer Wahrscheinlichkeitsverteilung, über mögliche Leistungsbewertungen für einen gegebenen Punkt, vorausgesetzt, dass die Leistungsbewertung numerisch ist, wobei die Teilmenge des Trainingssatzes nur Punkte einschließt, denen numerische Leistungsbewertungen zugewiesen wurden;
Auswählen eines oder mehrerer zweiter Punkte im Parameterraum basierend auf einer Erfassungsfunktion für die Fehlklassifizierungswahrscheinlichkeit, die eine Wahrscheinlichkeit einer Fehlklassifizierung angibt, wobei für einen Punkt, für den (i) das Bewertungsklassifizierungsmodell (904) eine numerische Leistungsbewertung vorhersagt und (ii) das Bewertungsregressionsmodell (902) eine Leistungsbewertung vorhersagt, die eine Fehlerbedingung erfüllt, eine Fehlklassifizierung für jedes andere Ergebnis auftritt und für jedes andere vorhergesagte Ergebnis eine Fehlklassifizierung nur für ein Ergebnis auftritt, dessen Leistungsbewertung (i) numerisch ist und (ii) die Fehlerbedingung erfüllt;
basierend auf dem einen oder den mehreren zweiten Punkten im Parameterraum, Erzeugen einer oder mehrerer zweiter Instanzen des Testszenarios in einer Simulationsumgebung, wobei das Robotersystem die Steuerung des Ego-Agenten übernimmt; und
Bereitstellen einer oder mehrerer Ausgaben zum Bewerten der Leistung des Robotersystems in der einen oder den mehreren zweiten Instanzen basierend auf der mindestens einen vorbestimmten Leistungsbewertungsregel.

**12.** Ein Computersystem, das konfiguriert ist, um das Verfahren eines der vorstehenden Ansprüche zu implementieren.

**13.** Computerprogrammcode, der konfiguriert ist, um das Rechensystem nach Anspruch 12 zu programmieren, um das Verfahren nach einem der Ansprüche 1 bis 11 zu implementieren.

**Revendications**

**1.** Procédé mis en œuvre par ordinateur pour tester, par simulation, les performances d'un système robotique commandant un agent ego dans un scénario de test, le procédé comprenant :

la détermination (912) d'un premier ensemble de points dans un espace de paramètres du scénario de test, chaque point étant un ensemble d'une ou de plusieurs valeurs de paramètres pour le scénario de test ;

sur la base du premier ensemble de points, la génération dans un environnement de simulation de plusieurs premières instances du scénario de test avec le système robotique commandant l'agent ego ;

l'attribution (914) à chaque point du premier ensemble d'au moins un score de performance sur la base au moins d'une règle d'évaluation de performance prédéterminée, générant ainsi un ensemble d'entraînement (906) de points et leurs scores de performance attribués, dans lequel chaque score de performance est numérique ou non numérique, dans lequel un score de performance numérique quantifie la performance du système robotique par rapport à la règle d'évaluation de performance prédéterminée, et un score de performance non numérique indique l'inapplicabilité de la règle d'évaluation de performance prédéterminée ;

l'utilisation de l'ensemble d'entraînement (906) pour entraîner un modèle de classification des scores (904) pour calculer une probabilité, $p(\overline{N}|x)$, que le point donné x se voie attribuer un score de performance numérique ;

l'utilisation d'un sous-ensemble de l'ensemble d'entraînement (906) pour entraîner un modèle de régression des scores (902) afin de déterminer une distribution de probabilité, $p(y|x, y \neq nan)$, sur les scores de performance possibles, y, pour un point donné x étant donné que le score de performance, y, est numérique, le sous-ensemble de l'ensemble d'entraînement comportant uniquement les points auxquels des scores de performance numériques ont été attribués ;

la sélection d'un ou de plusieurs deuxièmes points dans l'espace des paramètres sur la base d'une fonction d'acquisition de probabilité de mauvaise classification définie comme :

$$\min\bigl(p(F|x,\bar{N})p(\bar{N}|x), 1 - p(F|x,\bar{N})p(\bar{N}|x)\bigr).$$

dans lequel $p(F|x, \overline{N})$ est une probabilité, calculée à partir de $p(y|x, y \neq nan)$, qu'un point donné x se voie attribuer un score de performance qui satisfait une condition d'échec étant donné que le score de performance est numérique ;

sur la base des un ou plusieurs deuxièmes points dans l'espace des paramètres, la génération dans un environnement de simulation d'une ou de plusieurs deuxièmes instances du scénario de test avec le système robotique commandant l'agent ego ; et

la fourniture d'une ou de plusieurs sorties pour évaluer les performances du système robotique dans les une ou plusieurs deuxièmes instances sur la base de l'au moins une règle d'évaluation des performances prédéterminée.

2. Procédé selon la revendication 1, dans lequel les une ou plusieurs sorties sont rendues dans une interface utilisateur graphique.

3. Procédé selon la revendication 1 ou 2, dans lequel les une ou plusieurs sorties comprennent un ou plusieurs scores de performance attribués à chaque deuxième point pour l'au moins une règle d'évaluation des performances.

4. Procédé selon la revendication 3, comprenant la mise à jour du modèle de classification des scores (904) sur la base des un ou plusieurs deuxièmes points et des un ou plusieurs scores de performance qui y sont attribués, dans lequel le modèle de régression des scores (902) est mis à jour sur la base d'un quelconque score de performance numérique des un ou plusieurs scores de performance.

5. Procédé selon la revendication 4, comprenant :

la sélection d'un ou de plusieurs troisièmes points dans l'espace des paramètres sur la base d'une fonction d'acquisition de probabilité de mauvaise classification mise à jour définie par le modèle de classification des scores (904) mis à jour et le modèle de régression des scores (902) ;

sur la base des un ou plusieurs troisièmes points dans l'espace des paramètres, la génération dans un environnement de simulation d'une ou de plusieurs troisièmes instances du scénario de test avec le système robotique commandant l'agent ego ; et

la fourniture d'une ou de plusieurs secondes sorties pour évaluer les performances du système robotique dans les une ou plusieurs troisièmes instances sur la base de l'au moins une règle d'évaluation des performances prédéterminée.

6. Procédé selon la revendication 5, dans lequel les une ou plusieurs secondes sorties comprennent un ou plusieurs scores de performance attribués aux un ou plusieurs troisièmes points, et le procédé est répété de manière itérative jusqu'à ce que les modèles de classification des scores (904) et de régression des scores (902) satisfassent à une condition d'arrêt, ou qu'un nombre prédéterminé d'itérations soit atteint.

7. Procédé selon une quelconque revendication précédente, dans lequel les modèles de classification des scores (904) et de régression des scores (902) sont gaussiens.

8. Procédé selon une quelconque revendication précédente, dans lequel le modèle de régression des scores (902) est gaussien avec une moyenne $g_{\mu}(x)$ et un écart type $g_{\mu}(x)$ en un point donné $x$ dans l'espace des paramètres, dans lequel

$$p(F|x, \bar{\mathrm{N}}) = \Phi\left(\frac{-g_{\mu}(x)}{g_{\sigma}(x)}\right),$$

dans lequel $\Phi$ représente la distribution normale standard.

9. Procédé selon une quelconque revendication précédente, dans lequel le système robotique comprend un planificateur de trajectoire (106) pour un robot mobile.

10. Procédé selon une quelconque revendication précédente, comprenant l'utilisation du modèle de classification des scores (904) et du modèle de régression des scores (902) pour identifier et atténuer un problème avec le système robotique.

11. Procédé mis en œuvre par ordinateur pour tester, par simulation, les performances d'un système robotique commandant un agent ego dans un scénario de test, le procédé comprenant :

la détermination (912) d'un premier ensemble de points dans un espace des paramètres du scénario de test, chaque point étant un ensemble d'une ou de plusieurs valeurs de paramètres pour le scénario de test ;
sur la base du premier ensemble de points, la génération dans un environnement de simulation de plusieurs premières instances du scénario de test avec le système robotique commandant l'agent ego ;
l'attribution (914) à chaque point du premier ensemble d'au moins un score de performance sur la base au moins d'une règle d'évaluation de performance prédéterminée, générant ainsi un ensemble d'entraînement (906) de points et leurs scores de performance attribués, dans lequel chaque score de performance est numérique ou non numérique, dans lequel un score de performance numérique quantifie la performance du système robotique par rapport à la règle d'évaluation de performance prédéterminée, et un score de performance non numérique indique l'inapplicabilité de la règle d'évaluation de performance prédéterminée ;
l'utilisation de l'ensemble d'entraînement (906) pour entraîner un modèle de classification des scores (904) pour calculer une probabilité que le point donné se voie attribuer un score de performance numérique ;
l'utilisation d'un sous-ensemble de l'ensemble d'entraînement pour entraîner un modèle de régression des scores (902) pour déterminer une distribution de probabilité sur les scores de performance possibles pour un point donné étant donné que le score de performance est numérique, le sous-ensemble de l'ensemble d'entraînement ne comportant que les points auxquels des scores de performance numériques ont été attribués ;
la sélection d'un ou de plusieurs deuxièmes points dans l'espace des paramètres sur la base de la fonction d'acquisition de la probabilité de mauvaise classification désignant une probabilité de mauvaise classification, dans lequel pour un point tel que (i) le modèle de classification des scores (904) prédit un score de performance numérique et (ii) le modèle de régression des scores (902) prédit un score de performance qui satisfait une condition d'échec, une mauvaise classification se produit pour un quelconque autre résultat, et pour un quelconque autre résultat prédit, une mauvaise classification ne se produit que pour un résultat avec un score de performance qui est (i) numérique et (ii) satisfait la condition d'échec ;
sur la base des un ou plusieurs deuxièmes points dans l'espace des paramètres, la génération dans un environnement de simulation d'une ou de plusieurs deuxièmes instances du scénario de test avec le système robotique commandant l'agent ego ; et
la fourniture d'une ou de plusieurs sorties pour évaluer les performances du système robotique dans les une ou plusieurs deuxièmes instances sur la base de l'au moins une règle d'évaluation des performances prédéterminée.

12. Système informatique configuré pour mettre en œuvre le procédé selon l'une quelconque des revendications précédentes.

13. Code de programme informatique configuré pour programmer le système informatique selon la revendication 12 afin de mettre en œuvre le procédé selon l'une quelconque des revendications 1 à 11.

FIG. 1A

Autonomous Vehicle

Sensors 110

Actor system 112

Improved stack 120

101

100

S125

ADS/ADAS stack 100

Identify and mitigate issues

S124

Test in simulation

Simulator 202

Select relevant senarios

S126

Expert 122

Real-world testing

S128

Test Oracle 252

Evaluate performace

S130

Select relevant senarios

FIG. 1B

EP 4 505 305 B1

FIG. 1C

EP 4 505 305 B1

FIG. 2

FIG. 2A

EP 4 505 305 B1

SAFE iff $D_{lat}$ OR $D_{lon}$ is positive

$D_{lat} > 0 \Rightarrow$ SAFE

(1)

$D_{lon} > 0 \Rightarrow$ SAFE

(2)

$(D_{lat} \leq 0)$ AND $(D_{lon} \leq 0) \Rightarrow$ UNSAFE

(3)

FIG. 3A

EP 4 505 305 B1

FIG. 3B

EP 4 505 305 B1

FIG. 4A

EP 4 505 305 B1

412 — Select initial points in scenario space

414 — Run simulations and score to generate initial training set

Training set

| $x_3$ | 0.04 |
|-------|------|
| $x_4$ | 0.2 |
| $x_5$ | -0.7 |
| $x_6$ | -0.02 |

402

424 — Add result(s) to training set

Update score predictor — 416

404 — $x$ → Score predictor → 407 — $p(y|x)$

417 — Terminate ?

418 — Determine acquisition function

420 — Select next parameter set(s) x

422 — Run simulation(s) and score

Y

N

PASS/FAIL boundaries in scenario parameter space mapped based on final score predictor

FIG. 4B

<u>Probability of simulator output y</u>
<u>given scenario parameters x</u>

FIG. 4C

FIG. 4D

idx = 1

Acquisition fn

-f(x)

X    Next sample here,
     information gained,
     peak reduced

idx = 2

Acquisition fn

X

# FIG. 4E

FIG. 5A

EP 4 505 305 B1

**506**

Ego waits at junction for duration of scenario

Params $x_2$

E.g. small reduction in other vehicle's speed and slight widening of gap in traffic

Params $x_2 + \delta x_2$

Ego joins major road at $t = T_2$

**508**

Safe distance robustness score artificially set to one when ego is waiting at junction

$+1$    $s^{(x2)}(t)$    $t$

min    $g(x_2) = 1$

ARTIFICAL PASS

Discontinuous change in $g(x)$

$\delta x_2$

$+1$    $s^{(x2+\delta x2)}(t)$    $t$    $-0.7$    $T_2$

min    $g(x_2 + \delta x_2) = -0.7$

FAIL

$\delta x_2$

Ego joins major road unsafely

## FIG. 5B

EP 4 505 305 B1

**510**

Ego joins major road at $T_3$

Params $x_3$

E.g. small increase in other vehicle's speed and slight reduction in gap in traffic

Params $x_3 + \delta x_3$

Ego joins major road at $t = T'_3$

**512**

Ego joins major road very aggressively; 'just' safe

$+1$
$+0.04$
$S^{(x3)}(t)$
$t$
$T_3$

min

$g(x_3) = 0.04$

PASS

Continuous change in g(x) accross PASS/FAIL boundary

$\delta x_3$

$+1$
$-0.02$
$S^{(x3+\delta x3)}(t)$
$t$
$T'_3$

min

$g(x_3 + \delta x_3) = -0.02$

FAIL

$\delta x_3$

Ego joins major road very aggressively; 'just' unsafe

FIG. 5C

EP 4 505 305 B1

Discontinuity in scoring
function g(x)

602

See FIG. 5A

y=0.2

606

EGO NEVER
JOINS MAJOR
ROAD

y=1 • $\delta x_1$

$x_1$

EGO JOINS
MAJOR ROAD
AND PASSES

608B

Discontinuity in scoring
function g(x)

604

Scoring function g(x)
continuous over true
PASS/FAIL boundary

608A   608

See FIG. 5B

EGO JOINS
MAJOR ROAD
AND FAILS

y=0.04

$x_3$

y= -0.02 •

See FIG. 5C

$\delta x_3$

$x_2$

y=1 • $\delta x_2$

y= -0.7

FIG. 6

FIG. 7

FIG. 8

FIG. 9A

FIG. 9B

FIG. 10

FIG. 11

Classification

1112

Failure Probability

X

hGP (Regression)

1110

g(x)

X

Failure Probability

Adversary velocity (constant)

Adversary start x

Rule robustness

Adversary velocity (constant)

Adversary start x

FIG. 11 (Cont.)

FIG. 12

EP 4 505 305 B1

FIG. 13

FIG. 14

EP 4 505 305 B1

FIG. 15

FIG. 16

FIG. 17

EP 4 505 305 B1

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021245201 A
- US 2019179738 A
- WO 2021037763 A
- WO 2021037760 A
- WO 2021037765 A
- WO 2021037761 A
- WO 2021037766 A

**Non-patent literature cited in the description**

- **GANGOPADHYAY BRITI et al.** *Identification of Test Cases for Automated Driving Systems Using Bayesian Optimization*
- Testing of autonomous vehicles using surrogate models and stochastic optimization. **HALIL BEGLEROVIC** ; **MICHAEL STOLZ** ; **MARTIN HORN**. In 2017 IEEE 20th International Conference on Intelligent Transportation Systems (ITSC). IEEE, 2017, 1-6
- **HANS-GEORG BEYER** ; **BERNHARD SENDHOFF**. *Robust optimization-a comprehensive survey. Computer methods in applied mechanics and engineering*, 2007, vol. 196 (33-34), 3190-3218
- **CHAO DANG** ; **PENGFEI WEI** ; **MATTHIAS GR FAES** ; **MARCOS A VALDEBENITO** ; **MICHAEL BEER**. Parallel adaptive Bayesian quadrature for rare event estimation. *Reliability Engineering & System Safety*, 2022, vol. 225, ISSN 0951-8320, 108621, https://doi.org/10.1016/j.ress.2022.108621
- **B. ECHARD** ; **N. GAYTON** ; **M. LEMAIRE.** AK-MCS: An active learning reliability method combining kriging and monte carlo simulation. *Structural Safety*, 2011, vol. 33 (2), ISSN 01674730, 145-154
- *GPy. GPy: A gaussian process framework in python*, 2012, http://github.com/SheffieldML/GPy
- **YU INATSU** ; **SHOGO IWAZAKI** ; **ICHIRO TAKEUCHI**. Active learning for distributionally robust level-set estimation. *In International Conference on Machine Learning*, 2021, 4574-4584
- **SHOGO IWAZAKI** ; **YU INATSU** ; **ICHIRO TAKEUCHI**. Bayesian quadrature optimization for probability threshold robustness measure.. *Neural Computation*, 2021, vol. 33 (12), 3413-3466
- Active learning with gaussian processes for object categorization. **ASHISH KAPOOR** ; **KRISTEN GRAUMAN** ; **RAQUEL URTASUN** ; **TREVOR DARRELL**. In 2007 IEEE 11th international conference on computer vision. IEEE, 2007, 1-8

- **PHILIP KOOPMAN** ; **MICHAEL WAGNER**. Challenges in autonomous vehicle testing and validation.. *SAE International Journal of Transportation Safety*, 2016, vol. 4 (1), 15-24
- **PHILIP KOOPMAN** ; **MICHAEL WAGNER**. Toward a framework for highly automated vehicle safety validation. *SAE Technical Paper, Tech. Rep*, 2018
- **MARK KOREN** ; **SAUD ALSAIF** ; **RITCHIE LEE** ; **MYKEL J. KOCHENDERFER**. *Adaptive stress testing for autonomous vehicles*, 2019
- **S. M. MAHMUD** ; **LUIS FERREIRA** ; **MD HOQUE** ; **AHMAD HOJATI**. Application of proximal surrogate indicators for safety evaluation: A review of recent developments and research needs.. *IATSS Research*, 2017, vol. 41 (03)
- **ROBERT E MELCHERS** ; **ANDRÉ T BECK**. Structural reliability analysis and prediction.. John wiley & sons, 2018
- **M MOUSTAPHA** ; **S MARELLI** ; **B SUDRET**. A generalized framework for active learning reliability: survey and benchmark. *arXiv preprint arXiv:2106.01713*, 2021
- **MALIKI MOUSTAPHA** ; **BRUNO SUDRET**. A two-stage surrogate modelling approach for the approximation of models with non-smooth outputs. *In UNCECOMP 2019 Proceedings of the 3rd International Conference on Uncertainty Quatification in Computational Sciences and Engineering*, 2019, 357-366
- **DEMIN NALIC** ; **TOMISLAV MIHALJ** ; **MAXIMILIAN BAEUMLER** ; **MATTHIAS LEHMANN** ; **ARNO EICHBERGER** ; **STEFAN BERNSTEINER**. Scenario based testing of automated driving systems: A literature survey. *In FISITA web Congress*, 2020, vol. 10

- **ANDREI PALEYES** ; **MARK PULLIN** ; **MAREN MAHSERECI** ; **CLIFF MCCOLLUM** ; **NEIL LAWRENCE** ; **JAVIER GONZÁLEZ.** Emulation of physical processes with emukit. *In Second Workshop on Machine Learning and the Physical Sciences, NeurIPS*, 2019
- Gaussian Processes for Machine Learning. **C.E. RASMUSSEN** ; **C.K.I. WILLIAMS**. Adaptive Computation and Machine Learning series. MIT Press, 2005
- **RUI TEIXEIRA** ; **MARIA NOGAL** ; **ALAN O'CONNOR**. Adaptive approaches in metamodelbased reliability analysis: A review. *Structural Safety*, 2021, vol. 89, 102019
- **JONATHAN UESATO** ; **ANANYA KUMAR** ; **CSABA SZEPESVARI** ; **TOM EREZ** ; **AVRAHAM RUDERMAN** ; **KEITH ANDERSON** ; **KRISHMAMURTHY** ; **DVIJOTHAM** ; **NICOLAS HEESS** ; **PUSHMEET KOHLI**. *Rigorous agent evaluation: An adversarial approach to uncover catastrophic failures*, 2018
- **JINGKANG WANG** ; **AVA PUN** ; **JAMES TU** ; **SIVABALAN MANIVASAGAM** ; **ABBAS SADAT** ; **SERGIO CASAS** ; **MENGYE REN** ; **RAQUEL URTASUN**. AdvSim: Generating safety-critical scenarios for self-driving vehicles. *CoRR, abs/2101.06549*, 2021
- **WANYING YUN** ; **ZHENZHOU LU** ; **YICHENG ZHOU** ; **XIAN JIANG**. AK-SYSi: an improved adaptive kriging model for system reliability analysis with multiple failure modes by a refined u learning function. *Structural and Multidisciplinary Optimization*, 2019, vol. 59 (1), 263-278